(19) **Europäisches Patentamt / European Patent Office / Office européen des brevets**

(11) **EP 3 620 542 B1**

(12) **EUROPEAN PATENT SPECIFICATION**

(45) Date of publication and mention
of the grant of the patent:
**05.01.2022 Bulletin 2022/01**

(51) Int Cl.:
**C21C 5/46** *(2006.01)*        **C21C 5/30** *(2006.01)*
**F27D 21/02** *(2006.01)*       **F27D 19/00** *(2006.01)*

(21) Application number: **18823747.3**

(22) Date of filing: **26.06.2018**

(86) International application number:
**PCT/JP2018/024089**

(87) International publication number:
**WO 2019/004157 (03.01.2019 Gazette 2019/01)**

(54) **CONVERTER OPERATION MONITORING METHOD AND CONVERTER OPERATION METHOD**

VERFAHREN ZUR UMRICHTERBETRIEBSÜBERWACHUNG UND
UMRICHTERBETRIEBSVERFAHREN

PROCÉDÉ DE SURVEILLANCE DE FONCTIONNEMENT DE CONVERTISSEUR ET PROCÉDÉ DE
FONCTIONNEMENT DE CONVERTISSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2017 JP 2017129111
12.07.2017 JP 2017136030
23.02.2018 JP 2018030474
29.05.2018 JP 2018102017**

(43) Date of publication of application:
**11.03.2020 Bulletin 2020/11**

(73) Proprietor: **JFE Steel Corporation
Tokyo 100-0011 (JP)**

(72) Inventors:
• **TAKAHASHI Yukio
Tokyo 100-0011 (JP)**
• **AMANO Shota
Tokyo 100-0011 (JP)**
• **HAYASHI Ryoya
Tokyo 100-0011 (JP)**
• **KIKUCHI Naoki
Tokyo 100-0011 (JP)**
• **YOKOMORI Rei
Tokyo 100-0011 (JP)**
• **KODAMA Toshifumi
Tokyo 100-0011 (JP)**
• **KATO Kohei
Tokyo 100-0011 (JP)**

(74) Representative: **Hoffmann Eitle
Patent- und Rechtsanwälte PartmbB
Arabellastraße 30
81925 München (DE)**

(56) References cited:
**WO-A2-2011/151143      CN-A- 102 906 281
JP-A- H02 500 672        JP-A- S49 113 713
JP-B2- H0 211 097        US-A- 4 651 976
US-A1- 2016 153 062      US-B1- 6 562 285**

• **YOSHIHARU IIDA ET AL: "Fully Automated
Blowing Technique for Basic Oxygen
Steelmaking Fumace", TRANSACTIONS OF THE
IRON AND STEEL INSTITUTE OF JAPAN, IRON
AND STEEL INSTITUTE OF JAPAN, JP, vol. 24,
no. 7, 1 January 1984 (1984-01-01), pages 540-546,
XP008159881, ISSN: 0021-1583, DOI:
10.2355/ISIJINTERNATIONAL1966.24.540**
• **CHIBA, KOICHI et al.: "The Mechanism of Atomic
Emission at a Hotspot and Its Application to the
On-line Analysis of Molten Iron",
Tetsu-to-Hagane, vol. 77, no. 11, November 1991
(1991-11), pages 1874-1880, XP055569335,**
• **WEN, HONGYUAN et al.: "Converter end-point
prediction model using spectrum analysis and
improved neural network algorithm", Optica
Applicata, vol. 38, no. 4 2008, pages 693-704,
XP055569340, Retrieved from the Internet:
URL:http://opticaapplicata.pwr.edu.pl/file
s/pdf/2008/no4/optappl _3804p693.pdf**

**Description**

Technical Field

The present invention relates to a method for monitoring the operation of a converter in which hot metal in the converter is subjected to oxidation refining by blowing an oxidizing gas on the hot metal from a top blowing lance, and a method for operating a converter, and more particularly to a method for monitoring an operation and an operation method that contribute to improvements in productivity and the yield of iron.

Background Art

Molten pig iron produced in blast furnaces contains impurities such as carbon (C), phosphorus (P), and silicon (Si). To remove these impurities, hot metal is subjected to oxidation refinement by blowing an oxidizing gas on the surface of hot metal or by blowing an oxidizing gas into hot metal. Thereby, molten steel is produced from the hot metal. When hot metal containing carbon, phosphorus, and silicon is subjected to oxidation refinement, a decarburization reaction (C + O $\rightarrow$ CO), a dephosphorization reaction (2P + 5O $\rightarrow$ P$_2$O$_5$), and a desiliconization reaction (Si + 2O $\rightarrow$ SiO$_2$) occur.

Among these reactions, the desiliconization reaction occurs preferentially. After silicon concentration in the hot metal is reduced by the desiliconization reaction, the decarburization reaction and the dephosphorization reaction occur. When hot metal containing carbon, phosphorus, and silicon is subjected to oxidation refining, the early period of the refining where the desiliconization reaction occurs mainly is referred to as a "desiliconization period", and the period where the subsequent decarburization reaction and dephosphorization reaction occur is referred to as a "decarburization period" or "dephosphorizationdecarburization period". However, the decarburization reaction and the dephosphorization reaction do not occur entirely during the desiliconization period. Although the reaction rate is slow, the decarburization reaction and the dephosphorization reaction also occur.

Operations to produce molten steel from hot metal at increased feed rates of oxidizing gases have recently been performed in oxidation refining (also referred to as "decarburization refining") in converters from the viewpoint of improving productivity. In decarburization refining in a converter, hot metal changes to molten steel as the decarburization reaction proceeds. In the hot metal in the converter during the decarburization refining, hot metal and molten steel are scarcely distinguishable from each other or displayed separately. In this specification, hot metal and molten steel are collectively referred to as "molten iron". When hot metal and molten steel are clearly distinguishable from each other, "hot metal" or "molten steel" is used.

However, an increase in the feed rate of the oxidizing gas results in increases in the amounts of iron as dust scattered from converters to the outside, increases in the amounts of iron adhering and deposited on walls of converters and near the throats of converters, and increases in the amounts of iron distributed to slag in the form of iron oxide. These amounts of iron are regarded as iron loss in the refining to cause a decrease in the yield of iron of molten steel, leading to an increase in refining cost and a decrease in productivity. Most of the iron losses will eventually be recovered and reused as iron sources. However, an increase in the amount generated disadvantageously leads to an increase in cost required to remove and recover adhering iron, thereby decreasing the operating rates of converters.

In recent years, in order to meet increasing demands for steel products having higher strength and greater functionality, a lower phosphorus content and a lower sulfur content have been essential. To deal with this, the following methods are reported: a pretreatment method in which after performing the desiliconization treatment of hot metal with a converter, formed slag is tapped, and hot metal left in the converter is dephosphorized; and a refining method in which then hot metal left in the converter is subjected to decarburization refining.

However, in the case of subjecting hot metal to desiliconization treatment and dephosphorization treatment in a converter or subjecting hot metal containing carbon, phosphorus, and silicon to decarburization refining, an increase in the feed rate of an oxidizing gas forms a large amount of CO gas bubbles in slag, thereby easily foaming the slag. This is due to the presence of a high-surface-tension slag produced by the desiliconization reaction. It is known that this causes what is called a slopping phenomenon in which a large amount of slag containing molten iron escapes from the throat of the converter. If the operation falls into this state, in order to calm down the state, the flow rate of the oxidizing gas is reduced. In some cases, oxygen blowing should be interrupted, thereby decreasing the productivity. The term "oxygen blowing" used here indicates desiliconization treatment, dephosphorization treatment, and decarburization treatment performed by blowing an oxidizing gas from a top blowing lance.

To suppress the generation of dust and slag escaping, for example, Patent Literature 1 discloses a top blowing lance in which a hot-spot-overlapping ratio (d/D) defined by the ratio of an overlapping portion d between the hot spot and a hot spot adjacent to the hot spot to the diameter D of a high-temperature reaction region (referred to as a "hot spot" or "cavity") formed on a collision surface between top-blown oxygen gas and molten iron is 0.2 or less. Patent Literature 1 states that spitting, dust loss, and the lifetime of a converter are all improved.

Patent Literature 2 discloses a refining method with a converter in which a seven-hole lance including a central hole and its surrounding six holes is used, the outermost position of hot spots is separated by 0.4 m or more from the refractory position of a converter wall, hot-spot-overlap percentage is 30% or less of the total area of the hot spots, and the total area of the hot spots is 75% or more of the area of a circle surrounding the outermost circumference of the hot spots. Patent Literature 2 states that it is possible to reduce yield loss due to dust generation, spitting, and splashing.

However, Patent Literature 1 and Patent Literature 2 do not mention the behavior of the oxidizing gas fed. In the oxidizing gas fed, a portion of the oxidizing gas that does not react with carbon but with molten iron is accumulated as iron oxide in slag. An excessive accumulation of oxygen in slag leads to a decrease in iron yield in addition to a decrease in the rate of decarburization reaction.

Patent Literature 3 discloses a desiliconization dephosphorization treatment method for desiliconizing and dephosphorizing hot metal with a top-bottom blown converter. In the method, a solid oxygen source is added onto hot metal within 30 seconds immediately before or after the start of the supply of oxygen gas from a top blowing lance. The feed rate of a bottom-blown gas is changed between a desiliconization period and a dephosphorization period. The slag basicity (($CaO$, % by mass)/($SiO_2$, % by mass)) is 2.5 to 3.0. Powdered quicklime is sprayed on the hot metal at an injection rate of 6 kg/(min·hot metal-t) or less. The carbon concentration in the hot metal at the end of the treatment is 3.4% to 3.7% by mass. Patent Literature 3 states that slopping and spitting can be suppressed while achieving a high dephosphorizing function without using a fluorine-containing auxiliary raw material.

However, in Patent Literature 3, the end of the desiliconization period is determined by mass balance calculation based on the silicon concentration in hot metal, the solid oxygen source, and the amount of oxygen gas supplied from the top blowing lance, and the actual end of the desiliconization period is not determined. However, in the techniques described in Patent Literature 1 to 3, the state in the converter is not monitored in real time , and it is not intended to control, for example, the feed rate of the top-blown oxidizing gas and the feed rate of the bottom-blown stirring gas in accordance with a change in silicon concentration in molten iron and a change in carbon concentration in the molten iron.

Patent Literature 4-8 also relate to methods for monitoring or operating a converter, namely by direct observation of the slag-forming conditions in a vessel interior (Patent Literature 4), capturing an image of a raceway unit through an in-furnace monitor window disposed at the tuyere unit (Patent Literature 5) obtaining and storing digital images of the molten metal stream (Patent Literature 6), measuring a vibration of the lance (Patent Literature 7), or detecting the radiation that is produced during the ignition and is emitted between the converter mouth and the extractor hood (Patent Literature 8) during the refining process.

Citation List

Patent Literature

Patent Literature 1: Japanese Unexamined Patent Application Publication No. 60-165313
Patent Literature 2: Japanese Unexamined Patent Application Publication No. 2002-285224
Patent Literature 3: Japanese Unexamined Patent Application Publication No. 2014-28992
Patent Literature 4: US4651976A
Patent Literature 5: US2016/153062A1
Patent Literature 6: US6562285B1
Patent Literature 7: "Fully Automated Blowing Technique for Basic Oxygen Steelmaking Furnace" Yoshiharu Iida, DOI: 10.2355/ISIJINTERNATIONAL1966:24:541
Patent Literature 8: CN102906281A

Summary of Invention

Technical Problem

As described above, in order to prevent decreases in productivity and iron yield due to the escaping of molten iron, slag, dust, and so forth in an oxidation refining step such as desiliconization, dephosphorization, and decarburization in a converter, a top blowing nozzle is improved, and the addition conditions of a refining agent are optimized; however, sufficient measures have not been taken, leaving room for improvement.

To prevent the decreases in productivity and iron yield in a converter, the followings are important: A state in a converter is accurately grasped in real time, and blowing conditions of an oxidizing gas from a top blowing lance, blowing conditions of a stirring gas through a bottom blowing tuyere, and so forth are appropriately set.

In particular, in order to reduce the escaping of molten iron, slag, dust, and so forth due to slopping and spitting of slag having a high surface tension, it is important to monitor silicon concentration in molten iron in relation to slag formation in the converter and to appropriately control top-blowing conditions and bottom-blowing conditions in accordance with the silicon concentration in the molten iron.

Similarly, in decarburization refining in a converter, in order to perform decarburization refining at a high proportion of oxygen used for a decarburization reaction in oxygen supplied, i.e., at high oxygen efficiency for decarburization, without excessively increasing the iron oxide content while maintaining a high iron yield, it is important to appropriately control top-blowing conditions and bottom-blowing conditions in accordance with the carbon concentration in molten iron in the latter half of the decarburization refining.

The present invention has been made in light of the foregoing circumstances and aims to provide a method for monitoring the operation of a converter in which hot metal in the converter is subjected to oxidation refining such as desiliconization, dephosphorization, and decarburization by blowing an oxidizing gas from a top blowing lance or, in addition, blowing an oxidizing gas or an inert gas through a bottom blowing tuyere, the state in the converter being capable of being appropriately monitored in real time.

It is another object of the present invention to provide a method for operating a converter, the method being capable of suppressing the escaping of dust and slag to improve productivity and iron yield by monitoring a change in silicon concentration in molten iron during oxidation refining and controlling top-blowing conditions and bottom-blowing conditions in accordance with the silicon concentration. It is a further object of the present invention to provide a method for operating a converter, the method being capable of reducing iron oxide contained in slag to improve iron yield by monitoring the carbon concentration in molten iron in the latter half of decarburization refining and controlling top-blowing conditions and bottom-blowing conditions in accordance with the carbon concentration.

Solution to Problem

The gist of the present invention to solve the foregoing problems is described below.

[1] A method for monitoring an operation of a converter in which hot metal in the converter is subjected to oxidation refining by blowing an oxidizing gas on the hot metal in the converter from a top blowing lance or, in addition, blowing an oxidizing gas or an inert gas through a bottom blowing tuyere, includes:

measuring the emission spectrum of a throat combustion flame issuing from the throat of the converter or the emission spectrum of a tap hole combustion flame observed through the tap hole of the converter;
calculating a temporal change in emission intensity in a wavelength range of 580 to 620 nm of the emission spectrum measured; and
presuming a change of a state in the converter in accordance with the calculated temporal change in emission intensity, when the calculated rate of change in emission intensity is either more than a preset threshold value, or satisfies a preset threshold value or less, wherein the preset threshold value is determined in advance for the converter by performing a preliminary test for the converter.

[2] In the method for monitoring an operation of a converter described in [1], the rate of change in emission intensity defined by formula (1) described below is calculated, and the change of the state in the converter is presumed in accordance with the calculated rate of change in emission intensity with time:

$$\text{Rate of change in emission intensity} = (I_n/I_{n-1}) - 1 \cdots (1)$$

where $I_n$ is emission intensity (a.u.) at a specific wavelength at time $T_n$, $I_{n-1}$ is emission intensity (a.u.) at the specific wavelength at time $T_{n-1}$ $\Delta t$ second(s) before time $T_n$, and $\Delta t$ is a measurement time interval (s).

[3] In the method for monitoring an operation of a converter described in [1], the rate of change in the moving average of emission intensity defined by formula (2) described below is calculated, and the change of the state in the converter is presumed in accordance with the calculated rate of change in the moving average of emission intensity:

$$\text{Rate of change in moving average of emission intensity} = ((I_n^S - I_{n-m}^S)/[(I_n^S + I_{n-m}^S)/2] \cdots (2)$$

where $I_n{}^S$ is the moving average (a.u.) of emission intensity at a specific wavelength based on time $T_n$ where S is the number of terms added; and $I_{n-m}{}^S$ is the moving average (a.u.) of emission intensity at a specific wavelength based on time $T_{n-m}$ ($\Delta t \times m$) second(s) before time $T_n$ where S is the number of terms added, m is a natural number, S is the number of terms added in the moving average (an integer of 0 or more), and $\Delta t$ is a measurement time interval (s).

[4] A method for operating a converter in which molten steel is produced from hot metal by blowing an oxidizing gas on the hot metal in the converter from a top blowing lance or, in addition, blowing an oxidizing gas or an inert gas through a bottom blowing tuyere to subject the hot metal to desiliconization, dephosphorization, and decarburization, the hot metal containing 0.02% or more by mass silicon, includes:

measuring the emission spectrum of a throat combustion flame issuing from the throat of the converter or the emission spectrum of a tap hole combustion flame observed through the tap hole of the converter;
calculating a temporal change in emission intensity in a wavelength range of 580 to 620 nm of the emission spectrum measured;
determining the end of a desiliconization period in accordance with the calculated temporal change in emission intensity when the calculated rate of change in emission intensity is more than a preset threshold value, which is determined in advance for the converter by performing a preliminary test for the converter; and
after determination of the end of the desiliconization period, adjusting one or two or more of the flow rate of the oxidizing gas from the top blowing lance, the lance height of the top blowing lance, and the flow rate of the oxidizing gas or the inert gas blown through the bottom blowing tuyere.

[5] In the method for operating a converter described in [4], the rate of change in emission intensity defined by formula (1) described below is calculated as the temporal change in emission intensity, and the end of the desiliconization period is determined by the time when the calculated rate of change in emission intensity exceeds a preset threshold value after initiation of blowing of the oxidizing gas from the top blowing lance:

$$\mathtt{Rate\ of\ change\ in\ emission\ intensity} = (I_n/I_{n-1}) - 1$$

$$\cdots (1)$$

where $I_n$ is emission intensity (a.u.) at a specific wavelength at time $T_n$, $I_{n-1}$ is emission intensity (a.u.) at the specific wavelength at time $T_{n-1}$ $\Delta t$ second(s) before time $T_n$, and $\Delta t$ is a measurement time interval (s).

[6] In the method for operating a converter described in [4], the rate of change in the moving average of emission intensity defined by formula (2) described below is calculated as the temporal change in emission intensity, and the end of the desiliconization period is determined by the time when the calculated rate of change in the moving average of emission intensity exceeds a preset threshold value after initiation of blowing of the oxidizing gas from the top blowing lance:

$$\mathtt{Rate\ of\ change\ in\ moving\ average\ of\ emission\ intensity}$$

$$= ((I_n{}^S - I_{n-m}{}^S)/[(I_n{}^S + I_{n-m}{}^S)/2] \cdots (2)$$

where $I_n{}^S$ is the moving average (a.u.) of emission intensity at a specific wavelength based on time $T_n$ where S is the number of terms added; and $I_{n-m}{}^S$ is the moving average (a.u.) of emission intensity at a specific wavelength based on time $T_{n-m}$ ($\Delta t \times m$) second(s) before time $T_n$ where S is the number of terms added, m is a natural number, S is the number of terms added in the moving average (an integer of 0 or more), and $\Delta t$ is a measurement time interval (s).

[7] In the method for operating a converter described in any of [4] to [6], the adjustment after the determination of the end of the desiliconization period is to reduce the lance height of the top blowing lance or to reduce the flow rate of the oxidizing gas or the inert gas blown through the bottom blowing tuyere, while the flow rate of the oxidizing gas blown from the top blowing lance is increased.

[8] A method for operating a converter in which molten steel is produced from hot metal by blowing an oxidizing gas on the hot metal in the converter from a top blowing lance or, in addition, blowing an oxidizing gas or an inert gas through a bottom blowing tuyere to subject the hot metal to decarburization refining, includes:

measuring the emission spectrum of a throat combustion flame issuing from the throat of the converter or the emission spectrum of a tap hole combustion flame observed through the tap hole of the converter;

calculating a temporal change in emission intensity in a wavelength range of 580 to 620 nm of the emission spectrum measured;

confirming, in accordance with the calculated temporal change in emission intensity in the latter half of the decarburization refining, when the calculated rate of change in emission intensity satisfies a preset threshold value or less in a latter half of the decarburization refining, which is determined in advance for the converter by performing a preliminary test for the converter,

that a rate-determining step of a decarburization reaction has been changed from oxygen supply to the mass transfer of carbon in molten iron; and

thereafter adjusting one or two or more of the flow rate of the oxidizing gas blown from the top blowing lance, the lance height of the top blowing lance, and the flow rate of the oxidizing gas or the inert gas blown through the bottom blowing tuyere.

[9] A method for operating a converter in which molten steel is produced from hot metal by blowing an oxidizing gas on the hot metal in the converter from a top blowing lance or, in addition, blowing an oxidizing gas or an inert gas through a bottom blowing tuyere to subject the hot metal to decarburization refining, includes:

measuring the emission spectrum of a throat combustion flame issuing from the throat of the converter or the emission spectrum of a tap hole combustion flame observed through the tap hole of the converter;

calculating the rate of change in emission intensity defined by formula (1) described below as a temporal change in emission intensity in a wavelength range of 580 to 620 nm of the emission spectrum measured; and

adjusting one or two or more of the flow rate of the oxidizing gas blown from the top blowing lance, the lance height of the top blowing lance, and the flow rate of the oxidizing gas or the inert gas blown through the bottom blowing tuyere at the time when the calculated rate of change in emission intensity satisfies a preset threshold value or less in the latter half of the decarburization refining:

$$\text{Rate of change in emission intensity} = (I_n/I_{n-1}) - 1 \quad \cdots (1)$$

where $I_n$ is emission intensity (a.u.) at a specific wavelength at time $T_n$, $I_{n-1}$ is emission intensity (a.u.) at the specific wavelength at time $T_{n-1}$ $\Delta t$ second(s) before time $T_n$, and $\Delta t$ is a measurement time interval (s).

[10] A method for operating a converter in which molten steel is produced from hot metal by blowing an oxidizing gas on the hot metal in the converter from a top blowing lance or, in addition, blowing an oxidizing gas or an inert gas through a bottom blowing tuyere to subject the hot metal to decarburization refining, includes:

measuring the emission spectrum of a throat combustion flame issuing from the throat of the converter or the emission spectrum of a tap hole combustion flame observed through the tap hole of the converter;

calculating the rate of change in the moving average of emission intensity defined by formula (2) described below as a temporal change in emission intensity in a wavelength range of 580 to 620 nm of the emission spectrum measured; and

adjusting one or two or more of the flow rate of the oxidizing gas blown from the top blowing lance, the lance height of the top blowing lance, and the flow rate of the oxidizing gas or the inert gas blown through the bottom blowing tuyere at the time when the calculated rate of change in the moving average of emission intensity satisfies a preset threshold value or less in the latter half of the decarburization refining:

$$\text{Rate of change in moving average of emission intensity} = ((I_n^S - I_{n-m}^S)/[(I_n^S + I_{n-m}^S)/2] \quad \cdots (2)$$

where $I_n^S$ is the moving average (a.u.) of emission intensity at a specific wavelength based on time $T_n$ where S is the number of terms added; and $I_{n-m}^S$ is the moving average (a.u.) of emission intensity at a specific wavelength based on time $T_{n-m}$ ($\Delta t \times m$) second(s) before time $T_n$ where S is the number of terms added, m is a natural number, S is the number of terms added in the moving average (an integer of 0 or more), and $\Delta t$ is a measurement time interval (s).

[11] In the method for operating a converter described in [9] or [10], the adjustment at the time when the preset threshold value or less is satisfied is to reduce the lance height of the top blowing lance or to increase the flow rate of the oxidizing gas or the inert gas blown through the bottom blowing tuyere, while the flow rate of the oxidizing gas blown from the top blowing lance is reduced.

[12] A method for operating a converter includes:

a desiliconization treatment step of supplying hot metal containing 0.02% or more by mass silicon in a converter with an oxidizing gas from a top blowing lance to subject the hot metal to desiliconization;
a deslagging step of discharging at least part of slag formed in the desiliconization treatment step from the converter;
after the deslagging step, a dephosphorization treatment step of adding a CaO-based flux to the converter and supplying an oxidizing gas from the top blowing lance into the converter to subject the hot metal left in the converter to dephosphorization; and
after the dephosphorization treatment step, a tapping step of discharging the dephosphorized hot metal from the converter to a hot metal-holding vessel,
wherein in the desiliconization treatment step, the emission spectrum of a throat combustion flame issuing from the throat of the converter or the emission spectrum of a tap hole combustion flame observed through the tap hole of the converter is measured,
the rate of change in the moving average of emission intensity defined by formula (2) described below is calculated as a temporal change in emission intensity in a wavelength range of 580 to 620 nm of the emission spectrum measured, and
the deslagging step is performed at the time when the calculated rate of change in the moving average of emission intensity exceeds a preset threshold value:

$$\text{Rate of change in the moving average of emission intensity} = ((I_n{}^S - I_{n-m}{}^S)/[(I_n{}^S + I_{n-m}{}^S)/2] \quad \cdots(2)$$

where $I_n{}^S$ is the moving average (a.u.) of emission intensity at a specific wavelength based on time $T_n$ where S is the number of terms added; and $I_{n-m}{}^S$ is the moving average (a.u.) of emission intensity at a specific wavelength based on time $T_{n-m}$ ($\Delta t \times m$) second(s) before time $T_n$ where S is the number of terms added, m is a natural number, S is the number of terms added in the moving average (an integer of 0 or more), and $\Delta t$ is a measurement time interval (s).

[13] A method for operating a converter in which molten steel is produced from hot metal by oxidation refining of the hot metal in one converter includes:

a desiliconization treatment step and a dephosphorization treatment step, which are continuously performed, of supplying hot metal containing 0.02% or more by mass silicon in the converter with an oxidizing gas from a top blowing lance and adding a CaO-based flux to the converter to subject the hot metal to desiliconization;
thereafter a deslagging step of discharging at least part of slag formed in the desiliconization treatment step and the dephosphorization treatment step; and
after the deslagging step, a decarburization refining step of adding a CaO-based flux to the converter and supplying an oxidizing gas from the top blowing lance into the converter to subject the hot metal left in the converter to decarburization,
in which in the desiliconization treatment step and the dephosphorization treatment step, the emission spectrum of a throat combustion flame issuing from the throat of the converter or the emission spectrum of a tap hole combustion flame observed through the tap hole of the converter is measured,
the rate of change in the moving average of emission intensity defined by formula (2) described below is calculated as a temporal change in emission intensity in a wavelength range of 580 to 620 nm of the emission spectrum measured, and
the deslagging step of discharging the slag formed in the desiliconization treatment step or the desiliconization treatment step and the dephosphorization treatment step is performed at the time when the calculated rate of change in the moving average of emission intensity exceeds a preset threshold value, at the time when a predetermined period of time elapses based on the time when the calculated rate of change in the moving average of emission intensity exceeds a preset threshold value, or at the time when a predetermined amount of oxygen is supplied:

$$\text{Rate of change in moving average of emission intensity}$$

$$= ((I_n^S - I_{n-m}^S)/[(I_n^S + I_{n-m}^S)/2] \quad \cdots (2)$$

where $I_n^S$ is the moving average (a.u.) of emission intensity at a specific wavelength based on time $T_n$ where S is the number of terms added; and $I_{n-m}^S$ is the moving average (a.u.) of emission intensity at a specific wavelength based on time $T_{n-m}$ ($\Delta t \times m$) second(s) before time $T_n$ where S is the number of terms added, m is a natural number, S is the number of terms added in the moving average (an integer of 0 or more), and $\Delta t$ is a measurement time interval (s).

[14] A method for operating two converters in which molten steel is produced from hot metal, the two converters including a first converter and a second converter, the first converter being used as a pretreatment converter for hot metal, the second converter being used as a decarburization converter for hot metal that has been subjected to pretreatment in the pretreatment converter, includes, in the pretreatment:

a desiliconization treatment step of supplying hot metal containing 0.02% or more by mass silicon in the pretreatment converter with an oxidizing gas from a top blowing lance to subject the hot metal to desiliconization, a deslagging step of discharging at least part of slag formed in the desiliconization treatment step from the pretreatment converter, and after the deslagging step, a dephosphorization treatment step of adding a CaO-based flux to the pretreatment converter and supplying an oxidizing gas from the top blowing lance into the pretreatment converter to subject the hot metal left in the pretreatment converter to dephosphorization, the desiliconization treatment step, the deslagging step, and the dephosphorization treatment step being included in the pretreatment,
in which in the desiliconization treatment step, the emission spectrum of a throat combustion flame issuing from the throat of the pretreatment converter or the emission spectrum of a tap hole combustion flame observed through the tap hole of the pretreatment converter is measured,
the rate of change in the moving average of emission intensity defined by formula (2) described below is calculated as a temporal change in emission intensity in a wavelength range of 580 to 620 nm of the emission spectrum measured,
the deslagging step is performed when the calculated rate of change in the moving average of emission intensity exceeds a preset threshold value,
in which in decarburization refining in the decarburization converter, the emission spectrum of the throat combustion flame issuing from the throat of the decarburization converter or the emission spectrum of a tap hole combustion flame observed through the tap hole of the decarburization converter is measured,
the rate of change in the moving average of emission intensity defined by formula (2) described below is calculated as a temporal change in emission intensity in a wavelength range of 580 to 620 nm of the emission spectrum measured, and
one or two or more of the flow rate of the oxidizing gas blown from the top blowing lance, the lance height of the top blowing lance, and the flow rate of the oxidizing gas or the inert gas blown through the bottom blowing tuyere are adjusted at the time when the calculated rate of change in the moving average of emission intensity satisfies a preset threshold value or less in the latter half of the decarburization refining:

$$\text{Rate of change in moving average of emission intensity}$$

$$= ((I_n^S - I_{n-m}^S)/[(I_n^S + I_{n-m}^S)/2] \quad \cdots (2)$$

where $I_n^S$ is the moving average (a.u.) of emission intensity at a specific wavelength based on time $T_n$ where S is the number of terms added; and $I_{n-m}^S$ is the moving average (a.u.) of emission intensity at a specific wavelength based on time $T_{n-m}$ ($\Delta t \times m$) second(s) before time $T_n$ where S is the number of terms added, m is a natural number, S is the number of terms added in the moving average (an integer of 0 or more), and $\Delta t$ is a measurement time interval (s).

Advantageous Effects of Invention

According to the present invention, a state in a converter used for oxidation refining, such as desiliconization, dephosphorization, and decarburization, of hot metal is monitored in real time.

The real-time monitoring of the state in the converter enables the end of a desiliconization period to be determined, enables blowing conditions of an oxidizing gas from a top blowing lance and blowing conditions of a stirring gas through a bottom blowing tuyere to be changed at an appropriate time in accordance with transition from the desiliconization period to a decarburization period, and suppresses the generation of dust to enable the operation of the converter with high productivity and a high iron yield.

Furthermore, the real-time monitoring of the state in the converter enables the carbon concentration in molten iron in the latter half of decarburization refining to be accurately determined, enables the blowing conditions of the oxidizing gas from the top blowing lance and the blowing conditions of the stirring gas through the bottom blowing tuyere to be changed at an appropriate time in accordance with a change in carbon concentration in the molten iron in the latter half of the decarburization refining, and reduces iron oxide in slag to enable the operation of the converter with a high iron yield.

Brief Description of Drawings

[Fig. 1] Fig. 1 is a graph illustrating the relationship between the timing of changing top-blowing conditions and bottom-blowing conditions, which are expressed by the degree of progress of oxygen blowing, and dust per unit production after the completion of oxygen blowing.

[Fig. 2] Fig. 2 is a graph illustrating the relationship between the rate of change in emission intensity at a wavelength of 610 nm in the emission spectrum of a throat combustion flame of a converter and silicon concentration in molten iron.

[Fig. 3] Fig. 3 is a graph illustrating the relationship between the rate of change in the moving average of emission intensity at a wavelength of 610 nm in the emission spectrum of a throat combustion flame of a converter and silicon concentration in molten iron.

[Fig. 4] Fig. 4 is a schematic view illustrating the configuration of a converter system suited to perform the present invention.

[Fig. 5] Fig. 5 is a schematic view of the converter system suited to perform the present invention when viewed in a direction different from that in Fig. 4.

[Fig. 6] Fig. 6 is a graph illustrating the relationship between the timing of changing top-blowing conditions and bottom-blowing conditions, which are expressed by the degree of progress of oxygen blowing, and the iron oxide content of slag after the completion of decarburization refining.

[Fig. 7] Fig. 7 is a graph illustrating the relationship between the rate of change in emission intensity at a wavelength of 610 nm in the emission spectrum of a throat combustion flame of a converter and a carbon concentration in molten iron.

[Fig. 8] Fig. 8 is a graph illustrating the relationship between the rate of change in the moving average of emission intensity at a wavelength of 610 nm in the emission spectrum of a throat combustion flame of a converter and a carbon concentration in molten iron. Description of Embodiments

[First Embodiment]

The inventors have conducted the following studies in order to suppress the escaping of dust and slag by monitoring a change in the silicon concentration in molten iron in real time during oxidation refining in a converter and controlling top-blowing conditions and bottom-blowing conditions in accordance with the silicon concentration. That is, the inventors have conducted intensive studies of the influence of the flow rate of an oxidizing gas blowing from a top blowing lance, the lance height of the top blowing lance, and the flow rate of a stirring gas blown through a bottom blowing tuyere on the amount of dust generated in the operation of a converter in which hot metal containing 0.02% or more by mass silicon is subjected to desiliconization, dephosphorization, and decarburization to produce molten steel from the hot metal.

In the studies, a converter (capacity: 300 tons) was used and configured to enable a stirring gas to be blown through a bottom blowing tuyere in the bottom section of the converter while an oxidizing gas can be blown from a top blowing lance. Oxygen gas (industrial pure oxygen gas) was used as the oxidizing gas blown from the top blowing lance. Argon gas was used as the stirring gas blown through the bottom blowing tuyere. As the top blowing lance, a top blowing lance having five Laval jet nozzles serving as oxygen gas jet nozzles arranged on its tip portion and at a jet angle of 15° was used. The jet angle of each jet nozzle refers to a relative angle between the direction of the jet of an oxygen gas from the jet nozzle and the direction of the axial center of the top blowing lance.

Hot metal containing 0.02% or more by mass silicon was charged into the converter. The hot metal in the converter was subjected to desiliconization, dephosphorization, and decarburization by blowing oxygen gas from the top blowing lance. When the oxygen gas is blown from the top blowing lance on the hot metal containing 0.02% or more by mass silicon, a desiliconization reaction (Si + 2O → SiO$_2$), a dephosphorization reaction (2P + 5O → P$_2$O$_5$), and a decarburization refining (C + O → CO) occur. Among these reactions, the desiliconization reaction occurs preferentially. After silicon concentration in the hot metal is reduced by the desiliconization reaction, the dephosphorization reaction and the decarburization refining occur.

The supply of oxygen gas from the top blowing lance was started at the time when the hot metal had a carbon content of 4.5% by mass and continued to the time when the molten iron in the converter had a carbon content of 0.04% by mass. In the course of the oxygen blowing, the flow rate of oxygen gas blown from the top blowing lance, the lance height of the top blowing lance, and the flow rate of the stirring gas blown through the bottom blowing tuyere were manually changed at the same time. The top-blowing conditions and the bottom-blowing conditions were variously changed in the first half of the oxygen blowing.

The flow rate of oxygen gas from the top blowing lance was changed so as to be increased from 833 Nm$^3$/min to 1,000 Nm$^3$/min. The lance height of the top blowing lance was changed so as to be reduced from 3.0 m to 2.5 m. The flow rate of the stirring gas through the bottom blowing tuyere was changed so as to be reduced from 30 Nm$^3$/min to 15 Nm$^3$/min. The phrase "lance height of the top blowing lance" used here refers to a distance from the tip of the top blowing lance to the surface of the hot metal when the hot metal in the converter is in a static state.

In the latter half of the oxygen blowing, the time when the carbon concentration in the molten iron was estimated at 0.35% by mass, which was calculated by a process computer on the basis of thermal material calculations, was set as the timing of changing the flow rate of top-blown oxygen gas, the lance height, and the flow rate of bottom-blown gas, and each of the changes were manually performed at the same time. Regarding the changes in the latter half of the oxygen blowing, the flow rate of oxygen gas from the top blowing lance was reduced from 1,000 Nm$^3$/min to 833 Nm$^3$/min, the lance height was reduced from 2.5 m to 2.0 m, and the flow rate of the stirring gas through the bottom blowing tuyere was increased from 15 Nm$^3$/min to 30 Nm$^3$/min.

After the completion of the oxygen blowing, the amount of dust (kg) generated in each oxygen blowing operation was measured, and dust per unit production (kg/molten iron-t) was calculated. The timing of changing the flow rate of top-blown oxygen gas, the lance height, and the flow rate of the bottom-blown gas was organized in terms of the degree of progress of oxygen blowing defined by formula (3) below.

$$\texttt{Degree of progress of oxygen blowing} = (Q_{o2c}/Q_{o2}) \times 100$$

$$\cdots(3)$$

where $Q_{O2C}$ is a cumulative amount of oxygen (Nm$^3$) at the timing of changing the top-blowing conditions and the bottom-blowing conditions, and $Q_{O2}$ is a cumulative amount of oxygen (Nm$^3$) at the completion of the oxygen blowing.

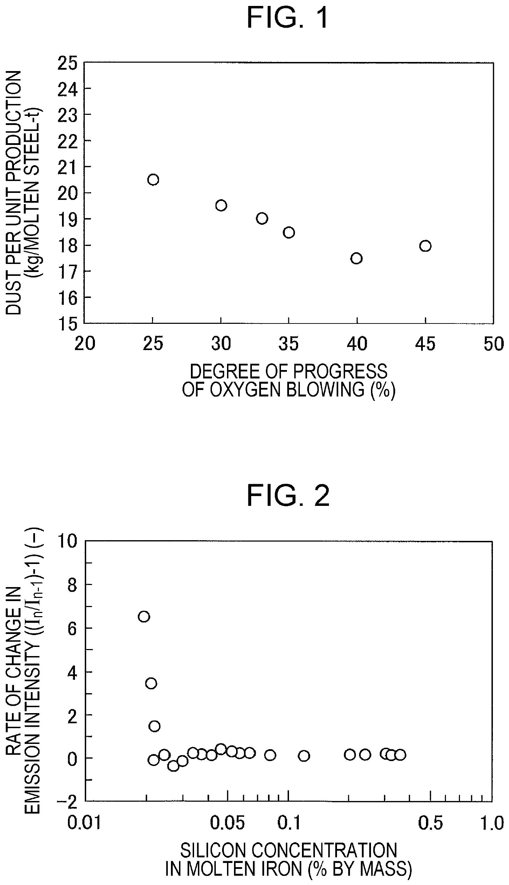

Fig. 1 illustrates the relationship between the timing of changing top-blowing conditions and bottom-blowing conditions, which are expressed by the degree of progress of oxygen blowing, and dust per unit production after the completion of oxygen blowing. Fig. 1 indicated that when the flow rate of top-blown oxygen gas, the lance height, and the flow rate of bottom-blown gas are changed at a small degree of progress of oxygen blowing, the dust per unit production (kg/molten steel-t) at the completion of the oxygen blowing is increased.

That is, it was found that when an increase in the flow rate of the top-blown oxygen gas, a reduction in lance height, and a reduction in the flow rate of the bottom-blown gas are performed at an early stage of the oxygen blowing, the amount of dust generated at the completion of the oxygen blowing is increased to increase the dust per unit production. The reason the amount of dust generated when the top-blowing conditions and the bottom-blowing conditions are changed at the early stage of the oxygen blowing is presumably that molten slag, which is formed by oxidation of silicon in molten iron, is insufficiently formed and that thus part of the surface of the hot metal is not covered with the molten slag.

Accordingly, it was found that the timing of changing the top-blowing conditions and the bottom-blowing conditions significantly affects the amount of dust generated (iron loss) and that it is important to grasp a state in the converter and determine the timing of changing the top-blowing conditions and the bottom-blowing conditions in order to reduce the amount of dust generated (iron loss).

To appropriately grasp the state in the converter, the inventors have focused their attention on a throat combustion flame in the converter and have conceived the idea of measuring the emission spectrum of the throat combustion flame during the oxygen blowing. The term "throat combustion flame" used here refers to a flame issuing from the throat of the converter toward an upper flue in the converter.

The emission spectrum of the throat combustion flame contains information about CO gas generated by a decarburization refining in the converter, information about CO$_2$ gas generated during spontaneous combustion due to the mixing of part of the CO gas and air sucked in the throat portion of the converter, and information about FeO* (intermediate product) originating from iron atoms evaporated from a hot spot in the converter. The inventors have conceived that if emission intensity at each wavelength in the range of 580 to 620 nm of the emission spectrum can be measured in real time, the state in the converter can be easily presumed in real time.

The wavelengths in the range of 580 to 620 nm of the emission spectrum correspond to an "FeO orange system band" attributed to the formation and disappearance of FeO* (intermediate product) and differ from the wavelength range of an intermediate product of a hydrocarbon gas. At the time of the formation of FeO*, an absorption peak is observed in the wavelength range. At the time of the disappearance of FeO*, an emission peak is observed in the same wavelength range. The emission intensity has been confirmed to be associated with the rate of disappearance of FeO*.

Here, what is monitored is an electromagnetic wave having a specific wavelength, the electromagnetic wave being emitted or absorbed at the time of the transition of the electronic state of FeO* mainly formed in the hot spot of molten iron in the converter. FeO* is integrated with the flame issuing from the converter. Thus, for example, when the desiliconization reaction is nearing completion, the amount of FeO* generated and the amount of FeO* reacted are increased. Accordingly, when the emission spectrum of the flame is measured, the intensity of the electromagnetic wave having a wavelength of 580 to 620 nm is increased. In contrast, when the amount of FeO* generated and the amount of FeO* reacted are reduced, the intensity of the electromagnetic wave having a wavelength of 580 to 620 nm is reduced.

The wavelengths in the range of 580 to 620 nm are associated with reduction light generated at the time of the reduction of FeO by carbon. The emission intensity at the wavelengths represents the magnitude of the emission energy when FeO changes from the excited state (FeO*) to the ground state. The emission intensity at the wavelengths is increased at the end of the desiliconization period. Thus, a change in spectral intensity seems to correspond to the formation and reduction of FeO with the completion of the desiliconization reaction.

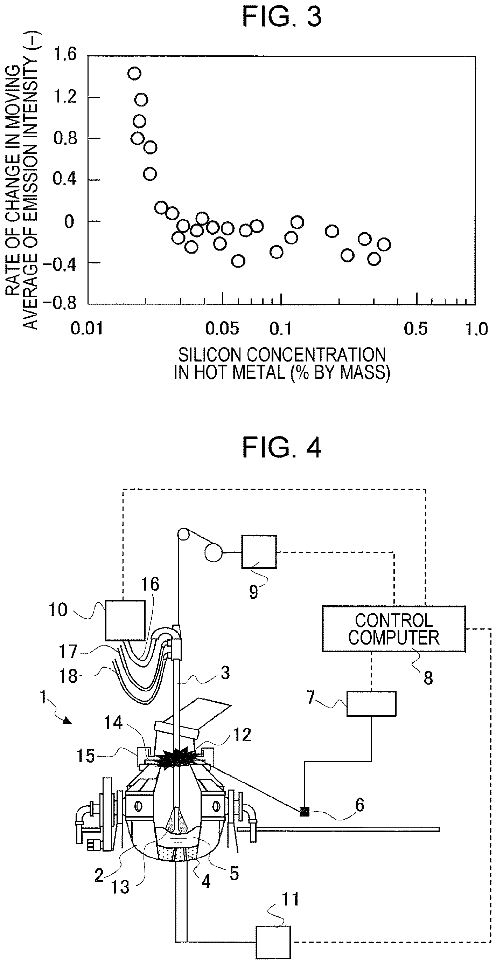

The emission spectrum of the throat combustion flame in the converter was measured during the oxygen blowing in the converter. As illustrated in Fig. 4 (details of Fig. 4 will be described below), the emission spectrum of the throat combustion flame in the converter was measured by arranging a spectroscopic camera 6 in front of a converter 2 and photographing a throat combustion flame 12 seen from the gap between a throat 14 and a movable hood 15. An image photographed with the spectroscopic camera 6 was transmitted to an image analyzer 7. The image was recorded in the image analyzer 7. The emission intensity at each emission wavelength was analyzed by line analysis on a freely-selected scan line of the input image data. The measurement of the emission spectrum and the analysis of the emission intensity were performed at a constant measurement time interval $\Delta t$ of 1 to 10 seconds. Simultaneously with emission spectrum measurement, the collection of molten iron samples and the analysis of silicon concentration in the molten iron were performed once or twice during the oxygen blowing with a sub-lance (automatic temperature measurement sampling device) attached to the converter.

From the measurement results of the emission spectrum, a wavelength of 610 nm, at which the largest amount of change was observed during the oxygen blowing, was defined as a specific wavelength, and the rate of change in emission intensity defined by formula (1) described below was calculated from emission intensity $I_n$ at time $T_n$ and emission intensity $I_{n-1}$ at time $T_{n-1}$ $\Delta t$ second(s) before time $T_n$ at the specific wavelength. The measurement time interval $\Delta t$ was 1 to 10 seconds.

$$\text{Rate of change in emission intensity} = (I_n/I_{n-1}) - 1 \quad \cdots (1)$$

where $I_n$ is emission intensity (a.u.) at the specific wavelength at time $T_n$, and $I_{n-1}$ is emission intensity (a.u.) at the specific wavelength at time $T_{n-1}$ $\Delta t$ second(s) before time $T_n$.

Fig. 2 illustrates the relationship between the calculated rate of change in emission intensity and silicon concentration in molten iron. Fig. 2 indicates that the rate of change in emission intensity changes greatly at a silicon concentration in molten iron of about 0.02% by mass as a boundary. That is, at a silicon concentration in molten iron of less than about 0.02% by mass, the rate of change in emission intensity is increased to more than 1.8. At a silicon concentration in molten iron of less than about 0.02% by mass, the emission intensity at a wavelength of 610 nm is high. At a silicon concentration in molten iron of about 0.02% or more by mass, substantially no emission at a wavelength of 610 nm is observed.

In the oxidation refining of hot metal containing 0.02% or more by mass silicon, it is known that a desiliconization reaction occurs first and then a dephosphorization reaction and a decarburization refining occur. When the silicon concentration in hot metal is reduced by the desiliconization reaction to less than about 0.02% by mass, the emission intensity is increased.

From Fig. 2, at the time when the silicon concentration in molten iron is less than about 0.02% by mass, in other words, at the time when the rate of change in emission intensity is more than 1.8, the effect of shielding the surface of hot metal should be provided by the formation of molten slag. That is, the following was found: in order to prevent a decrease in iron yield due to the increase of dust generation, as an index of the timing of changing the top-blowing conditions and the bottom-blowing conditions such as an increase in the flow rate of top-blown oxygen gas at an early stage of the oxygen blowing, the time when the rate of change in emission intensity exceeds 1.8 after the start of the oxygen blowing is optimal, and this time can be determined as the end of the desiliconization period. In other words, it was found that the "threshold value" of the rate of change in emission intensity represented by formula (1) is 1.8 and that the time when the threshold value is exceeded can be determined as the end of the desiliconization period. The "threshold value" of the rate of change in emission intensity is not limited to 1.8 but is determined in advance for each converter.

The inventors have conducted further studies and have found the following: In actual oxygen blowing, an obstruction such as a crane or smoke can enter an optical path for the measurement of an emission intensity spectrum. In that case, the rate of change in emission intensity measured, which is defined by (1), is more than the set threshold value (1.8), thus resulting in erroneous detection. For this reason, it was found that accurate determination can fail to be made only by comparing emission intensity at certain time $T_n$ with emission intensity at time $T_{n-1}$ $\Delta t$ second(s) before time $T_n$ (comparison of instantaneous values) like formula (1).

The inventors have conceived that emission intensity is determined at time $T_n$, which is used as a reference, time $T_{n-1}$ ($\Delta t \times 1$) second (s) before time $T_n$, time $T_{n-2}$ ($\Delta t \times 2$) seconds before time $T_n$, time $T_{n-3}$ ($\Delta t \times 3$) seconds before time $T_n$, ..., and time $T_{n-S}$ ($\Delta t \times S$) second (s) (where S is an integer of 0 or more) before time $T_n$, and the rate of change in emission intensity is determined using the total (sum) of the resulting values of the emission intensity, i.e., using the moving average of the emission intensity. It was conceived that the use of the moving average of the emission intensity enables variations in emission intensity to be averaged to some extent to reduce variations in the rate of change in emission intensity, thereby resulting in accurate determination.

From the measurement results of the emission spectrum described above, a wavelength of 610 nm, at which the largest amount of change was observed during the oxygen blowing, was defined as a specific wavelength. Time $T_n$ was used as a reference. Values of emission intensity $I_{n-i}$ at time $T_{n-i}$ at the specific wavelength were determined. Specifically, a total of (S + 1) values of emission intensity was determined at time $T_n$, time $T_{n-1}$ ($\Delta t \times 1$) second(s) before time $T_n$, time $T_{n-2}$ ($\Delta t \times 2$) seconds before time $T_n$, ..., and time $T_{n-S}$ ($\Delta t \times S$) second (s) before time $T_n$. The values were added up (summed), and the moving average of the emission intensity based on time $T_n$ was calculated using formula (4) below. Note that $I_{n-i}$ is emission intensity (a.u.) at the specific wavelength at time $T_{n-i}$ ($\Delta t \times i$) second(s) before time $T_n$.

[Math. 1]

$$\text{Moving average of emission intensity based on } T_n = I_n^S = \left( \sum_{i=0}^{S} I_{n-i} \right) / (S+1) \quad \cdots (4)$$

Time $T_{n-m}$ ($\Delta t \times m$) second (s) before time $T_n$ was used as a reference. Similarly, values of emission intensity $I_{n-m-i}$ at time $T_{n-m-i}$ at the specific wavelength were determined. Specifically, a total of (S + 1) values of emission intensity (where S is an integer of 0 or more) was determined at time $T_{n-m}$, time $T_{n-m-1}$ ($\Delta t \times 1$) second (s) before time $T_{n-m}$, time $T_{n-m-2}$ ($\Delta t \times 2$) seconds before time $T_{n-m}$, ..., and time $T_{n-m-S}$ ($\Delta t \times S$) second (s) before time $T_{n-m}$. The values were added up (summed), and the moving average of the emission intensity based on time $T_{n-m}$ was calculated using formula (5) below. Note that $I_{n-m-i}$ is emission intensity (a.u.) at the specific wavelength at time $T_{n-m-i}$ ($\Delta t \times i$) second(s) before time $T_{n-m}$ that is a time ($\Delta t \times m$) second(s) before time $T_n$.

[Math. 2]

$$\text{Moving average of emission intensity based on } T_{n-m} = I_{n-m}^S = \left( \sum_{i=0}^{S} I_{n-m-i} \right) / (S+1)$$

$$\cdots (5)$$

From the moving average of emission intensity based on time $T_n$ and the moving average of emission intensity based on time $T_{n-m}$, the rate of change in the moving average of emission intensity at the specific wavelength, which is defined by formula (2), was determined.

$$\text{Rate of change in moving average of emission intensity}$$

$$= ((I_n^S - I_{n-m}^S) / [(I_n^S + I_{n-m}^S) / 2] \quad \cdots (2)$$

where $I_n^S$ is the moving average (a.u.) of emission intensity at the specific wavelength based on time $T_n$ where S is the number of terms added; and $I_{n-m}{}^S$ is the moving average (a.u.) of emission intensity at the specific wavelength based on time $T_{n-m}$ ($\Delta t \times m$) second (s) before time $T_n$ where S is the number of terms added, m is a natural number, S is the number of terms added in the moving average (an integer of 0 or more), and $\Delta t$ is a measurement time interval (s).

Fig. 3 illustrates the relationship between the calculated rate of change in the moving average of emission intensity and silicon concentration in molten iron. Here, the measurement time interval $\Delta t$ was 1 second. The natural number m and the number S of terms added in the moving average were 20.

Fig. 3 indicates that the rate of change in the moving average of emission intensity, which is calculated by formula (2), changes greatly at the time when the silicon concentration in molten iron is less than about 0.02% by mass as a boundary. In other words, when the rate of change in the moving average of emission intensity is more than 0.4, the effect of shielding the surface of hot metal should be provided by the formation of molten slag. That is, the following was found: in order to prevent a decrease in iron yield due to the increase of dust generation, as an index of the timing of changing the top-blowing conditions and the bottom-blowing conditions such as an increase in the flow rate of top-blown oxygen gas at an early stage of the oxygen blowing, the time when the rate of change in the moving average of emission intensity exceeds 0.4 after the start of the oxygen blowing is optimal, and this time can be determined as the end of the desiliconization period. In other words, it was found that the "threshold value" of the rate of change in the moving average of emission intensity is 0.4 and that the time when the threshold value is exceeded can be determined as the end of the desiliconization period. The "threshold value" of the rate of change in the moving average of emission intensity is not limited to 0.4 but is determined in advance for each converter.

When an optical path for the measurement of an emission spectrum is interrupted by, for example, the movement of a crane or the generation of smoke, in the case of using the rate of change in emission intensity determined by formula (1) (comparison of instantaneous values), the rate of change in emission intensity is reduced, it can be determined that a predetermined condition (exceeding a preset threshold value) is satisfied. In contrast, in the case of using the rate of change in the moving average of emission intensity calculated using the moving average represented by formula (2), even if such a problem occurs, changes are averaged and thus stable.

It was thus found that the use of the rate of change in the moving average of emission intensity calculated using the moving average results in only small variations of the time when silicon concentration in molten iron is less than about 0.02 by mass, i.e., the time when the rate of change in the moving average of emission intensity is more than the threshold value, and that the end of the desiliconization period can be stably determined.

The converter includes a tap hole configured to discharge refined molten iron in the converter into a hot metal-holding vessel or a molten steel-holding vessel. Usually, the tap hole is opened; thus, a flame in the converter is also observed through the tap hole. In this specification, the flame is referred to as a "tap hole combustion flame". As with the case of measuring the emission spectrum of the throat combustion flame, a state in the converter can be grasped by measuring the emission spectrum of the tap hole combustion flame observed through the tap hole or the tap hole combustion flame observed at the tap hole.

Further studies based on the foregoing findings have led to the completion of a method for monitoring the operation of a converter and a method for operating a converter according to a first embodiment of the present invention. A specific method for implementing the first embodiment of the present invention will be described below with reference to the drawings. Fig. 4 schematically illustrates an outline of the configuration of a converter system suited to carry out the present invention.

A converter system 1 suited to carry out the present invention includes the converter 2, a top blowing lance 3, the spectroscopic camera 6 that is arranged in front of the converter 2 and that can photograph the throat combustion flame 12, the image analyzer 7 configured to retrievably record the image photographed with the spectroscopic camera 6 and analyze the photographed image, and a control computer 8 configured to send a control signal in accordance with data analyzed by the image analyzer 7. The converter system 1 further includes a lance-height control device 9 that adjusts the lance height of the top blowing lance 3 and that is configured to be separately operable by a control signal sent from the control computer 8, an oxidizing-gas flow rate control device 10 that adjusts the flow rate of an oxidizing gas jetted from the top blowing lance 3, and a bottom-blown gas flow rate control device 11 that adjusts the flow rate of a stirring gas blown through a bottom blowing tuyere 4.

The converter 2 used has a configuration in which an oxidizing gas jet 13 can be blown from the top blowing lance 3 toward a hot metal 5 in the converter and the stirring gas can be simultaneously blown through the bottom blowing tuyere 4 in the bottom section of the converter. The spectroscopic camera 6 that can measure the emission spectrum of the throat combustion flame 12 in the converter is arranged in front of the converter 2. The throat combustion flame 12 seen from the gap between the throat 14 of the converter and the movable hood 15 is photographed with the spectroscopic camera 6. An image (image data) photographed with the spectroscopic camera 6 is sequentially sent to the image analyzer 7. In the image analyzer 7, the sent image (image data) is recorded, and the emission wavelengths and the emission intensity at each wavelength are analyzed by line analysis on a freely-selected scan line.

The analyzed image data of the throat combustion flame 12 is transmitted to the control computer 8 each time. The control computer 8 is configured to send a control signal to individually or simultaneously operate the lance-height control device 9, the oxidizing-gas flow rate control device 10, and the bottom-blown gas flow rate control device 11 in accordance with the input, analyzed image data. In Fig. 4, reference numeral 16 denotes an oxidizing gas supply pipe to the top blowing lance, reference numeral 17 denotes a cooling water supply pipe to the top blowing lance, and reference numeral 18 denotes a cooling water discharge pipe from the top blowing lance.

In the operation of the converter according to the first embodiment of the present invention, the converter system 1 is used, and the hot metal 5 is subjected to desiliconization, dephosphorization, and decarburization by oxidation refining that is performed by blowing an oxidizing gas from the top blowing lance 3 on the hot metal 5 in the converter 2 or, in addition, blowing an oxidizing gas or an inert gas through the bottom blowing tuyere 4, thereby producing molten steel from the hot metal 5. Note that the hot metal 5 contains 0.02% or more by mass silicon.

In the first embodiment of the present invention, a state in the converter during oxygen blowing in the converter 2 is monitored by photographing the throat combustion flame 12 using the spectroscopic camera 6 and analyzing the resulting emission spectrum. The photographing of the throat combustion flame 12 using the spectroscopic camera 6 and the analysis of the emission spectrum are preferably performed at measurement time intervals $\Delta t$ of 1 to 10 seconds from the viewpoint of improving the productivity and the iron yield.

The emission spectrum obtained by photographing is retrievably recorded in the image analyzer 7. In the image analyzer 7, analyses for identifying the emission wavelengths and for calculating emission intensity at each wavelength are performed in a wavelength range of 580 to 620 nm of the resulting emission spectrum of the throat combustion flame 12. The wavelengths in the range of 580 to 620 nm corresponds to a "FeO orange system band" attributed to the formation and disappearance of FeO* (intermediate product) as described above. At the time of the formation of FeO*, an absorption peak is observed in the wavelength range. At the time of the disappearance of FeO*, an emission peak is observed in the same wavelength range. The emission intensity has been confirmed to be associated with the rate of disappearance of FeO*. The wavelengths in the range of 580 to 620 nm were targeted for measurement because the wavelengths reflect the reactions in the converter and provide a clue to an easy presumption of a state in the converter. The emission intensity represents the magnitude of the emission energy when FeO changes from the excited state (FeO*) to the ground state.

In the first embodiment of the present invention, a temporal change in emission intensity at each wavelength is calculated, the change of the state in the converter is presumed from the temporal change in emission intensity and used for monitoring the operation of the converter. Specifically, the rate of change in emission intensity at a specific wavelength represented by formula (1) or the rate of change in the moving average of the emission intensity at the specific wavelength represented by formula (2) is calculated and used as a temporal change in the emission intensity of the emission spectrum obtained by photographing the throat combustion flame 12.

The specific wavelength used for the calculation of the rate of change in emission intensity and the rate of change in the moving average of the emission intensity is determined by measuring, in advance, a wavelength at which the largest amount of change in emission intensity is observed during oxygen blowing in the wavelength range of 580 to 620 nm or by monitoring multiple wavelengths in the wavelength range during the oxygen blowing and determining a wavelength at which the largest amount of change in emission intensity is observed in each time.

In the method for operating a converter according to the first embodiment of the present invention, a temporal change in emission intensity is calculated at the specific wavelength in the range of 580 to 620 nm of the measured emission spectrum. After the start of the blowing of an oxidizing gas from the top blowing lance, i.e., after the start of oxygen blowing, one or two or more of an increase in the flow rate of the oxidizing gas blown from the top blowing lance, a reduction in lance height, and a reduction in the flow rate of an oxidizing gas or an inert gas blown through the bottom blowing tuyere are performed at the time when the rate of change in emission intensity defined by formula (1) exceeds a preset threshold value (for example, 1.8) or at the time when the rate of change in the moving average of emission intensity defined by formula (2) exceeds a preset threshold value (for example, 0.4).

In the first half of the oxygen blowing, the rate of change in emission intensity defined by formula (1) and the rate of change in the moving average of emission intensity defined by formula (2) vary greatly at a silicon concentration in molten iron of about 0.02% by mass as a boundary. At a silicon concentration in the molten iron of less than about 0.02% by mass, the rate of change in emission intensity and the rate of change in the moving average of emission intensity are increased. At a silicon concentration in the molten iron of 0.02% or more by mass, substantially no light emission is observed in the wavelength range.

In an early stage of the oxygen blowing where the silicon concentration in the molten iron is about 0.02% or more by mass, the formation of molten slag due to oxidation of silicon in the molten iron is insufficient. Droplet scattering due to the separation of CO gas bubbles from the surface of the molten iron is not negligible. Thus, an increase in the flow rate of the top-blown oxidizing gas at this stage increases the amount of dust generated, leading to a decrease in iron yield.

Thus, one or two or more of changes, i.e., the increase in the flow rate of the top-blown oxidizing gas, the reduction in lance height, and the reduction in the flow rate of the bottom-blown gas, in the early stage of the oxygen blowing are performed at the time when the rate of change in emission intensity defined by formula (1) exceeds a preset threshold value or at the time when the rate of change in the moving average of emission intensity defined by formula (2) exceeds a preset threshold value. In other words, these are performed at the time when the oxidation of silicon in the molten iron is almost completed.

The phrase "preset threshold value" used in the first embodiment refers to each of the rate of change in emission intensity and the rate of change in the moving average of emission intensity at the time when silicon concentration in molten iron is less than about 0.02%, both rates being determined in advance by performing a preliminary test for each converter.

Furthermore, at this point, more preferably, the lance height of the top blowing lance is reduced or the flow rate of the oxidizing gas or the inert gas blown through the bottom blowing tuyere is reduced, simultaneously with an increase in the flow rate of the oxidizing gas blown from the top blowing lance. The adjustments enable the generation of dust to be suppressed to improve the iron yield.

The amount of increase in the flow rate of the oxidizing gas blown from the top blowing lance, the amount of reduction in the lance height of the top blowing lance, and the amount of reduction in the flow rate of the oxidizing gas or the inert gas blown through the bottom blowing tuyere are preferably determined in advance on the basis of, for example, the ratio of a force to stir molten iron to the flow rate of the oxidizing gas.

The converter system 1 suited to carry out the first embodiment of the present invention is preferably configured to transmit a control signal from the control computer 8 to the lance-height control device 9 so as to reduce the lance height, to transmit a control signal to the oxidizing-gas flow rate control device 10 so as to increase the flow rate of the oxidizing gas jetted, to transmit a control signal to the bottom-blown gas flow rate control device 11 so as to reduce the flow rate of the oxidizing gas or inert gas blown, or to simultaneously transmit all of these control signals at each time when the rate of change in emission intensity defined by formula (1) exceeds a preset threshold value or at each time when the rate of change in the moving average of emission intensity defined by formula (2) exceeds a preset threshold value.

The oxidizing gas blown from the top blowing lance 3 is typically oxygen gas. For example, a mixed gas of oxygen gas and a rare gas, such as argon gas or helium gas, or nitrogen gas, air, or oxygen-enriched air may be used. The term "oxidizing gas" used here refers to an oxygen-containing gas having an oxygen concentration equal to or higher than air. The gas blown through the bottom blowing tuyere 4 is an inert gas or an oxidizing gas. In the case of blowing an oxidizing gas, the oxidizing gas functions as an oxidizing gas for oxidation refining and also functions as a stirring gas.

The above description is an example in which the state in the converter 2 during the oxygen blowing is monitored in real time by photographing the throat combustion flame 12. The state in the converter 2 during the oxygen blowing can also be monitored in real time by measuring the emission spectrum of the tap hole combustion flame observed from the tap hole of the converter 2.

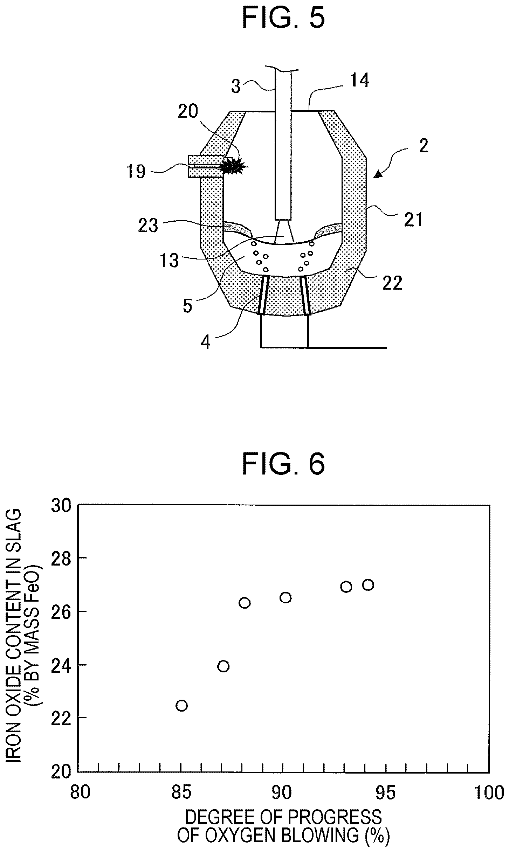

Fig. 5 illustrates a schematic view of the converter when the converter 2 illustrated in Fig. 4 is viewed in a different direction from that in Fig. 4 (direction perpendicular to that in Fig. 4). As illustrated in Fig. 5, the converter 2 in which the outer shell is a steel shell 21 and a refractory material 22 is arranged inside the steel shell 21 includes a tap hole 19 penetrating the refractory material 22 arranged on one side wall. By tilting the converter 2, molten iron, which has been subjected to oxidation refining, in the converter is tapped into a hot metal-holding vessel (not illustrated) or a molten steel-holding vessel (not illustrated).

The internal pressure of the converter 2 is controlled to a pressure slightly lower than atmospheric pressure during the oxygen blowing. Air enters the converter through the tap hole 19. A tap hole combustion flame 20 does not issue from the tap hole 19. Thus, in this case, as with the case of measuring the throat combustion flame 12, the state in the converter 2 during the oxygen blowing can be monitored in real time by measuring the emission spectrum of the tap hole combustion flame 20 with the spectroscopic camera through the tap hole 19.

In the case where the internal pressure of the converter 2 is controlled to a pressure slightly higher than atmospheric pressure, the tap hole combustion flame 20 issues from the tap hole 19 to the outside the converter, thus facilitating the measurement of the tap hole combustion flame 20. Reference numeral 23 in Fig. 5 denotes slag.

In the method for operating a converter according to the first embodiment of the present invention, any of common oxygen blowing methods can be employed in the latter half of the oxygen blowing, and the method is not particularly limited. For example, in order to avoid the peroxidative state of molten iron in the converter and improve the iron yield, one or two or more of a reduction in the flow rate of the oxidizing gas blown from the top blowing lance, a reduction in the lance height of the top blowing lance, and an increase in the flow rate of the oxidizing gas or the inert gas blown through the bottom blowing tuyere are preferably performed at the time when the degree of progress of oxygen blowing is appropriate (for example, at the time when carbon concentration in molten iron is estimated at 0.35% by mass on the basis of thermal material calculations by an existing process computer).

In the method for operating a converter according to the first embodiment of the present invention, also in the latter half of the oxygen blowing as in the first half of the oxygen blowing, the emission spectrum of the throat combustion flame issuing from the throat of the converter or the tap hole combustion flame is measured. The rate of change in emission intensity defined by formula (1) or the rate of change in the moving average of emission intensity defined by formula (2) is calculated as a temporal change in emission intensity at a specific wavelength in the range of 580 to 620 nm of the emission spectrum. The top-blowing conditions and the bottom-blowing conditions may be changed at the time when the rate of change in emission intensity or the rate of change in the moving average of emission intensity satisfies a preset threshold value or less. This avoids an increase in iron oxide concentration in slag to improve the iron yield.

[Second Embodiment]

In decarburization refining in a converter in which molten steel is produced from hot metal by subjecting the hot metal to oxidation refining, the inventors have conducted the following investigation in order to reduce iron oxide in slag by monitoring a change in carbon concentration in molten iron in real time in the latter half of the decarburization refining and controlling top-blowing conditions and bottom-blowing conditions in accordance with the carbon concentration. That is, in the operation of a converter in which molten steel is produced from hot metal by subjecting the hot metal to decarburization refining, the inventors have conducted intensive studies on the influences of the flow rate of an oxidizing gas blowing from a top blowing lance, the lance height of the top blowing lance, and the flow rate of a stirring gas blown through a bottom blowing tuyere on the formation of iron oxide in slag. The hot metal subjected to decarburization refining may have any silicon content and any phosphorus content.

It is known that in decarburization refining in a converter, the decarburization reaction rate is limited by oxygen supply for a period until carbon concentration in molten iron reaches a critical carbon concentration and that the decarburization reaction rate is limited by mass transfer (diffusion) of carbon in molten iron for a period in which the carbon concentration in the molten iron is lower than the critical carbon concentration. The state in which the decarburization reaction rate is limited by oxygen supply refers to a state in which the decarburization reaction rate is determined by an oxygen supply rate regardless of the carbon concentration in the molten iron. Accordingly, for the period in which the rate is limited by oxygen supply, increasing the feed rate of the oxidizing gas increases the decarburization reaction rate. For the period in which the rate is limited by the mass transfer of carbon, increasing the feed rate of the oxidizing gas does not increase the decarburization reaction rate. The excessively supplied oxidizing gas results in the increase of iron oxide in slag. That is, the inventors have conceived that iron oxide in slag can be reduced by accurately grasping the time when the rate-determining step of the decarburization reaction is changed from oxygen supply to the mass transfer of carbon in molten iron, and changing the top-blowing conditions and the bottom-blowing conditions on the basis of the time.

In the studies, as with the first embodiment, a converter (capacity: 300 tons) was used and configured to enable a stirring gas to be blown through a bottom blowing tuyere in the bottom section of the converter while an oxidizing gas can be blown from a top blowing lance. Oxygen gas (industrial pure oxygen gas) was used as the oxidizing gas blown from the top blowing lance. Argon gas was used as the stirring gas blown through the bottom blowing tuyere. As the top blowing lance, a top blowing lance having five Laval jet nozzles serving as oxygen gas jet nozzles arranged on its tip portion and at a jet angle of 15° was used.

Hot metal having a carbon concentration of 3.5% by mass was subjected to decarburization refining using the converter. The supply of oxygen gas from the top blowing lance was started at the time when the hot metal had a carbon content of 3.5% by mass and continued to the time when the molten iron in the converter had a carbon content of 0.04% by mass. In the latter half of the decarburization refining, the flow rate of oxygen gas blown from the top blowing lance, the lance height of the top blowing lance, and the flow rate of the stirring gas blown through the bottom blowing tuyere were manually changed at the same time. The timing of changing the top-blowing conditions and the bottom-blowing conditions was changed variously around the time when the rate-determining step of the decarburization reaction in the latter half of the decarburization refining is changed from oxygen supply to the mass transfer of carbon in molten iron.

The flow rate of oxygen gas from the top blowing lance was changed so as to be reduced from 1,000 $Nm^3$/min to 833 $Nm^3$/min. The lance height of the top blowing lance was changed so as to be reduced from 2.5 m to 2.0 m. The flow rate of the stirring gas through the bottom blowing tuyere was changed so as to be 15 $Nm^3$/min to 30 $Nm^3$/min.

After the completion of the decarburization refining, slag generated by each decarburization refining operation was collected. The iron oxide content (% by mass, FeO) of the slag was measured by X-ray fluorescence analysis. As with the first embodiment, the timing of changing the flow rate of top-blown oxygen gas, the lance height, and the flow rate of the bottom-blown gas was organized in terms of the degree of progress of oxygen blowing defined by formula (3) below.

$$\text{Degree of progress of oxygen blowing} = (Q_{O2C}/Q_{O2}) \times 100$$

$$\cdots (3)$$

where $Q_{O2C}$ is a cumulative amount of oxygen ($Nm^3$) at the timing of changing the top-blowing conditions and the bottom-blowing conditions, and $Q_{O2}$ is a cumulative amount of oxygen ($Nm^3$) at the completion of the oxygen blowing.

Fig. 6 illustrates the relationship between the timing of change expressed by the degree (%) of progress of oxygen blowing and the iron oxide content of slag (% by mass, FeO) after the completion of decarburization refining. Fig. 6 indicates that the iron oxide content (% by mass, FeO) of slag at the time of the completion of the decarburization refining increases as the degree of progress of oxygen blowing increases at the time when the top-blowing conditions and the bottom-blowing conditions are changed. It was found that when the flow rate of the top-blown oxygen gas, the lance height, and the flow rate of the bottom-blown gas are changed during the period when the degree of progress of oxygen blowing is 90% or more, the slag has a high iron oxide content (% by mass, FeO) after the completion of the decarburization refining.

That is, it was found that when a reduction in the flow rate of the top-blown oxygen gas, a reduction in lance height, and an increase in the flow rate of the bottom-blown gas are performed at a higher degree of progress of oxygen blowing (at the end stage of the decarburization refining), the iron oxide content (% by mass, FeO) of slag at the time of the completion of the decarburization refining is increased. Accordingly, the inventors have found that the timing of changing the top-blowing conditions and the bottom-blowing conditions significantly affects iron loss and that it is important to grasp a state in the converter and determine the timing of changing the top-blowing conditions and the bottom-blowing conditions in order to reduce the iron oxide content (% by mass, FeO) of slag at the time of the completion of the decarburization refining.

To appropriately grasp the state in the converter, the inventors have focused their attention on a throat combustion flame in the converter and have conceived the idea of measuring the emission spectrum of the throat combustion flame during the decarburization refining.

The emission spectrum of the throat combustion flame contains information about CO gas generated by the decarburization refining in the converter, information about $CO_2$ gas generated during spontaneous combustion due to the mixing of part of the CO gas and air sucked in the throat portion of the converter, and information about FeO* (intermediate product) originating from iron atoms evaporated from a hot spot in the converter. If emission intensity at each wavelength in the range of 580 to 620 nm of the emission spectrum can be measured in real time, the state in the converter can be easily presumed in real time.

The wavelengths in the range of 580 to 620 nm of the emission spectrum correspond to an "FeO orange system band" attributed to the formation and disappearance of FeO* (intermediate product). The inventors have confirmed the following: At the time of the formation of FeO*, an absorption peak is observed in the wavelength range. At the time of the disappearance of FeO*, an emission peak is observed in the same wavelength range. The emission intensity is associated with the rate of disappearance of FeO*.

Here, what is monitored is an electromagnetic wave having a specific wavelength, the electromagnetic wave being emitted or absorbed at the time of the transition of the electronic state of FeO* mainly formed in the hot spot of molten iron in the converter. FeO* is integrated with the flame issuing from the converter. Thus, for example, when the decarburization reaction is nearing completion, the amount of FeO* generated and the amount of FeO* reacted are reduced. Accordingly, when the emission spectrum of the flame is measured, the intensity of the electromagnetic wave having a wavelength of 580 to 620 nm is reduced.

When the rate-determining step of the decarburization reaction is changed to the mass transfer of carbon in molten iron, the formation of FeO is more dominant than the reduction of FeO, thereby sharply reducing the emission intensity in the wavelength range of 580 to 620 nm.

As with the first embodiment, the emission spectrum of the throat combustion flame in the converter was measured during the decarburization refining in the converter. As illustrated in Fig. 4, the emission spectrum of the throat combustion flame in the converter was measured by arranging the spectroscopic camera 6 in front of the converter 2 and photographing the throat combustion flame 12 seen from the gap between the throat 14 and the movable hood 15. The image photographed with the spectroscopic camera 6 was transmitted to the image analyzer 7. The image was recorded in the image analyzer 7. The emission intensity at each emission wavelength was analyzed by line analysis on a freely-selected scan line of the input image data. The measurement of the emission spectrum and the analysis of the emission intensity were performed at a constant measurement time interval $\Delta t$ of 1 to 10 seconds. Simultaneously with emission spectrum measurement, the collection of molten iron samples and the analysis of carbon concentration in the molten iron were performed once or twice during the decarburization refining with a sub-lance (automatic temperature measurement sampling device) attached to the converter.

From the measurement results of the emission spectrum, a wavelength of 610 nm, at which the largest amount of change was observed during the decarburization refining was defined as a specific wavelength, and the rate of change in emission intensity defined by formula (1) described below was calculated from emission intensity $I_n$ at time $T_n$ and emission intensity $I_{n-1}$ at time $T_{n-1}$ $\Delta t$ second (s) before time $T_n$ at the specific wavelength. The measurement time interval $\Delta t$ was 1 to 10 seconds.

$$\text{Rate of change in emission intensity} = (I_n/I_{n-1}) - 1 \quad \cdots (1)$$

where $I_n$ is emission intensity (a.u.) at the specific wavelength at time $T_n$, and $I_{n-1}$ is emission intensity (a.u.) at the specific wavelength at time $T_{n-1}$ $\Delta t$ second(s) before time $T_n$.

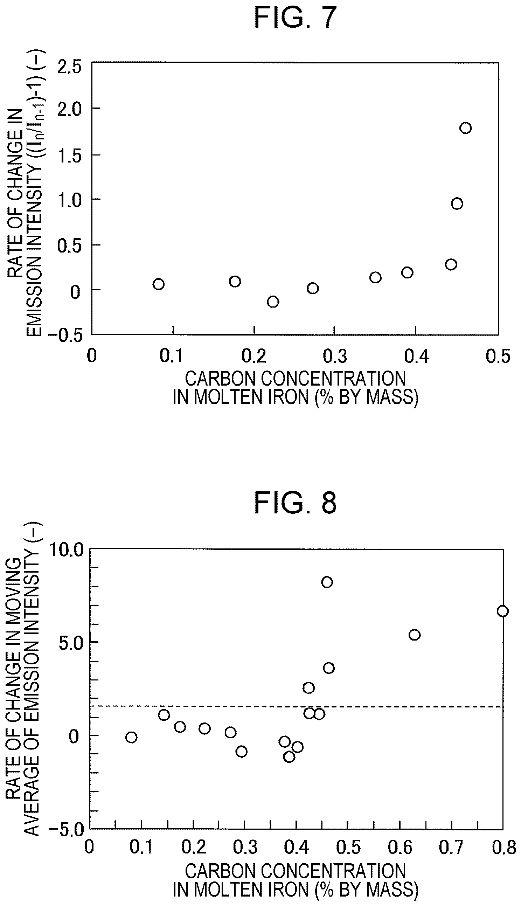

Fig. 7 illustrates the relationship between the calculated rate of change in emission intensity and carbon concentration in molten iron. Fig. 7 indicates that the rate of change in emission intensity changes greatly at a carbon concentration in molten iron of about 0.45% by mass as a boundary. That is, at a carbon concentration in molten iron of about 0.45% or more by mass, the rate of change in emission intensity is increased to more than 1.8. At a carbon concentration in molten iron of about 0.45% or more by mass, the emission intensity at a wavelength of 610 nm is high. At a carbon concentration in molten iron of less than about 0.45% by mass, substantially no emission at a wavelength of 610 nm is observed.

Fig. 7 indicated that the time when the carbon concentration in molten iron is less than about 0.45% by mass, in other words, the time when the rate of change in emission intensity satisfies 1.8 or less, is optimal as an index of the timing of changing the top-blowing conditions and the bottom-blowing conditions at the end stage of the decarburization refining. That is, the following was found: in order to prevent a decrease in iron yield due to an increase in the iron oxide content (% by mass, FeO) of slag, the "threshold value" of the rate of change in emission intensity is 1.8, and as an index of the timing of changing the top-blowing conditions and the bottom-blowing conditions such as a reduction in the flow rate of the top-blown oxygen gas, the time when the rate of change in emission intensity, which is calculated by formula (1), satisfies 1.8 or less in the latter half of the decarburization refining is optimal. The "threshold value" of the rate of change in emission intensity is not limited to 1.8 but is determined in advance for each converter.

The inventors have conducted further studies and have found the following: In actual decarburization refining, an obstruction such as a crane or smoke can enter an optical path for the measurement of an emission intensity spectrum. In that case, the rate of change in emission intensity measured, which is defined by (1), satisfies the set threshold value (1.8) or less, thus resulting in erroneous detection. For this reason, it was found that accurate determination can fail to be made only by comparing emission intensity at certain time $T_n$ with emission intensity at time $T_{n-1}$ $\Delta t$ second(s) before time $T_n$ (comparison of instantaneous values).

Accordingly, the inventors have determined the rate of change in the moving average of emission intensity at a specific wavelength, which is defined by formula (2) below, using the moving average of emission intensity as in the first embodiment.

$$\text{Rate of change in moving average of emission intensity}$$
$$= ((I_n^S - I_{n-m}^S)/[(I_n^S + I_{n-m}^S)/2] \quad \cdots (2)$$

where $I_n^S$ is the moving average (a.u.) of emission intensity at the specific wavelength based on time $T_n$ where S is the number of terms added; and $I_{n-m}^S$ is the moving average (a.u.) of emission intensity at the specific wavelength based on time $T_{n-m}$ ($\Delta t \times m$) second (s) before time $T_n$ where S is the number of terms added, m is a natural number, S is a number of terms added in the moving average (an integer of 0 or more), and $\Delta t$ is a measurement time interval (s).

Fig. 8 illustrates the relationship between the calculated rate of change in the moving average of emission intensity and carbon concentration in molten iron. Here, the measurement time interval $\Delta t$ was 1 second. The natural number m and the number S of terms added in the moving average were 10.

Fig. 8 indicates that the rate of change in the moving average of emission intensity changes greatly at the time when the carbon concentration in molten iron is about 0.45% by mass as a boundary. When the carbon concentration in molten iron is 0.45% or more by mass, the rate of change in the moving average of emission intensity increases as the decarburization refining proceeds. When the carbon concentration in molten iron is less than about 0.45% by mass, the emission decreases.

Fig. 8 indicated that the time when the carbon concentration in molten iron is less than about 0.45% by mass, in other words, the time when the rate of change in moving average of emission intensity satisfies a preset threshold value (dotted line: 1.6 here) or less, is optimal as an index of the timing of changing the top-blowing conditions and the bottom-blowing conditions at the latter half of the decarburization refining in order to prevent a decrease in iron yield due to an increase in the iron oxide content (% by mass, FeO) of slag. The "threshold value" of the rate of change in the moving average of emission intensity is not limited to 1.6 but is determined in advance for each converter.

When an optical path for the measurement of an emission spectrum is interrupted by, for example, the movement of a crane or the generation of smoke, in the case of using the rate of change in emission intensity determined by formula (1) (comparison of instantaneous values), the rate of change in emission intensity is reduced, it can be determined that a predetermined condition (equal to or lower than a preset threshold value) is satisfied. In contrast, in the case of using the rate of change in the moving average of emission intensity calculated using the moving average represented by formula (2), even if such a problem occurs, variations in emission intensity are averaged, and thus the change is stable.

It was thus found that the use of the rate of change in the moving average of emission intensity calculated using the moving average results in only small variations of the time when carbon concentration in molten iron is less than about 0.45% by mass, i.e., the time when the rate of change in the moving average of emission intensity satisfies the threshold value or less, and that the timing of changing the top-blowing conditions and the bottom-blowing conditions can be stably determined.

In the above description, the state in the converter during the decarburization refining in the converter is grasped by measuring the emission spectrum of the throat combustion flame. The state in the converter during the decarburization refining in the converter can also be grasped by measuring the emission spectrum of a tap hole combustion flame observed through a tap hole or the tap hole combustion flame observed at the tap hole as in the case of measuring the emission spectrum of the throat combustion flame.

Further studies based on the foregoing findings have led to the completion of a method for monitoring the operation of a converter and a method for operating a converter according to a second embodiment of the present invention. A specific method for implementing the second embodiment of the present invention will be described below.

A converter system used in the second embodiment of the present invention has the same structure as the converter system 1, illustrated in Fig. 4, used in the first embodiment of the present invention. Thus, detailed description of the converter system is omitted.

In the operation of the converter according to the second embodiment of the present invention, the converter system 1 is used, and the hot metal 5 is subjected to oxidation refining, in other words, the hot metal 5 is subjected to decarburization refining, to produce molten steel from the hot metal 5 by blowing an oxidizing gas on the hot metal 5 in the converter 2 from the top blowing lance 3 or, in addition, blowing an oxidizing gas or an inert gas through the bottom blowing tuyere 4. When the hot metal 5 used contains 0.02% or more by mass silicon, a desiliconization reaction occurs first and then a decarburization reaction and a dephosphorization reaction occur. When the silicon concentration in the hot metal 5 used is less than 0.02% by mass, the decarburization reaction and the dephosphorization reaction occur from an early stage of the decarburization refining. The operation of a converter according to the second embodiment of the present invention is targeted at the latter half of the decarburization refining. Regardless of reaction patterns at the early stage of the decarburization refining, the same reaction patterns occur in the latter half of the decarburization refining. Thus, the reaction patterns in the early stage of the decarburization refining are not a problem.

In the second embodiment of the present invention, a state in the converter during decarburization refining in the converter 2 is monitored by photographing the throat combustion flame 12 using the spectroscopic camera 6 and analyzing the resulting emission spectrum. The photographing of the throat combustion flame 12 using the spectroscopic camera 6 and the analysis of the emission spectrum are preferably performed at measurement time intervals $\Delta t$ of 1 to 10 seconds from the viewpoint of improving the productivity and the iron yield.

The emission spectrum obtained by photographing is retrievably recorded in the image analyzer 7. In the image analyzer 7, analyses for identifying the emission wavelengths and for calculating emission intensity at each wavelength are performed in a wavelength range of 580 to 620 nm of the resulting emission spectrum of the throat combustion flame 12.

In the second embodiment of the present invention, a temporal change in emission intensity at each wavelength is calculated, the change of the state in the converter is presumed from the temporal change in emission intensity and used for monitoring the operation of the converter. Specifically, the rate of change in emission intensity at a specific wavelength represented by formula (1) or the rate of change in the moving average of the emission intensity at the specific wavelength represented by formula (2) is calculated and used as a temporal change in the emission intensity of the emission spectrum obtained by photographing the throat combustion flame 12.

The specific wavelength used for the calculation of the rate of change in emission intensity and the rate of change in the moving average of the emission intensity is determined by measuring, in advance, a wavelength at which the largest amount of change in emission intensity is observed during decarburization refining in the wavelength range of 580 to 620 nm or by monitoring multiple wavelengths in the wavelength range during the decarburization refining and determining a wavelength at which the largest amount of change in emission intensity is observed in each time.

In the method for operating a converter according to the second embodiment of the present invention, a temporal change in emission intensity is calculated at the specific wavelength in the range of 580 to 620 nm of the measured emission spectrum. In the latter half of decarburization refining, one or two or more of a reduction in the flow rate of the oxidizing gas blown from the top blowing lance, a reduction in lance height, and an increase in the flow rate of an oxidizing gas or an inert gas blown through the bottom blowing tuyere are performed at the time when the rate of change in emission intensity defined by formula (1) satisfies a preset threshold value (for example, 1.8) or less or at the time when the rate of change in the moving average of emission intensity defined by formula (2) satisfies a preset threshold value (for example, 1.6) or less.

The phrase "latter half of latter half of decarburization refining" used here refers to a period after 1/2 of the total oxygen supply scheduled for the charge is supplied. The phrase "preset threshold value" used in the second embodiment refers to each of the rate of change in emission intensity and the rate of change in the moving average of emission intensity at the time when carbon concentration in molten iron is less than about 0.45%, both rates being determined in advance by performing a preliminary test for each converter.

Furthermore, at this point, more preferably, the lance height of the top blowing lance is reduced or the flow rate of the oxidizing gas or the inert gas blown through the bottom blowing tuyere is increased, simultaneously with a reduction in the flow rate of the oxidizing gas blown from the top blowing lance. The adjustments enable an improvement in oxygen efficiency for decarburization, the suppression of the peroxidative state of molten iron in the converter, the inhibition of an excessive increase in iron oxide concentration in slag, and an improvement in iron yield.

At the time when each of the rate of change in emission intensity defined by formula (1) and the rate of change in the moving average of emission intensity defined by formula (2) satisfies the preset threshold value or less, the carbon concentration in molten iron is believed to be a critical carbon concentration or less. The critical carbon concentration varies depending on a force to stir molten iron of the top-blown gas and the bottom-blown gas and the flow rate of the oxidizing gas, and is about 0.45% or less by mass. In the case where the decarburization reaction rate is limited by the mass transfer of carbon in molten iron, a portion of the blown oxidizing gas is in a state where it is easily accumulated as iron oxide in slag. Thus, excess supply of the oxidizing gas leads to a decrease in oxygen efficiency for decarburization and a decrease in iron yield.

In the method for operating a converter according to the second embodiment of the present invention, after the rate-determining step of the decarburization reaction is changed to the mass transfer of carbon in molten iron, in other words, at the time when each of the rate of change in emission intensity and the rate of change in the moving average of emission intensity satisfies the preset threshold value or less, one or more of a reduction in the flow rate of the oxidizing gas blown from the top blowing lance, the reduction in lance height, and an increase in the flow rate of the oxidizing gas or the inert gas blown through the bottom blowing tuyere are adjusted, thereby suppressing the peroxidative state of molten iron in the converter to reduce an excessive increase in iron oxide concentration in slag.

The amount of reduction in the flow rate of the oxidizing gas blown from the top blowing lance, the amount of reduction in the lance height of the top blowing lance, and the amount of increase in the flow rate of the oxidizing gas or the inert gas blown through the bottom blowing tuyere are preferably determined in advance on the basis of, for example, the ratio of a force to stir molten iron to the flow rate of the oxidizing gas.

The converter system 1 suited to carry out the second embodiment of the present invention is preferably configured to transmit a control signal from the control computer 8 to the lance-height control device 9 so as to reduce the lance height, to transmit a control signal to the oxidizing-gas flow rate control device 10 so as to reduce the flow rate of the oxidizing gas jetted, to transmit a control signal to the bottom-blown gas flow rate control device 11 so as to increase the flow rate of the oxidizing gas or inert gas blown, or to simultaneously transmit all of these control signals at each time when the rate of change in emission intensity defined by formula (1) satisfies a preset threshold value or less or at each time when the rate of change in the moving average of emission intensity defined by formula (2) satisfies a preset threshold value or less.

The oxidizing gas blown from the top blowing lance 3 is typically oxygen gas. For example, a mixed gas of oxygen gas and a rare gas, such as argon gas or helium gas, or nitrogen gas, air, or oxygen-enriched air may be used. The term "oxidizing gas" used here refers to an oxygen-containing gas having an oxygen concentration equal to or higher than air. The gas blown through the bottom blowing tuyere 4 is an inert gas or an oxidizing gas. In the case of blowing an oxidizing gas, the oxidizing gas functions as an oxidizing gas for oxidation refining and also functions as a stirring gas.

The above description is an example in which the state in the converter 2 during the decarburization refining is monitored in real time by photographing the throat combustion flame 12. The state in the converter 2 during the decarburization refining can also be monitored in real time by measuring the emission spectrum of the tap hole combustion flame 20 observed from the tap hole of the converter 2 in the same manner as the throat combustion flame 12. The measurement of the emission spectrum of the tap hole combustion flame 20 has been described in the first embodiment, and thus the description is omitted.

[Third Embodiment]

In recent years, in order to meet increasing demands for steel products having higher strength and greater functionality, the pretreatment of hot metal has been widely performed in each of the converters used in the first and second embodiments. That is, as the pretreatment of hot metal, desiliconization treatment and dephosphorization treatment of hot metal are performed in the converter. Subsequent to the pretreatment, the decarburization refining of hot metal left in the converter is performed in the same converter.

Various methods are employed for the combination of the pretreatment of hot metal and the decarburization treatment of hot metal using a converter. For example, the following methods are employed.

[1] A method is employed in which two converters are used, one of the converters is used as a pretreatment converter, and the other is used as a decarburization converter in which hot metal that has been subjected to pretreatment in the pretreatment converter is subjected to decarburization refining. In this method, desiliconization treatment and dephosphorization treatment are performed in this order in the pretreatment converter. After the desiliconization treatment step, a deslagging step of discharging at least part of slag (referred to as "desiliconized slag") formed in the desiliconization treatment from the pretreatment converter is provided, thereby reducing the amount of a CaO-based flux added in the dephosphorization treatment step. In the decarburization converter, hot metal that has been discharged from the pretreatment converter into a hot metal-holding vessel, that contains substantially no silicon, and that has a low phosphorus content is subjected to decarburization refining.

This method may not include the deslagging step between the desiliconization treatment step and the dephosphorization treatment step. In this case, after the dephosphorization treatment step, a tapping step of discharging hot metal that has been subjected to dephosphorization treatment from the converter is provided. The hot metal discharged in the tapping step is charged into the decarburization converter. Thus, the decarburization converter is not contaminated with slag formed in the dephosphorization treatment step, thereby reducing the amount of the CaO-based flux used in the decarburization converter.

Examples of the CaO-based flux used include quicklime, limestone, hydrated lime, and dolomite. In the case of the dephosphorization treatment step, decarburized slag (slag formed by decarburization refining) is also used as a CaO-based flux.

[2] A method is employed in which one converter is used, desiliconization treatment, dephosphorization treatment, and decarburization refining are performed in this order, and a deslagging step of discharging at least part of slag in the converter is included between the dephosphorization treatment step and the decarburization refining step. Because at least part of slag formed in the desiliconization treatment step and the dephosphorization treatment step is discharged, the amount of the CaO-based flux used in the decarburization refining step is reduced. This method may further include a slagging step between the desiliconization treatment step and the dephosphorization treatment step or may not include a deslagging step between the dephosphorization treatment step and the decarburization refining step.

The desiliconization treatment step described in [1] and [2] above targets hot metal having a silicon content of 0.02% or more by mass. Thus, the end of the desiliconization treatment step in the pretreatment can be determined according to a method for determining the end of a desiliconization period described in the first embodiment.

In the desiliconization treatment step of supplying hot metal containing 0.02% or more by mass silicon in the converter 2 with the oxidizing gas from the top blowing lance 3 to subject the hot metal to desiliconization, the emission spectrum of the throat combustion flame 12 issuing from the throat of the converter 2 or the emission spectrum of the tap hole combustion flame 20 observed through the tap hole 19 of the converter 2 is measured. The rate of change in emission intensity defined by formula (1) or the rate of change in the moving average of emission intensity defined by formula (2) is calculated as a temporal change in emission intensity in a wavelength range of 580 to 620 nm of the emission spectrum measured. The deslagging step of discharging the slag formed in the desiliconization treatment step or the desiliconization treatment step and the dephosphorization treatment step is performed at the time when the calculated rate of change in emission intensity or rate of change in the moving average of emission intensity exceeds a preset threshold value, at the time when a predetermined period of time elapses based on the time when the calculated rate exceeds a preset threshold value, or at the time when a predetermined amount of oxygen is supplied.

In this way, the end of the desiliconization treatment step or the ends of the desiliconization treatment step and the dephosphorization treatment step can be reliably grasped. The reliable grasping of the end of the desiliconization treatment step or the ends of the desiliconization treatment step and the dephosphorization treatment step result in the prevention of the peroxidation of molten iron described above, sufficient oxidative removal in slag, a reduction in the amount of CaO-based flux used in the subsequent dephosphorization treatment step or decarburization refining step, and the prevention of excessive decarburization in molten iron. Accordingly, the amount of carbon carried over the subsequent dephosphorization treatment step or decarburization refining step is increased to save a heat-up material such as a recarburizer, thereby enabling an economically advantageous operation.

Additionally, in the decarburization refining step of subjecting pretreated hot metal to decarburization refining, the method described in the second embodiment can be employed in the latter half of the decarburization refining, the method including controlling the top-blowing conditions and the bottom-blowing conditions in accordance with carbon concentration in molten iron to reduce iron oxide in slag.

Specifically, in the decarburization refining step of subjecting pretreated hot metal to decarburization refining, the emission spectrum of the throat combustion flame 12 issuing from the throat of the converter 2 or the emission spectrum of the tap hole combustion flame 20 observed through the tap hole 19 of the converter 2 is measured. The rate of change in emission intensity defined by formula (1) or the rate of change in the moving average of emission intensity defined by formula (2) is calculated as a temporal change in emission intensity in a wavelength range of 580 to 620 nm of the emission spectrum measured. One or two or more of a reduction in the flow rate of the oxidizing gas blown from the top blowing lance, a reduction in the lance height of the top blowing lance, and an increase in the flow rate of the oxidizing gas or the inert gas blown through the bottom blowing tuyere are adjusted at the time when the calculated rate of change in emission intensity or rate of change in the moving average of emission intensity satisfies a preset threshold value or less in the latter half of the decarburization refining step.

In this way, an excessive increase in iron oxide concentration in slag at the time of the completion of the decarburization refining step can be reduced to improve the iron yield.

In the above description, formulae (1) and (2) are used as the temporal change in emission intensity. In the case of carrying out the present invention, the temporal change in emission intensity is not limited to formulae (1) or (2). Another formula can be used. For example, formula (6) using a moving average can be used.

[Math. 3]

$$\text{Rate of change in moving average of emission intensity A} = \left[ \left( \sum_{i=0}^{S} I_{n-i} \right) / \left( \sum_{i=0}^{S} I_{n-1-i} \right) \right] - 1$$

$$\cdots (6)$$

where $I_n$ is emission intensity (a.u.) at a specific wavelength at time $T_n$, $I_{n-i}$ is emission intensity (a.u.) at the specific wavelength at time $T_{n-i}$ ($\Delta t \times i$) second(s) before time $T_n$, $I_{n-1-i}$ is emission intensity (a.u.) at the specific wavelength at time $T_{n-1-i}$ ($\Delta t \times i$) second (s) before time $T_{n-1}$ ($\Delta t \times 1$) second(s) before time $T_n$, S is the number of terms added in the moving average (an integer of 0 or more), and $\Delta t$ is a measurement time interval (s).

Formula (6) is determined as described below.

Time $T_n$ is used as a reference. Values of emission intensity $I_{n-i}$ at time $T_{n-i}$ at the specific wavelength are determined. Specifically, a total of (S + 1) values of emission intensity is determined at time $T_n$, time $T_{n-1}$ ($\Delta t \times 1$) second(s) before time $T_n$, time $T_{n-2}$ ($\Delta t \times 2$) seconds before time $T_n$, ..., and time $T_{n-S}$ ($\Delta t \times S$) second (s) before time $T_n$. The values are added up (summed), and the moving average of the emission intensity based on time $T_n$ is calculated using formula (7) below. Note that $I_{n-i}$ is emission intensity (a.u.) at the specific wavelength at time $T_{n-i}$ ($\Delta t \times i$) second(s) before time $T_n$. Formula (7) is identical to formula (4) described above.

[Math. 4]

$$\text{Moving average of emission intensity based on } T_n = \left( \sum_{i=0}^{S} I_{n-i} \right) / (S+1) \quad \cdots (7)$$

Time $T_{n-1}$ ($\Delta t \times 1$) second (s) before $T_n$ is used as a reference. Similarly, values of emission intensity $I_{n-1-i}$ at time $T_{n-1-i}$ at the specific wavelength are determined. Specifically, a total of (S + 1) values of emission intensity (where S is an integer of 0 or more) is determined at time $T_{n-1}$, time $T_{n-1-1}$ ($\Delta t \times 1$) second (s) before time $T_{n-1}$, time $T_{n-1-2}$ ($\Delta t \times 2$) seconds before time $T_{n-1}$, ..., and time $T_{n-1-S}$ ($\Delta t \times S$) second (s) before time $T_{n-1}$. The values are added up (summed), and the moving average of the emission intensity based on time $T_{n-1}$ is calculated using formula (8) below. Note that $I_{n-1-i}$ is emission intensity (a.u.) at the specific wavelength at time $T_{n-1-i}$ ($\Delta t \times i$) second(s) before time $T_{n-1}$ ($\Delta t \times 1$) second(s) before time $T_n$.

[Math. 5]

$$\text{Moving average of emission intensity based on } T_{n-1} = \left( \sum_{i=0}^{S} I_{n-1-i} \right) / (S+1) \quad \cdots (8)$$

Formula (6) described above is determined from the moving average of emission intensity calculated using formula (7) based on time $T_n$ and the moving average of emission intensity calculated using formula (8) based on time $T_{n-1}$. In this specification, in order to distinguish the rate of change in the moving average of emission intensity defined by formula (6) from the rate of change in the moving average of emission intensity defined by formula (2), the rate of change in the moving average of emission intensity defined by formula (6) is referred to as a "rate of change in the moving average of emission intensity A". The rate of change in emission intensity defined by formula (1) is the case of the rate of change in the moving average of emission intensity A defined by formula (6) when S = 0. In the case of the rate of change in the moving average of emission intensity defined by formula (2) in which m = 1 and S is the same value as that of S used in formula (6), the rate of change in the moving average of emission intensity defined by formula (2) targets the same measurement data as that of the rate of change in the moving average of emission intensity A defined by formula (6). In other words, formula (2) can target the largest number of measurement data sets.

EXAMPLES

The present invention will be further described by examples.

[Example 1]

The desiliconization, dephosphorization, and decarburization of the hot metal 5 were performed by oxidation refining of the hot metal 5 with a 300-ton-capacity top-bottom blown converter (top-blown oxygen gas, bottom-blown argon gas) having the same structure as the converter 2 illustrated in Fig. 4. The top blowing lance 3 used included five Laval-nozzle-type jet nozzles arranged on its tip portion, the jet nozzles being arranged concentrically to the axial center of the top blowing lance at regular intervals and at a jet angle of 15°. The jet nozzles had a throat diameter $d_t$ of 73.6 mm and an exit diameter $d_e$ of 78.0 mm.

After scrap iron was charged into the converter, 300 tons of hot metal that had been subjected to desulfurization treatment in advance and that had a temperature of 1,260°C to 1,280°C was charged into the converter. Table 1 presents the chemical composition of the hot metal.

[Table 1]

| Chemical composition of hot metal (% by mass) | | | | | | | Temperature of hot metal (°C) |
|---|---|---|---|---|---|---|---|
| C | Si | Mn | P | S | Cr | Fe | |
| 4.3-4.7 | 0.32-0.43 | 0.16-0.27 | 0.112-0.126 | 0.003-0.016 | tr | Bal. | 1260-1280 |

The oxidation refining of the hot metal was started by blowing oxygen gas serving as an oxidizing gas from the top blowing lance on the surface of the hot metal while argon gas serving as a stirring gas was blown into the hot metal through the bottom blowing tuyere 4. The amount of scrap iron charged was adjusted in such a manner that the temperature of molten steel after the completion of the oxidation refining was 1,650°C.

Oxidation refining was performed by charging quicklime serving as a CaO-based flux from a hopper (not illustrated) located above the converter during oxygen blowing until carbon concentration in molten iron was 0.05% by mass. The amount of quicklime charged was adjusted in such a manner that the basicity ((CaO, % by mass)/(SiO$_2$, % by mass)) of slag formed in the converter was 2.5.

The throat combustion flame 12 seen from the gap between the throat of the converter 2 and a movable hood was continuously photographed with the spectroscopic camera 6 located almost in front of the converter 2 at predetermined measurement time intervals Δt of 1 to 10 seconds during the oxygen blowing. From the photographed image, an emission spectrum (image data) was measured by the image analyzer 7. Analyses for identifying emission wavelengths and for calculating emission intensity $I_n$ at each wavelength were performed at each point of time in a wavelength range of 580 to 620 nm of the resulting emission spectrum. A wavelength (specific wavelength) used was 610 nm. The analyses were performed by line analysis on a freely-selected scan line of the image data.

As a temporal change in emission intensity, the rate of change in emission intensity defined by formula (1) was calculated using the resulting emission intensity at the specific wavelength at each point of time and used as an index of a state in the converter at each point of time, and the operation of the converter was monitored. As presented in Table 2, one or two or more of the flow rate of the oxidizing gas from the top blowing lance, the lance height of the top blowing lance, and the flow rate of the bottom-blown gas were adjusted at each time when the resulting rate of change in emission intensity satisfied more than 1.8 after the start of the blowing of oxygen gas from the top blowing lance. Specifically, the flow rate of the oxidizing gas from the top blowing lance was adjusted so as to be increased from 833 Nm$^3$/min to 1,000 Nm$^3$/min. The lance height was adjusted so as to be reduced from 3.0 m to 2.55 m. The flow rate of the bottom-blown gas was adjusted so as to be reduced from 30 Nm$^3$/min to 15 Nm$^3$/min.

[Table 2]

| Operation No. | Specific wavelength (nm) | Rate of change in emission intensity* | Change of top-bottom blowing condition** | | | Refining time (min) | Dust per unit production (kg/molten steel-t) | Remarks |
|---|---|---|---|---|---|---|---|---|
| | | | Flow rate of oxygen gas from top blowing lance | Lance height | Flow rate of bottom-blown gas | | | |
| 1 | 610 | 1.93 | ○ | ○ | ○ | 15.1 | 17.5 | Example |
| 2 | 610 | 1.87 | ○ | ○ | × | 15.0 | 17.6 | Example |
| 3 | 610 | 1.92 | × | × | ○ | 14.9 | 18.5 | Example |
| 4 | 610 | 1.88 | ○ | × | × | 15.0 | 18.4 | Example |
| 5 | 610 | 1.91 | × | ○ | × | 14.9 | 17.9 | Example |
| 6 | 610 | 1.96 | ○ | × | ○ | 15.0 | 18.4 | Example |
| 7 | 610 | 2.27 | × | × | ○ | 14.9 | 18.5 | Example |
| 8 | 610 | 2.07 | × | ○ | × | 15.0 | 18.4 | Example |
| 9 | - | - | ○ | ○ | ○ | 14.9 | 20.4 | Comparative example |
| *) The rate of change in emission intensity at the time of changing top-bottom blowing conditions(=($I_n/I_{n-1}$)-1) **) ○: changed, ×: unchanged | | | | | | | | |

The adjustments were performed by immediately transmitting control signals from the control computer 8 to the lance-height control device 9, the oxidizing-gas flow rate control device 10, and the bottom-blown gas flow rate control device 11 for operation at each time when the rate of change in emission intensity satisfied more than 1.8. In the case where only a subset of the control devices was operated among three control devices, i.e., the lance-height control device 9, the oxidizing-gas flow rate control device 10, and the bottom-blown gas flow rate control device 11, a control signal was not transmitted from the control computer 8 to a control device that was not required and was transmitted only to a control device that was required.

As a comparative example, an operation was performed in which the flow rate of the oxidizing gas, the lance height, and the flow rate of the bottom-blown gas were adjusted so as to meet the top-blowing conditions and the bottom-blowing conditions described above at the time when silicon concentration in molten iron was estimated at less than 0.02% by mass on the basis of thermal material calculations by an existing process computer, regardless of the rate of change in emission intensity defined by formula (1).

In the latter half of the oxygen blowing, in each operation, the flow rate of the oxidizing gas from the top blowing lance was reduced from 1,000 $Nm^3$/min to 833 $Nm^3$/min, the lance height of the top blowing lance was reduced from 2.5 m to 2.0 m, and the flow rate of the bottom-blown gas was increased from 15 $Nm^3$/min to 30 $Nm^3$/min at the time when carbon concentration in molten iron was estimated at 0.35% by mass on the basis of thermal material calculations by the existing process computer.

After the completion of the oxygen blowing, all dust generated during each oxygen blowing operation was collected and weighed to determine dust per unit production (kg/molten steel-t). Table 2 also presents the results.

In each of the examples, the dust per unit production was lower than the comparative example, and the iron yield was improved. The examples and the comparative example were almost identical in terms of the refining time.

[Example 2]

Under the same converter operating conditions as in Example 1, the throat combustion flame 12 seen from the gap between the throat of the converter 2 and a movable hood was photographed with the spectroscopic camera 6 located almost in front of the converter 2 during oxygen blowing. From the photographed image, the rate of change in the moving average of emission intensity was determined using formula (2) where the number S of terms added in the moving average = 30, and a natural number m = 30. The operation of the converter was monitored using the determined rate of change in the moving average of emission intensity as an index of the state in the converter at each point of time. Here, as the "preset threshold value", 0.4 was used. The measurement time interval $\Delta t$ was 1 to 10 seconds. A wavelength (specific wavelength) used was 610 nm.

One or two or more of the flow rate of the oxidizing gas from the top blowing lance, the lance height of the top blowing lance, and the flow rate of the bottom-blown gas were adjusted at each time when the resulting rate of change in the moving average of emission intensity exceeded a threshold value of 0.4 after the start of the blowing of oxygen gas from the top blowing lance as presented in Table 3. Specifically, the flow rate of the oxidizing gas from the top blowing lance was adjusted so as to be increased from 833 $Nm^3$/min to 1,000 $Nm^3$/min. The lance height was adjusted so as to be reduced from 3.0 m to 2.5 m. The flow rate of the bottom-blown gas was adjusted so as to be reduced from 30 $Nm^3$/min to 15 $Nm^3$/min.

As comparative examples, operations were performed in which one or more of the flow rate of the oxidizing gas, the lance height, and the flow rate of the bottom-blown gas were adjusted so as to meet the top-blowing conditions and the bottom-blowing conditions described above at the time when silicon concentration in molten iron was estimated at less than 0.02% by mass on the basis of thermal material calculations by an existing process computer, regardless of the rate of change in the moving average of emission intensity defined by formula (2).

[Table 3]

| Operation No. | Specific wavelength (nm) | Rate of change in moving average of emission intensity* | Change of top-bottom blowing condition** | | | Refining time (min) | Dust per unit production (kg/molten steel-t) | Remarks |
|---|---|---|---|---|---|---|---|---|
| | | | Flow rate of oxygen gas from top blowing lance | Lance height | Flow rate of bottom-blown gas | | | |
| 11 | 610 | 0.45 | ○ | ○ | ○ | 15.1 | 17.5 | Example |
| 12 | 610 | 0.41 | ○ | ○ | × | 15.0 | 17.6 | Example |
| 13 | 610 | 0.51 | × | × | ○ | 14.9 | 18.5 | Example |
| 14 | 610 | 0.60 | ○ | × | × | 15.0 | 18.4 | Example |
| 15 | 610 | 0.49 | × | ○ | × | 14.9 | 17.9 | Example |
| 16 | 610 | 0.47 | ○ | × | ○ | 15.0 | 18.4 | Example |
| 17 | - | - | ○ | × | × | 15.1 | 21.2 | Comparative example |
| 18 | - | - | ○ | ○ | ○ | 14.9 | 20.4 | Comparative example |

*) The rate of change in moving average of emission intensity at the time of changing top-bottom blowing conditions
**) ○: changed, ×: unchanged

After the completion of the oxygen blowing, all dust generated during each oxygen blowing operation was collected and weighed to determine dust per unit production (kg/molten steel-t). Table 3 also presents the results.

In each of the examples, the dust per unit production was lower than the comparative examples, and the iron yield was improved. The examples and the comparative examples were almost identical in terms of the refining time.

[Example 3]

Hot metal was subjected to oxidation refining as in Examples 1 and 2 using the same converter system (top-bottom blowing converter) as in Examples 1 and 2. The throat combustion flame 12 seen from the gap between the throat of the converter 2 and a movable hood was continuously photographed with the spectroscopic camera 6 at measurement time intervals $\Delta t$ of 1 second throughout oxygen blowing serving as oxidation refining, as in Examples 1 and 2. From the photographed image, an emission spectrum (image data) was measured and recorded by the image analyzer 7.

The resulting image data was analyzed offline. Regarding analysis, analyses for identifying the emission wavelengths and for calculating emission intensity $I_n$ at each wavelength were performed at each point of time in a wavelength range of 580 to 620 nm of the resulting emission spectrum (image data). The analyses were performed by line analysis on a freely-selected scan line of the image data.

The specific wavelength was determined to be 610 nm. As a temporal change in emission intensity, the rate of change in the moving average of emission intensity defined by formula (2) was calculated using the resulting emission intensity at the specific wavelength at each point of time at a total of six levels: the number S of terms added in the moving average was set at three levels of 0 (instantaneous value), 10, and 30, and the natural number m was set at four levels of 1, 10, 30, and 60. The time when the resulting rate of change in the moving average of emission intensity exceeded "a preset threshold value of 0.4" was determined as a "point of changing the top-blowing conditions and the bottom-blowing conditions" for each oxygen blowing operation.

From the trend graph of the resulting emission spectrum (image data), the "point of changing the top-blowing conditions and the bottom-blowing conditions" was determined by manual analysis". In the manual analysis, obvious noise such as the presence of a screen, e.g., a crane, is excluded. The oxygen blowing status presumed from the trend of a converter exhaust gas and so forth was comprehensively determined to specify the "point of changing the top-blowing conditions and the bottom-blowing conditions (timing of appropriate detection)".

The "point of changing the top-blowing conditions and the bottom-blowing conditions (point of change according to the present invention)" determined from the rate of change in the moving average of emission intensity defined by formula (2) was compared with the "point of changing the top-blowing conditions and the bottom-blowing conditions (timing of appropriate detection)" determined by the manual analysis. The case where the "point of changing the top-blowing conditions and the bottom-blowing conditions (timing of appropriate detection)" determined by the manual analysis is matched with the change point according to the present invention was referred to as "appropriate detection".

The case where the change point according to the present invention is earlier than the "point of changing the top-blowing conditions and the bottom-blowing conditions (timing of appropriate detection)" determined by the manual analysis is referred to as "overdetection". The case where the change point according to the present invention is later than the point determined by the manual analysis is referred to as "nondetection". The "nondetection" includes the case where the rate of change in the moving average of emission intensity defined by formula (2) does not exceed the "preset threshold value" to fail to determine the "point of changing the top-blowing conditions and the bottom-blowing conditions".

Table 4 presents the results of comparisons for each number S of terms added in the moving average as percentages (%) based on the total amount changed.

[Table 4]

|  | Number S of terms added in moving average | Natural number m | Percentage based on total amount changed (%) | | |
|---|---|---|---|---|---|
|  |  |  | Appropriate detection | Overdetection | Nondetection |
| Level 1 | 0 | 1 | 64 | 36 | 0 |
| Level 2 | 10 | 1 | 75 | 8 | 17 |
| Level 3 | 10 | 10 | 87 | 11 | 2 |
| Level 4 | 30 | 10 | 76 | 2 | 22 |
| Level 5 | 30 | 30 | 92 | 5 | 3 |
| Level 6 | 30 | 60 | 78 | 4 | 18 |

As presented in Table 4, in the calculation of the rate of change in the moving average of emission intensity defined by formula (2), the percentage (%) of "overdetection" when the number S of terms added in the moving average was 0 (instantaneous value) was higher than those in the cases where the numbers S of terms added in the moving average were 10 and 30.

In the case where the natural number m in formula (2) was larger than the number S of terms added in the moving average, the percentage (%) of "nondetection" was high. This demonstrated that in the calculation of the rate of change in the moving average of emission intensity defined by formula (2), the natural number m in formula (2) is preferably equal to or lower than the number S of terms added in the moving average from the viewpoint of achieving the appropriate detection of the "point of changing the top-blowing conditions and the bottom-blowing conditions".

[Example 4]

The decarburization refining of hot metal was performed with a 300-ton-capacity top-bottom blown converter (top-blown oxygen gas, bottom-blown argon gas) having the same structure as the converter 2 illustrated in Fig. 4. The top blowing lance 3 used included five Laval-nozzle-type jet nozzles arranged on its tip portion, the jet nozzles being arranged concentrically to the axial center of the top blowing lance at regular intervals and at a jet tilt angle of 15°. The jet nozzles had a throat diameter $d_t$ of 73.6 mm and an exit diameter $d_e$ of 78.0 mm.

After scrap iron was charged into the converter, hot metal that had been subjected to desulfurization treatment and dephosphorization treatment in advance and that had a temperature of 1,310°C to 1,360°C was charged into the converter. Table 5 presents the chemical composition of the hot metal.

[Table 5]

| Chemical composition of hot metal (% by mass) | | | | | | | Temperature of hot metal (°C) |
|---|---|---|---|---|---|---|---|
| C | Si | Mn | P | S | Cr | Fe | |
| 3.4-3.6 | 0.01-0.02 | 0.16-0.27 | 0.015-0.036 | 0.008-0.016 | tr | Bal. | 1310-1360 |

The decarburization refining of the hot metal was started by blowing oxygen gas serving as an oxidizing gas from the top blowing lance 3 on the surface of the hot metal while argon gas serving as a stirring gas was blown into the hot metal through the bottom blowing tuyere 4. The amount of scrap iron charged was adjusted in such a manner that the temperature of molten steel after the completion of the decarburization refining was 1,650°C.

The decarburization refining was performed was performed by charging quicklime serving as a CaO-based flux from a hopper (not illustrated) located above the converter during the decarburization refining until carbon concentration in molten iron was 0.05% by mass. The amount of quicklime charged was adjusted in such a manner that the basicity (($CaO$, % by mass)/($SiO_2$, % by mass)) of slag formed in the converter was 2.5.

The throat combustion flame 12 seen from the gap between the throat of the converter 2 and a movable hood was continuously photographed with the spectroscopic camera 6 located almost in front of the converter 2 at predetermined measurement time intervals $\Delta t$ of 1 to 10 seconds during the decarburization refining. From the photographed image, an emission spectrum (image data) was measured by the image analyzer 7. Analyses for identifying emission wavelengths and for calculating emission intensity $I_n$ at each wavelength were performed at each point of time in a wavelength range of 580 to 620 nm of the resulting emission spectrum. A wavelength (specific wavelength) used was 610 nm. The analyses were performed by line analysis on a freely-selected scan line of the image data.

As a temporal change in emission intensity, the rate (instantaneous value) of change in emission intensity defined by formula (1) was calculated using the resulting emission intensity at the specific wavelength at each point of time and used as an index of a state in the converter at each point of time, and the operation of the converter was monitored. The "threshold value" was 1.8. As presented in Table 6, one or two or more of the flow rate of the oxidizing gas from the top blowing lance, the lance height of the top blowing lance, and the flow rate of the bottom-blown gas were adjusted at the time when the resulting rate of change in emission intensity satisfied 1.8 or less in the latter half of the decarburization refining. Specifically, the flow rate of the oxidizing gas from the top blowing lance was adjusted so as to be reduced from 1,000 $Nm^3$/min to 833 $Nm^3$/min. The lance height was adjusted so as to be reduced from 3.0 m to 2.5 m. The flow rate of the bottom-blown gas was adjusted so as to be increased from 15 $Nm^3$/min to 30 $Nm^3$/min.

[Table 6]

| Operation No. | Specific wavelength (nm) | Rate of change in emission intensity* | Change of top-bottom blowing condition** | | | Refining time (min) | Total amount of iron in slag at completion of decarburization refining (Total Fe, % by mass) | Remarks |
| --- | --- | --- | --- | --- | --- | --- | --- | --- |
| | | | Flow rate of oxygen gas from top blowing lance | Lance height | Flow rate of bottom-blown gas | | | |
| 21 | 610 | 1.52 | ○ | ○ | ○ | 12.3 | 21.0 | Example |
| 22 | 610 | 1.47 | ○ | ○ | × | 12.3 | 21.7 | Example |
| 23 | 610 | 1.38 | × | × | ○ | 12.2 | 23.2 | Example |
| 24 | 610 | 1.55 | ○ | × | × | 12.3 | 22.4 | Example |
| 25 | 610 | 1.29 | × | ○ | × | 12.2 | 23.8 | Example |
| 26 | 610 | 1.41 | ○ | × | ○ | 12.3 | 21.8 | Example |
| 27 | - | - | ○ | ○ | ○ | 12.2 | 25.0 | Comparative example |

*) The rate of change in emission intensity at the time of changing top-bottom blowing conditions $(=(I_n/I_{n-1})-1)$
**) ○: changed, ×: unchanged

EP 3 620 542 B1

The adjustments were performed by immediately transmitting control signals from the control computer 8 to the lance-height control device 9, the oxidizing-gas flow rate control device 10, and the bottom-blown gas flow rate control device 11 for operation at each time when the rate of change in emission intensity satisfied 1.8 or less. In the case where only a subset of the control devices was operated among the three control devices, i.e., the lance-height control device 9, the oxidizing-gas flow rate control device 10, and the bottom-blown gas flow rate control device 11, a control signal was not transmitted from the control computer 8 to a control device that was not required and was transmitted only to a control device that was required.

As a comparative example, the flow rate of the oxidizing gas, the lance height, and the flow rate of the bottom-blown gas were adjusted so as to meet the top-blowing conditions and the bottom-blowing conditions described above at the time when carbon concentration in molten iron was estimated at 0.45% by mass on the basis of thermal material calculations by an existing process computer, regardless of the rate of change in emission intensity defined by formula (1).

After the completion of the decarburization refining, the total iron content (Total Fe) in slag was examined by X-ray fluorescence analysis. Table 6 also presents the results.

The total iron content of slag in each of the examples was lower than that in the comparative example, and the iron yield was improved. The examples and the comparative example were almost identical in terms of the refining time.

[Example 5]

As with Example 4, the decarburization refining of hot metal was performed with a 300-ton-capacity top-bottom blown converter (top-blown oxygen gas, bottom-blown argon gas) having the same structure as the converter 2 illustrated in Fig. 4. The top blowing lance 3 used included five Laval-nozzle-type jet nozzles arranged on its tip portion, the jet nozzles being arranged concentrically to the axial center of the top blowing lance at regular intervals and at a jet tilt angle of 15°. The jet nozzles had a throat diameter $d_t$ of 73.6 mm and an exit diameter $d_e$ of 78.0 mm.

After scrap iron was charged into the converter, hot metal that had been subjected to desulfurization treatment and dephosphorization treatment in advance and that had a temperature of 1,310°C to 1,360°C was charged into the converter. Table 5 presents the chemical composition of the hot metal.

The decarburization refining of the hot metal was started by blowing oxygen gas serving as an oxidizing gas from the top blowing lance 3 on the surface of the hot metal while argon gas serving as a stirring gas was blown into the hot metal through the bottom blowing tuyere 4. As with Example 4, the amount of scrap iron charged was adjusted in such a manner that the temperature of molten steel after the completion of the decarburization refining was 1,650°C.

As with Example 4, the decarburization refining was performed by charging quicklime serving as a CaO-based flux from a hopper (not illustrated) located above the converter during the decarburization refining until carbon concentration in molten iron was 0.05% by mass. The amount of quicklime charged was adjusted in such a manner that the basicity (($CaO$, % by mass)/($SiO_2$, % by mass)) of slag formed in the converter was 2.5.

As with Example 4, the throat combustion flame 12 seen from the gap between the throat of the converter and a movable hood was continuously photographed with the spectroscopic camera 6 located almost in front of the converter at predetermined measurement time intervals $\Delta t$ of 1 to 10 seconds during the decarburization refining. From the photographed image, an emission spectrum (image data) was measured by the image analyzer 7. Analyses for identifying emission wavelengths and for calculating emission intensity $I_n$ at each wavelength were performed at each point of time in a wavelength range of 580 to 620 nm of the resulting emission spectrum. A wavelength (specific wavelength) used was 610 nm. The analyses were performed by line analysis on a freely-selected scan line of the image data.

As a temporal change in emission intensity, the rate of change in the moving average of emission intensity defined by formula (2) was calculated using the resulting emission intensity at the specific wavelength at each point of time and used as an index of a state in the converter at each point of time, and the operation of the converter was monitored. The calculation of the rate of change in the moving average of emission intensity was performed using the moving average where in formula (2), m = 1, and S = 10.

In the converter used, the "preset threshold value" of the rate of change in the moving average of emission intensity defined by formula (2) was 1.6 in the case where m = 1 and where S = 10.

As presented in Table 7, one or two or more of the flow rate of oxygen gas from the top blowing lance, the lance height of the top blowing lance, and the flow rate of the bottom-blown gas were adjusted at the time when the resulting rate of change in the moving average of emission intensity was a value presented in Table 7. Specifically, as with Example 4, the flow rate of oxygen gas from the top blowing lance was adjusted so as to be reduced from 1,000 $Nm^3$/min to 833 $Nm^3$/min. The lance height was adjusted so as to be reduced from 3.0 m to 2.5 m. The flow rate of the bottom-blown gas was adjusted so as to be increased from 15 $Nm^3$/min to 30 $Nm^3$/min.

[Table 7]

| Operation No. | Specific wavelength | Rate of change in moving average of emission intensity* | Change of top-bottom blowing condition** | | | Refining time (min) | Total amount of iron in slag at completion of decarburization refining (Total Fe, % by mass) | Remarks |
|---|---|---|---|---|---|---|---|---|
| | | | Flow rate of oxygen gas from top blowing lance | Lance height | Flow rate of bottom-blown gas | | | |
| 31 | 610 | 1.44 | ○ | ○ | ○ | 12.3 | 21.0 | Example |
| 32 | 610 | 1.41 | ○ | ○ | × | 12.3 | 21.7 | Example |
| 33 | 610 | 1.32 | × | × | ○ | 12.2 | 23.2 | Example |
| 34 | 610 | 1.49 | ○ | × | × | 12.3 | 22.4 | Example |
| 35 | 610 | 1.26 | × | ○ | × | 12.2 | 213.8 | Example |
| 36 | 610 | 1.39 | ○ | × | ○ | 12.3 | 21.3 | Example |
| 37 | 610 | 1.58 | ○ | ○ | ○ | 12.2 | 22.2 | Example |
| 38 | - | - | ○ | ○ | × | 12.4 | 25.3 | Comparative example |
| 39 | - | - | ○ | ○ | ○ | 12.2 | 25.0 | Comparative example |

*) The rate of change in emission intensity at the time of changing top-bottom blowing conditions
**) ○:changed, ×: unchanged

The adjustments were performed by immediately transmitting control signals from the control computer 8 to the lance-height control device 9, the oxidizing-gas flow rate control device 10, and the bottom-blown gas flow rate control device 11 for operation at the time when the rate of change in the moving average of emission intensity was a value presented in Table 7.

As comparative examples, one or more of the lance height, the flow rate of the oxidizing gas, and the flow rate of the bottom-blown gas were adjusted so as to meet the top-blowing conditions and the bottom-blowing conditions described above at the time when carbon concentration in molten iron was estimated at 0.45% by mass on the basis of thermal material calculations by an existing process computer, regardless of the rate of change in the moving average of emission intensity defined by formula (2).

After the completion of the decarburization refining, the total iron content (Total Fe) in slag was examined by X-ray fluorescence analysis. Table 7 also presents the results.

As with Example 4, in each of the examples in which one or two or more of the flow rate of oxygen gas from the top blowing lance, the lance height of the top blowing lance, and the flow rate of the bottom-blown gas were adjusted at the time when the rate of change in the moving average of emission intensity satisfied the "preset threshold value" (here, 1.6) or less, the total iron content in slag was lower than those in the comparative examples, and the iron yield was improved. The examples and the comparative examples were almost identical in terms of the refining time.

[Example 6]

Hot metal was subjected to decarburization refining as in Examples 4 and 5 using the same converter system. In each of 29 charges in total, the throat combustion flame 12 seen from the gap between the throat of the converter 2 and a movable hood was continuously photographed with the spectroscopic camera 6 at predetermined measurement time intervals $\Delta t$ of 1 to 10 seconds throughout oxygen blowing in the decarburization refining, as in Examples 4 and 5. From the photographed image, an emission spectrum (image data) was measured and recorded by the image analyzer 7.

The resulting image data was analyzed offline. Regarding analysis, analyses for identifying the emission wavelengths and for calculating emission intensity $I_n$ at each wavelength were performed at each point of time in a wavelength range of 580 to 620 nm of the resulting emission spectrum (image data). The analyses were performed by line analysis on a freely-selected scan line of the image data.

The specific wavelength was determined to be 610 nm. As a temporal change in emission intensity, the rate of change in the moving average of emission intensity defined by formula (2) was calculated using the resulting emission intensity at the specific wavelength at each point of time at three levels of the numbers S of terms added in the moving average: 0 (instantaneous value), 10, and 30. The natural number m was 1. The time when the resulting rate of change in the moving average of emission intensity was equal to or less than the "preset threshold value" was determined as a "point of changing the top-blowing conditions and the bottom-blowing conditions" for each operation.

From the trend graph of the resulting emission spectrum (image data), the "point of changing the top-blowing conditions and the bottom-blowing conditions" was determined by manual analysis". In the manual analysis, obvious noise such as the presence of a screen, e.g., a crane, is excluded, and the "point of changing the top-blowing conditions and the bottom-blowing conditions (timing of appropriate detection)" was determined.

The "point of changing the top-blowing conditions and the bottom-blowing conditions (point of change according to the present invention)" determined from the rate of change in the moving average of emission intensity defined by formula (2) was compared with the "point of changing the top-blowing conditions and the bottom-blowing conditions (timing of appropriate detection)" determined by the manual analysis. The case where the "point of changing the top-blowing conditions and the bottom-blowing conditions (timing of appropriate detection)" determined by the manual analysis is matched with the change point according to the present invention was referred to as "appropriate detection".

The case where the change point according to the present invention is 10 seconds or more earlier than the "point of changing the top-blowing conditions and the bottom-blowing conditions (timing of appropriate detection)" determined by the manual analysis is referred to as "overdetection". The case where the change point according to the present invention is 10 seconds or more later than the point determined by the manual analysis is referred to as "nondetection". The "nondetection" includes the case where the rate of change in the moving average of emission intensity defined by formula (2) is not the "preset threshold value" or less to fail to determine the "point of changing the top-blowing conditions and the bottom-blowing conditions".

Table 8 presents the results of comparisons for each number S of terms added in the moving average as percentages (%) based on the total amount changed.

[Table 8]

|  | Number S of terms added in moving average | Natural number m | Percentage based on total amount changed (%) | | | |
|---|---|---|---|---|---|---|
|  |  |  | Appropriate detection | Overdetection | Nondetection | |
| Level 11 | 0 | 1 | 62 | 38 | 0 | |
| Level 12 | 10 | 1 | 87 | 10 | 3 | |
| Level 13 | 30 | 1 | 84 | 9 | 7 | |

As presented in Table 8, in the calculation of the rate of change in the moving average of emission intensity defined by formula (2), the percentage (%) of "overdetection" when the number S of terms added in the moving average was 0 (instantaneous value) was higher than those in the cases where the numbers S of terms added in the moving average were 10 and 30. This demonstrated that in the calculation of the rate of change in the moving average of emission intensity defined by formula (2), a calculation using the moving average is preferred from the viewpoint of achieving the appropriate detection of the "point of changing the top-blowing conditions and the bottom-blowing conditions".

[Example 7]

Desiliconization treatment, dephosphorization treatment, and decarburization refining of the hot metal 5 were performed with two 300-ton-capacity top-bottom blown converters (top-blown oxygen gas, bottom-blown argon gas) each having the same structure as the converter 2 illustrated in Fig. 4. The desiliconization treatment and the dephosphorization treatment were performed using a first converter. The decarburization refining was performed using a second converter. The top blowing lance 3 used included five Laval-nozzle-type jet nozzles arranged on its tip portion, the jet nozzles being arranged concentrically to the axial center of the top blowing lance at regular intervals and at a jet tilt angle of 15°. The jet nozzles had a throat diameter $d_t$ of 73.6 mm and an exit diameter $d_e$ of 78.0 mm.
After scrap iron was charged into the first converter, 300 tons of hot metal that had been subjected to desulfurization treatment in advance and that had a temperature of 1,260°C to 1,280°C was charged into the first converter. Table 1 presents the chemical composition of the hot metal.
The desiliconization treatment of the hot metal was started by blowing oxygen gas serving as an oxidizing gas from the top blowing lance on the surface of the hot metal while nitrogen gas serving as a stirring gas was blown into the hot metal through the bottom blowing tuyere 4. The amount of scrap iron charged was adjusted in such a manner that the temperature of molten steel after the completion of the decarburization refining in the second converter was 1,650°C.
The throat combustion flame 12 seen from the gap between the throat of the converter 2 and a movable hood was continuously photographed with the spectroscopic camera 6 located almost in front of the converter 2 at predetermined measurement time intervals $\Delta t$ of 1 to 10 seconds during the oxygen blowing. The photographed image was analyzed by the image analyzer 7. An analysis for calculating emission intensity $I_n$ at a wavelength of 610 nm was performed at each point of time.
The rate of change in the moving average of emission intensity defined by formula (2), where the number S of terms added in the moving average = 30 and a natural number m = 30, was calculated using the resulting emission intensity at the specific wavelength at each point of time and used as an index of a state in the converter at each point of time, and the operation of the converter was monitored. A deslagging step of discharging desiliconized slag was performed at the time when the calculated rate of change in the moving average of emission intensity exceeded a threshold value of 0.4 as presented in Table 9. Here, the "desiliconized slag" refers to slag formed in the desiliconization treatment.

[Table 9]

| Operation No. | Specific wavelength (nm) | Rate of change in moving average of emission intensity* | Total amount of iron in desiliconized slag (Total Fe, % by mass) | Remarks |
|---|---|---|---|---|
| 41 | 610 | 0.48 | 9.6 | Example |

(continued)

| Operation No. | Specific wavelength (nm) | Rate of change in moving average of emission intensity* | Total amount of iron in desiliconized slag (Total Fe, % by mass) | Remarks |
|---|---|---|---|---|
| 42 | 610 | 0.52 | 10.1 | Example |
| 43 | 610 | 0.42 | 10.5 | Example |
| 44 | - | - | 13.1 | Comparative example |
| 45 | - | - | 15.2 | Comparative example |
| *) Rate of change in the moving average of emission intensity at the time when a deslagging step is performed. | | | | |

As comparative examples, the step of discharging the desiliconized slag was performed at the time when silicon concentration in molten iron was estimated at 0.02% by mass on the basis of thermal material calculations by an existing process computer, regardless of the rate of change in the moving average of emission intensity defined by formula (2).

The desiliconized slag discharged in the deslagging step was collected. The total iron content (Total Fe) in the slag was examined by X-ray fluorescence analysis. Table 9 also presents the analytical results of the total iron content (Total Fe) of the desiliconized slag. The total iron content of the desiliconized slag in each of the examples was lower than those in the comparative examples, and the iron yield was improved.

After the desiliconized slag was discharged, the hot metal left in the first converter was subjected to the dephosphorization treatment by charging quicklime serving as a CaO-based flux and blowing oxygen gas serving as an oxidizing gas from the top blowing lance on the surface of the hot metal until phosphorus concentration in molten iron was 0.035% by mass.

The hot metal was discharged from the first converter to a hot metal-holding vessel. The discharged hot metal was charged into the second converter. Oxygen gas serving as an oxidizing gas was blown from the top blowing lance on the surface of the hot metal to start the decarburization refining. The decarburization refining was performed by charging quicklime serving as a CaO-based flux from a hopper located above the converter during the decarburization refining until carbon concentration in molten iron was 0.05% by mass. The amount of quicklime charged was adjusted in such a manner that the basicity ((CaO, % by mass)/(SiO$_2$, % by mass)) of slag formed in the converter was 2.5.

Also in the decarburization refining, the spectrum of the throat combustion flame 12 was analyzed in the same manner as in the desiliconization treatment. The rate of change in the moving average of emission intensity defined by formula (2) (m = 1, S = 0) was calculated, and the operation of the converter was monitored. As presented in Table 10, one or two or more of the flow rate of oxygen gas from the top blowing lance, the lance height, and the flow rate of the bottom-blown gas were adjusted at each time when the rate of change in the moving average of emission intensity satisfied a threshold value (= 1.6) or less. Specifically, the flow rate of oxygen gas from the top blowing lance was adjusted so as to be reduced from 1,000 Nm$^3$/min to 833 Nm$^3$/min. The lance height was adjusted so as to be reduced from 2.5 m to 2.0 m. The flow rate of the bottom-blown gas was adjusted so as to be increased from 15 Nm$^3$/min to 30 Nm$^3$/min.

[Table 10]

| Operation No. | Specific wavelength (nm) | Rate of change in moving average of emission intensity* | Change of top-bottom blowing condition** | | | Refining time (min) | Total amount of iron in slag at completion of decarburization refining (Total Fe, % by mass) | Remarks |
| --- | --- | --- | --- | --- | --- | --- | --- | --- |
| | | | Flow rate of oxygen gas from top blowing lance | Lance height | Flow rate of bottom-blown gas | | | |
| 51 | 610 | 1.52 | ○ | ○ | ○ | 12.3 | 21.0 | Example |
| 52 | 610 | 1.47 | ○ | ○ | × | 12.3 | 21.7 | Example |
| 53 | 610 | 1.38 | × | × | ○ | 12.2 | 23.2 | Example |
| 54 | 610 | 1.55 | ○ | × | × | 12.3 | 22.4 | Example |
| 55 | 610 | 1.29 | × | ○ | × | 12.2 | 23.8 | Example |
| 56 | 610 | 1.41 | ○ | × | ○ | 12.3 | 21.8 | Example |
| 57 | - | - | ○ | ○ | ○ | 12.2 | 25.0 | Comparative example |

*) The rate of change in emission intensity at the time of changing top-bottom blowing conditions
**) ○: changed, ×: unchanged

The adjustments were performed by immediately transmitting control signals from the control computer 8 to the lance-height control device 9, the oxidizing-gas flow rate control device 10, and the bottom-blown gas flow rate control device 11 for operation at each time when the rate of change in the moving average of emission intensity satisfied the threshold value or less. In the case where only a subset of the control devices was operated among the three control devices, i.e., the lance-height control device 9, the oxidizing-gas flow rate control device 10, and the bottom-blown gas flow rate control device 11, a control signal was not transmitted from the control computer 8 to a control device that was not required and was transmitted only to a control device that was required.

As a comparative example, the flow rate of the oxidizing gas, the lance height, and the flow rate of the bottom-blown gas were adjusted so as to meet the top-blowing conditions and the bottom-blowing conditions described above at the time when carbon concentration in molten iron was estimated at 0.35% by mass on the basis of thermal material calculations by an existing process computer, regardless of the rate of change in the moving average of emission intensity defined by formula (2).

After the completion of the decarburization refining, the total iron content (Total Fe) in slag was examined by X-ray fluorescence analysis. Table 10 also presents the results.

In the decarburization refining in the second converter, the total iron content of slag in each of the examples was lower than that in the comparative example, and the iron yield was improved. The examples and the comparative example were almost identical in terms of the refining time.

[Example 8]

The same converter system (top-bottom blown converter) and the same operation method as in Example 7 were used. Regarding analytical conditions by the image analyzer 7 for the second converter, the rate of change in the moving average of emission intensity defined by formula (2) was calculated at a total of six levels: the number S of terms added in the moving average was set at three levels of 0 (instantaneous value), 10, and 30, and the natural number m was set at four levels of 1, 10, 30, and 60. The time when the resulting rate of change in the moving average of emission intensity was 1.6 or less, a sub-lance was introduced to measure the temperature of molten iron and carbon concentration in the molten iron, and simultaneously, one or two or more of the flow rate of oxygen gas from the top blowing lance, the lance height, and the flow rate of the bottom-blown gas were adjusted.

Specifically, the flow rate of oxygen gas from the top blowing lance was adjusted so as to be reduced from 1,000 $Nm^3$/min to 833 $Nm^3$/min. The lance height was adjusted so as to be reduced from 2.5 m to 2.0 m. The flow rate of the bottom-blown gas was adjusted so as to be increased from 15 $Nm^3$/min to 30 $Nm^3$/min.

The case where the measurement value of the carbon concentration in molten iron with the sub-lance was 0.35% $\pm$ 0.05% by mass was determined to be appropriate detection. The case where the measurement value of the carbon concentration in molten iron with the sub-lance was more than 0.40% by mass was determined to be overdetection. The case where the measurement value of the carbon concentration in molten iron with the sub-lance was less than 0.30% by mass was determined to be nondetection. A comparison was made for each number S of terms added. Table 11 presents the results in terms of percentages (%) based on the total amount changed.

[Table 11]

| | | Number S of terms added in moving average | Natural number m | Percentage based on total amount changed (%) | | | |
|---|---|---|---|---|---|---|---|
| | | | | Appropriate detection | Overdetection | Nondetection | |
| | Level 21 | 0 | 1 | 64 | 36 | 0 | |
| | Level 22 | 10 | 1 | 75 | 8 | 17 | |
| | Level 23 | 10 | 10 | 87 | 11 | 2 | |
| | Level 24 | 30 | 10 | 76 | 2 | 22 | |
| | Level 25 | 30 | 30 | 90 | 6 | 4 | |
| | Level 26 | 30 | 60 | 78 | 4 | 18 | |

As presented in Table 11, in the calculation of the rate of change in the moving average of emission intensity defined by formula (2), when the number S of terms added in the moving average was 0 (instantaneous value), the percentage of "overdetection" was high, compared with the cases where the values of S were 10 and 30. In the case where S and m were the same value, the percentage of "appropriate detection" was high. In particular, in the case where S = 30 and where m = 30, "appropriate detection" was able to be achieved at the highest percentage.

These results demonstrated that in the calculation of the rate of change in the moving average of emission intensity defined by formula (2), preferably, the moving average is used and the m and S in formula (2) are the same value from the viewpoint of achieving appropriate detection. Reference Signs List

| | |
|---|---|
| 1 | converter system |
| 2 | converter |
| 3 | top blowing lance |
| 4 | bottom blowing tuyere |
| 5 | hot metal |
| 6 | spectroscopic camera |
| 7 | image analyzer |
| 8 | control computer |
| 9 | lance-height control device |
| 10 | oxidizing-gas flow rate control device |
| 11 | bottom-blown gas flow rate control device |
| 12 | throat combustion flame |
| 13 | oxidizing gas jet |
| 14 | throat |
| 15 | movable hood |
| 16 | oxidizing gas supply pipe to top blowing lance |
| 17 | cooling water supply pipe to top blowing lance |
| 18 | cooling water discharge pipe from top blowing lance |
| 19 | tap hole |
| 20 | tap hole combustion flame |
| 21 | steel shell |
| 22 | refractory material |
| 23 | slag |

**Claims**

1. A method for monitoring an operation of a converter (2) in which hot metal (5) in the converter (2) is subjected to oxidation refining by blowing an oxidizing gas on the hot metal (5) in the converter (2) from a top blowing lance (3) or, in addition, blowing an oxidizing gas or an inert gas through a bottom blowing tuyere (4), the method comprising:

   measuring an emission spectrum of a throat combustion flame (12) issuing from a throat (14) of the converter (2) or an emission spectrum of a tap hole combustion flame (20) observed through a tap hole (19) of the converter (2);

   calculating a temporal change in emission intensity in a wavelength range of 580 to 620 nm of the emission spectrum measured; and

   presuming a change of a state in the converter (2) in accordance with the calculated temporal change in emission intensity, when the calculated rate of change in emission intensity is either more than a preset threshold value, or satisfies a preset threshold value or less, wherein the preset threshold value is determined in advance for the converter by performing a preliminary test for the converter.

2. The method for monitoring an operation of a converter (2) according to Claim 1, wherein a rate of change in emission intensity defined by formula (1) described below is calculated, and the change of the state in the converter (2) is presumed in accordance with the calculated rate of change in emission intensity with time:

```
Rate of change in emission intensity = (Iₙ/Iₙ₋₁) - 1 ···(1)
```

where $I_n$ is emission intensity (a.u.) at a specific wavelength at time $T_n$, $I_{n-1}$ is emission intensity (a.u.) at the specific wavelength at time $T_{n-1}$ $\Delta t$ second(s) before time $T_n$, and $\Delta t$ is a measurement time interval (s).

3. The method for monitoring an operation of a converter (2) according to Claim 1, wherein a rate of change in moving average of emission intensity defined by formula (2) described below is calculated, and the change of the state in the converter (2) is presumed in accordance with the calculated rate of change in moving average of emission intensity:

$$\texttt{Rate of change in moving average of emission intensity =}$$

$$((I_n{}^S - I_{n-m}{}^S)/[(I_n{}^S + I_{n-m}{}^S)/2] \cdot\cdot\cdot(2)$$

where $I_n{}^s$ is a moving average (a.u.) of emission intensity at a specific wavelength based on time $T_n$ where S is a number of terms added; and $I_{n-m}{}^s$ is a moving average (a.u.) of emission intensity at a specific wavelength based on time $T_{n-m}$ ($\Delta t \times m$) second(s) before time $T_n$ where S is a number of terms added, m is a natural number, S is a number of terms added in the moving average (an integer of 0 or more), and $\Delta t$ is a measurement time interval (s).

4. A method for operating a converter (2) in which molten steel is produced from hot metal (5) by blowing an oxidizing gas on the hot metal (5) in the converter (2) from a top blowing lance (3) or, in addition, blowing an oxidizing gas or an inert gas through a bottom blowing tuyere (4) to subject the hot metal (5) to desiliconization, dephosphorization, and decarburization,
the hot metal (5) containing 0.02% or more by mass silicon, the method comprising:

    measuring an emission spectrum of a throat combustion flame (12) issuing from a throat (14) of the converter (2) or an emission spectrum of a tap hole combustion flame (20) observed through a tap hole (19) of the converter (2);
    calculating a temporal change in emission intensity in a wavelength range of 580 to 620 nm of the emission spectrum measured;
    determining an end of a desiliconization period in accordance with the calculated temporal change in emission intensity when the calculated rate of change in emission intensity is more than a preset threshold value, which is determined in advance for the converter by performing a preliminary test for the converter; and
    after determination of the end of the desiliconization period, adjusting one or two or more of a flow rate of an oxidizing gas from the top blowing lance (3), lance height of the top blowing lance (3), and a flow rate of the oxidizing gas or the inert gas blown through a bottom blowing tuyere (4) .

5. The method for operating a converter (2) according to Claim 4, wherein a rate of change in emission intensity defined by formula (1) described below is calculated as the temporal change in emission intensity, and the end of the desiliconization period is determined by a time when the calculated rate of change in emission intensity is more than a preset threshold value after initiation of blowing of the oxidizing gas from the top blowing lance (3):

$$\texttt{Rate of change in emission intensity = } (I_n/I_{n-1}) - 1 \cdot\cdot\cdot(1)$$

where $I_n$ is emission intensity (a.u.) at a specific wavelength at time $T_n$, $I_{n-1}$ is emission intensity (a.u.) at the specific wavelength at time $T_{n-1}$ $\Delta t$ second(s) before time $T_n$, and $\Delta t$ is a measurement time interval (s).

6. The method for operating a converter (2) according to Claim 4, wherein a rate of change in moving average of emission intensity defined by formula (2) described below is calculated as the temporal change in emission intensity, and the end of the desiliconization period is determined by a time when the calculated rate of change in moving average of emission intensity is more than a preset threshold value after initiation of blowing of the oxidizing gas from the top blowing lance (3):

$$\texttt{Rate of change in moving average of emission intensity =}$$

$$((I_n{}^S - I_{n-m}{}^S)/[(I_n{}^S + I_{n-m}{}^S)/2] \cdot\cdot\cdot(2)$$

where $I_n^S$ is a moving average (a.u.) of emission intensity at a specific wavelength based on time $T_n$ where S is a number of terms added; and $I_{n-m}^S$ is a moving average (a.u.) of emission intensity at a specific wavelength based on time $T_{n-m}$ ($\Delta t \times m$) second(s) before time $T_n$ where S is a number of terms added, m is a natural number, S is a number of terms added in the moving average (an integer of 0 or more), and $\Delta t$ is a measurement time interval (s).

7.  The method for operating a converter (2) according to any one of Claims 4 to 6, wherein the adjustment after the determination of the end of the desiliconization period is to reduce the lance height of the top blowing lance (3) or to reduce the flow rate of the oxidizing gas or the inert gas blown through the bottom blowing tuyere (4), while the flow rate of the oxidizing gas blown from the top blowing lance (3) is increased.

8.  A method for operating a converter (2) in which molten steel is produced from hot metal (5) by blowing an oxidizing gas on the hot metal (5) in the converter (2) from a top blowing lance (3) or, in addition, blowing an oxidizing gas or an inert gas through a bottom blowing tuyere (4) to subject the hot metal (5) to decarburization refining, the method comprising:

    measuring an emission spectrum of a throat combustion flame (12) issuing from a throat (14) of the converter (2) or an emission spectrum of a tap hole combustion flame (20) observed through a tap hole (19) of the converter (2);
    calculating a temporal change in emission intensity in a wavelength range of 580 to 620 nm of the emission spectrum measured;
    confirming, in accordance with the calculated temporal change in emission intensity in a latter half of the decarburization refining, when the calculated rate of change in emission intensity satisfies a preset threshold value or less in a latter half of the decarburization refining, which is determined in advance for the converter by performing a preliminary test for the converter, that a rate-determining step of a decarburization reaction has been changed from oxygen supply to mass transfer of carbon in molten iron ; and
    thereafter adjusting one or two or more of a flow rate of an oxidizing gas blown from the top blowing lance (3), lance height of the top blowing lance (3), and a flow rate of the oxidizing gas or the inert gas blown through a bottom blowing tuyere (4).

9.  A method for operating a converter (2) in which molten steel is produced from hot metal (5) by blowing an oxidizing gas on the hot metal (5) in the converter (2) from a top blowing lance (3) or, in addition, blowing an oxidizing gas or an inert gas through a bottom blowing tuyere (4) to subject the hot metal (5) to decarburization refining, the method comprising:

    measuring an emission spectrum of a throat combustion flame (12) issuing from a throat (14) of the converter (2) or an emission spectrum of a tap hole combustion flame (20) observed through a tap hole (19) of the converter (2);
    calculating a rate of change in emission intensity defined by formula (1) described below as a temporal change in emission intensity in a wavelength range of 580 to 620 nm of the emission spectrum measured; and
    adjusting one or two or more of a flow rate of an oxidizing gas blown from the top blowing lance (3), lance height of the top blowing lance (3), and a flow rate of the oxidizing gas or the inert gas blown through a bottom blowing tuyere (4) at a time when the calculated rate of change in emission intensity satisfies a preset threshold value or less in a latter half of the decarburization refining:

$$\text{Rate of change in emission intensity} = (I_n/I_{n-1}) - 1 \quad \cdots (1)$$

    where $I_n$ is emission intensity (a.u.) at a specific wavelength at time $T_n$, $I_{n-1}$ is emission intensity (a.u.) at the specific wavelength at time $T_{n-1}$ $\Delta t$ second(s) before time $T_n$, and $\Delta t$ is a measurement time interval (s).

10. A method for operating a converter (2) in which molten steel is produced from hot metal (5) by blowing an oxidizing gas on the hot metal (5) in the converter (2) from a top blowing lance (3) or, in addition, blowing an oxidizing gas or an inert gas through a bottom blowing tuyere (4) to subject the hot metal (5) to decarburization refining, the method comprising:

    measuring an emission spectrum of a throat combustion flame (12) issuing from a throat (14) of the converter (2) or an emission spectrum of a tap hole combustion flame (20) observed through a tap hole (19) of the converter (2);

calculating a rate of change in moving average of emission intensity defined by formula (2) described below as a temporal change in emission intensity in a wavelength range of 580 to 620 nm of the emission spectrum measured; and

adjusting one or two or more of a flow rate of an oxidizing gas blown from the top blowing lance (3), lance height of the top blowing lance (3), and a flow rate of the oxidizing gas or the inert gas blown through a bottom blowing tuyere (4) at a time when the calculated rate of change in moving average of emission intensity satisfies a preset threshold value or less in a latter half of the decarburization refining:

$$\text{Rate of change in moving average of emission intensity} =$$

$$((I_n{}^S - I_{n-m}{}^S)/[(I_n{}^S + I_{n-m}{}^S)/2] \quad \cdots (2)$$

where $I_n{}^S$ is a moving average (a.u.) of emission intensity at a specific wavelength based on time $T_n$ where S is a number of terms added; and $I_{n-m}{}^S$ is a moving average (a.u.) of emission intensity at a specific wavelength based on time $T_{n-m}$ ($\Delta t \times m$) second(s) before time $T_n$ where S is a number of terms added, m is a natural number, S is a number of terms added in the moving average (an integer of 0 or more), and $\Delta t$ is a measurement time interval (s).

11. The method for operating a converter (2) according to Claim 9 or 10, wherein the adjustment at the time when the preset threshold value or less is satisfied is to reduce the lance height of the top blowing lance (3) or to increase the flow rate of the oxidizing gas or the inert gas blown through the bottom blowing tuyere (4), while the flow rate of the oxidizing gas blown from the top blowing lance (3) is reduced.

12. A method for operating a converter (2), comprising:

a desiliconization treatment step of supplying hot metal (5) containing 0.02% or more by mass silicon in a converter (2) with an oxidizing gas from a top blowing lance (3) to subject the hot metal (5) to desiliconization;
a deslagging step of discharging at least part of slag (23) formed in the desiliconization treatment step from the converter (2);
after the deslagging step, a dephosphorization treatment step of adding a CaO-based flux to the converter (2) and supplying an oxidizing gas from the top blowing lance (3) into the converter (2) to subject the hot metal (5) left in the converter (2) to dephosphorization; and
after the dephosphorization treatment step, a tapping step of discharging the dephosphorized hot metal (5) from the converter (2) to a hot metal-holding vessel,
wherein in the desiliconization treatment step, an emission spectrum of a throat combustion flame (12) issuing from a throat (14) of the converter (2) or an emission spectrum of a tap hole combustion flame (20) observed through a tap hole (19) of the converter (2) is measured,
a rate of change in moving average of emission intensity defined by formula (2) described below is calculated as a temporal change in emission intensity in a wavelength range of 580 to 620 nm of the emission spectrum measured, and
the deslagging step is performed when the calculated rate of change in moving average of emission intensity is more than a preset threshold value:

$$\text{Rate of change in moving average of emission intensity} =$$

$$((I_n{}^S - I_{n-m}{}^S)/[(I_n{}^S + I_{n-m}{}^S)/2] \quad \cdots (2)$$

where $I_n{}^S$ is a moving average (a.u.) of emission intensity at a specific wavelength based on time $T_n$ where S is a number of terms added; and $I_{n-m}{}^S$ is a moving average (a.u.) of emission intensity at a specific wavelength based on time $T_{n-m}$ ($\Delta t \times m$) second(s) before time $T_n$ where S is a number of terms added, m is a natural number, S is a number of terms added in the moving average (an integer of 0 or more), and $\Delta t$ is a measurement time interval (s).

13. A method for operating a converter (2) in which molten steel is produced from hot metal (5) by oxidation refining of the hot metal (5) in one converter (2), comprising:

a desiliconization treatment step and a dephosphorization treatment step, which are continuously performed, of supplying hot metal (5) containing 0.02% or more by mass silicon in a converter (2) with an oxidizing gas from a top blowing lance (3) and adding a CaO-based flux to the converter (2) to subject the hot metal (5) to desiliconization;

thereafter a deslagging step of discharging at least part of slag (23) formed in the desiliconization treatment step and the dephosphorization treatment step; and

after the deslagging step, a decarburization refining step of adding a CaO-based flux to the converter (2) and supplying an oxidizing gas from the top blowing lance (3) into the converter (2) to subject the hot metal (5) left in the converter (2) to decarburization,

wherein in the desiliconization treatment step and the dephosphorization treatment step, an emission spectrum of a throat combustion flame (12) issuing from a throat (14) of the converter (2) or an emission spectrum of a tap hole combustion flame (20) observed through a tap hole (19) of the converter (2) is measured,

a rate of change in moving average of emission intensity defined by formula (2) described below is calculated as a temporal change in emission intensity in a wavelength range of 580 to 620 nm of the emission spectrum measured, and

the deslagging step of discharging the slag (23) formed in the desiliconization treatment step or the desiliconization treatment step and the dephosphorization treatment step is performed at a time when the calculated rate of change in moving average of emission intensity is more than a preset threshold value, at a time when a predetermined period of time elapses based on a time when the calculated rate of change in moving average of emission intensity is more than a preset threshold value, or at a time when a predetermined amount of oxygen is supplied:

```
Rate of change in moving average of emission intensity =

((InS − In-mS)/[(InS + In-mS)/2]  ···(2)
```

where $I_n^s$ is a moving average (a.u.) of emission intensity at a specific wavelength based on time $T_n$ where S is a number of terms added; and $I_{n-m}^s$ is a moving average (a.u.) of emission intensity at a specific wavelength based on time $T_{n-m}$ ($\Delta t \times m$) second(s) before time $T_n$ where S is a number of terms added, m is a natural number, S is a number of terms added in the moving average (an integer of 0 or more), and $\Delta t$ is a measurement time interval (s).

14. A method for operating two converters (2) in which molten steel is produced from hot metal (5), the two converters (2) including a first converter and a second converter, the first converter being used as a pretreatment converter for hot metal (5), the second converter being used as a decarburization converter for hot metal (5) that has been subjected to pretreatment in the pretreatment converter, the method comprising, in the pretreatment:

a desiliconization treatment step of supplying hot metal (5) containing 0.02% or more by mass silicon in the pretreatment converter with an oxidizing gas from a top blowing lance (3) to subject the hot metal (5) to desiliconization, a deslagging step of discharging at least part of slag (23) formed in the desiliconization treatment step from the pretreatment converter, and after the deslagging step, a dephosphorization treatment step of adding a CaO-based flux to the pretreatment converter and supplying an oxidizing gas from the top blowing lance (3) into the pretreatment converter to subject the hot metal (5) left in the pretreatment converter to dephosphorization, the desiliconization treatment step, the deslagging step, and the dephosphorization treatment step being included in the pretreatment,

wherein in the desiliconization treatment step, the emission spectrum of a throat combustion flame (12) issuing from a throat (14) of the pretreatment converter or the emission spectrum of a tap hole combustion flame (20) observed through a tap hole (19) of the pretreatment converter is measured,

a rate of change in moving average of emission intensity defined by formula (2) described below is calculated as a temporal change in emission intensity in a wavelength range of 580 to 620 nm of the emission spectrum measured,

the deslagging step is performed when the calculated rate of change in moving average of emission intensity is more than a preset threshold value,

wherein in decarburization refining in the decarburization converter, the emission spectrum of the throat combustion flame (12) issuing from the throat (14) of the decarburization converter or the emission spectrum of the tap hole combustion flame (20) observed through the tap hole (19) of the decarburization converter is measured,

a rate of change in moving average of emission intensity defined by formula (2) described below is calculated as a temporal change in emission intensity in a wavelength range of 580 to 620 nm of the emission spectrum measured, and

one or two or more of a flow rate of the oxidizing gas blown from the top blowing lance (3), lance height of the top blowing lance (3), and a flow rate of the oxidizing gas or the inert gas blown through a bottom blowing tuyere (4) are adjusted at a time when the calculated rate of change in moving average of emission intensity satisfies a preset threshold value or less in a latter half of the decarburization refining:

$$\text{Rate of change in moving average of emission intensity} =$$

$$((I_n{}^S - I_{n-m}{}^S)/[(I_n{}^S + I_{n-m}{}^S)/2] \quad \cdots (2)$$

where $I_n{}^s$ is a moving average (a.u.) of emission intensity at a specific wavelength based on time $T_n$ where S is a number of terms added; and $I_{n-m}{}^s$ is a moving average (a.u.) of emission intensity at a specific wavelength based on time $T_{n-m}$ ($\Delta t \times m$) second(s) before time $T_n$ where S is a number of terms added, m is a natural number, S is a number of terms added in the moving average (an integer of 0 or more), and $\Delta t$ is a measurement time interval (s).

**Patentansprüche**

1. Verfahren zum Überwachen eines Betriebs eines Konverters (2), bei dem heißes Metall (5) in dem Konverter (2) einem Sauerstofffrischen unterzogen wird, indem ein Oxidationsgas auf das heiße Metall (5) in dem Konverter (2) aus einer oberen Blaslanze (3) geblasen wird, oder zusätzlich ein Oxidationsgas oder ein Inertgas durch eine Bodenblasform (4) geblasen wird, wobei das Verfahren umfasst:

   Messen eines Emissionsspektrums einer Kehlverbrennungsflamme (12), die aus einer Kehle (14) des Konverters (2) austritt, oder eines Emissionsspektrums einer Spundlochverbrennungsflamme (20), die durch ein Spundloch (19) des Konverters (2) zu sehen ist;
   Berechnen einer zeitlichen Veränderung der Emissionsstärke in einem Wellenlängenbereich von 580 bis 620 nm des gemessenen Emissionsspektrums; und
   Annehmen eines Änderungszustands in dem Konverter (2) gemäß der berechneten zeitlichen Veränderung der Emissionsstärke, wenn die berechnete Änderungsrate der Emissionsstärke entweder höher als ein voreingestellter Schwellenwert ist oder einen voreingestellten Schwellenwert oder weniger erfüllt, wobei der voreingestellte Schwellenwert vorab für den Konverter bestimmt wird, indem ein vorläufiger Test für den Konverter durchgeführt wird.

2. Verfahren zum Überwachen eines Betriebs eines Konverters (2) nach Anspruch 1, wobei eine Änderungsrate der Emissionsstärke berechnet wird, welche durch Formel (1) definiert ist, die unten beschrieben wird, und die Veränderung des Zustands in dem Konverter (2) gemäß der berechneten Änderungsrate der Emissionsstärke im zeitlichen Verlauf angenommen wird:

$$\text{Änderungsrate der Emissionsstärke} = (I_n/I_{n-1}) - 1 \ldots (1)$$

   wobei $I_n$ eine Emissionsstärke (einheitenlos) bei einer konkreten Wellenlänge zum Zeitpunkt $T_n$ ist, $I_{n-1}$ eine Emissionsstärke (einheitenlos) bei der konkreten Wellenlänge zum Zeitpunkt $T_{n-1}$ $\Delta t$ Sekunde(n) vor Zeitpunkt $T_n$ ist, und $\Delta t$ ein Messzeitintervall (s) ist.

3. Verfahren zum Überwachen eines Betriebs eines Konverters (2) nach Anspruch 1, wobei eine Änderungsrate des gleitenden Durchschnitts der durch die unten beschriebene Formel (2) definierten Emissionsstärke berechnet wird, und die Veränderung des Zustands in dem Konverter (2) gemäß der berechneten Änderungsrate des gleitenden Durchschnitts der Emissionsstärke angenommen wird:

$$\text{Änderungsrate des gleitenden Durchschnitt der}$$

$$\text{Emissionsstärke} = (I_n{}^s - I_{n-m}{}^s)/[(I_n{}^s + I_{n-m}{}^s)/2] \ldots (2)$$

wobei $I_n^s$ ein gleitender Durchschnitt (einheitenlos) der Emissionsstärke bei einer konkreten Wellenlänge basierend auf dem Zeitpunkt $T_n$ ist, wobei S eine Anzahl hinzuaddierter Ausdrücke ist; und $I_{n-m}^s$ ein gleitender Durchschnitt (einheitenlos) der Emissionsstärke bei einer konkreten Wellenlänge basierend auf Zeitpunkt $T_{n-m}$ ($\Delta t \times m$) Sekunde(n) vor Zeitpunkt $T_n$ ist, wobei S eine Anzahl hinzuaddierter Ausdrücke ist, m eine natürliche Zahl ist, S eine Anzahl von zu dem gleitenden Durchschnitt hinzuaddierten Ausdrücken ist (eine ganze Zahl von größer gleich 0), und $\Delta t$ ein Messzeitintervall (s) ist.

4. Verfahren zum Betreiben eines Konverters (2), bei dem aus heißem Metall (5) Stahlschmelze hergestellt wird, indem aus einer oberen Blaslanze (3) ein Oxidationsgas auf das heiße Metall (5) in dem Konverter (2) geblasen wird, oder zusätzlich ein Oxidationsgas oder ein Inertgas durch eine Bodenblasform (4) geblasen wird, um das heiße Metall (5) einer Entsilizierung, einer Entphosphorung und Entkohlung zu unterziehen, wobei das heiße Metall (5) 0,02 Massen-% oder mehr Silizium enthält, wobei das Verfahren umfasst:

   Messen eines Emissionsspektrums einer Kehlverbrennungsflamme (12), die aus einer Kehle (14) des Konverters (2) austritt, oder eines Emissionsspektrums einer Spundlochverbrennungsflamme (20), die durch ein Spundloch (19) des Konverters (2) zu sehen ist;
   Berechnen einer zeitlichen Veränderung der Emissionsstärke in einem Wellenlängenbereich von 580 bis 620 nm des gemessenen Emissionsspektrums;
   Bestimmen eines Endes einer Entsilizierungszeitspanne gemäß der berechneten zeitlichen Veränderung der Emissionsstärke, wenn die berechnete Änderungsrate der Emissionsstärke größer als ein festgelegter Schwellenwert ist, der vorab für den Konverter durch Durchführen einer vorläufigen Prüfung des Konverters bestimmt wird; und
   nach dem Bestimmen des Endes der Entsilizierungszeitspanne, Anpassen einer Strömungsrate eines Oxidationsgases aus der oberen Blaslanze (3) und/oder der Lanzenhöhe der oberen Blaslanze (3) und/oder einer Strömungsrate des Oxidationsgases und/oder des Inertgases, das durch eine Bodenblasform (4) geblasen wird.

5. Verfahren zum Betreiben eines Konverters (2) nach Anspruch 4, wobei eine Änderungsrate der Emissionsstärke, die durch die unten beschriebene Formel (1) definiert wird, als die zeitliche Veränderung der Emissionsstärke berechnet wird, und das Ende der Entsilizierungszeitspanne durch eine Zeit, wenn die berechnete Änderungsrate der Emissionsstärke höher als ein vorbestimmter Schwellenwert ist, nach dem Einsetzen des Einblasens des Oxidationsgases aus der oberen Blaslanze (3) bestimmt wird:

$$\text{Änderungsrate der Emissionsstärke} = (I_n/I_{n-1}) - 1 \dots (1)$$

wobei $I_n$ die Emissionsstärke (einheitenlos) bei einer konkreten Wellenlänge zum Zeitpunkt $T_n$ ist, $I_{n-1}$ die Emissionsstärke (einheitenlos) bei der konkreten Wellenlänge zum Zeitpunkt $T_{n-1}$ $\Delta t$ Sekunde(n) vor Zeitpunkt $T_n$ ist, und $\Delta t$ ein Messzeitintervall (s) ist.

6. Verfahren zum Betreiben eines Konverters (2) nach Anspruch 4, wobei eine Änderungsrate des gleitenden Durchschnitts der durch die unten beschriebene Formel (2) definierten Emissionsstärke als die zeitliche Veränderung der Emissionsstärke berechnet wird, und das Ende der Entsilizierungszeitspanne durch eine Zeit, wenn die berechnete Änderungsrate des gleitenden Durchschnitts der Emissionsstärke höher als ein vorbestimmter Schwellenwert ist, nach dem Einsetzen des Einblasens des Oxidationsgases aus der oberen Blaslanze (3) bestimmt wird:

$$\text{Änderungsrate des gleitenden Durchschnitts der}$$
$$\text{Emissionsstärke} = ((I_n^s - I_{n-m}^s)/[(I_n^s + I_{n-m}^s)/2] \dots (2)$$

wobei $I_n^s$ ein gleitender Durchschnitt (einheitenlos) der Emissionsstärke bei einer konkreten Wellenlänge basierend auf dem Zeitpunkt $T_n$ ist, wobei S eine Anzahl hinzuaddierter Ausdrücke ist; und $I_{n-m}^s$ ein gleitender Durchschnitt (einheitenlos) der Emissionsstärke bei einer konkreten Wellenlänge basierend auf dem Zeitpunkt $T_{n-m}$ ($\Delta t \times m$) Sekunde(n) vor dem Zeitpunkt $T_n$ ist, wobei S eine Anzahl hinzuaddierter Ausdrücke ist, m eine natürliche Zahl ist, S eine Anzahl von zum gleitenden Durchschnitt hinzuaddierter Ausdrücke ist (eine ganze Zahl von 0 oder mehr), und $\Delta t$ ein Messzeitintervall (s) ist.

7. Verfahren zum Betreiben eines Konverters (1) nach einem der Ansprüche 4 bis 6, wobei die Anpassung nach dem Bestimmen des Endes der Entsilizierungszeitspanne dazu dient, die Lanzenhöhe der oberen Blaslanze (3) zu verringern oder die Strömungsrate des Oxidationsgases oder des Inertgases, das durch eine Bodenblasform (4) geblasen wird, zu verringern, während die Strömungsrate des Oxidationsgases, das aus der oberen Blaslanze (3) geblasen wird, erhöht wird.

8. Verfahren zum Betreiben eines Konverters (2), bei dem aus heißem Metall (5) Stahlschmelze hergestellt wird, indem ein Oxidationsgas auf das heiße Metall (5) in dem Konverter (2) aus einer oberen Blaslanze (3) geblasen wird, oder zusätzlich ein Oxidationsgas oder ein Inertgas durch eine Bodenblasform (4) geblasen wird, um das heiße Metall (5) einer Entkohlungsfrischung zu unterziehen, wobei das Verfahren umfasst:

   Messen eines Emissionsspektrums einer Kehlverbrennungsflamme (12), die aus einer Kehle (14) des Konverters (2) austritt, oder eines Emissionsspektrums einer Spundlochverbrennungsflamme (20), die durch ein Spundloch (19) des Konverters (2) zu sehen ist;
   Berechnen einer zeitlichen Veränderung der Emissionsstärke in einem Wellenlängenbereich von 580 bis 620 nm des gemessenen Emissionsspektrums;
   Rückmelden, gemäß der berechneten zeitlichen Veränderung der Emissionsstärke in einer späteren Hälfte der Entkohlungsfrischung, wenn die berechnete Änderungsrate der Emissionsstärke einen vorgegebenen Schwellenwert oder niedriger in einer späteren Hälfte der Entkohlungsfrischung erfüllt, die vorab für den Konverter bestimmt wird, indem ein vorläufiger Test für den Konverter durchgeführt wird, dass ein Raten-Bestimmungsschritt einer Entkohlungsreaktion von Sauerstoffzufuhr zu Massentransfer von Kohlenstoff in Eisenschmelze geändert wurde, und
   danach Anpassen einer Strömungsrate eines Oxidationsgases, das aus der oberen Blaslanze (3) ausgeblasen wird, und/oder einer Lanzenhöhe der oberen Blaslanze (3) und/oder einer Strömungsrate des Oxidationsgases oder des Inertgases, das durch eine Bodenblasform (4) geblasen wird.

9. Verfahren zum Betreiben eines Konverters (2), bei dem aus heißem Metall (5) Stahlschmelze hergestellt wird, indem ein Oxidationsgas auf das heiße Metall (5) in dem Konverter (2) aus einer oberen Blaslanze (3) geblasen wird, oder zusätzlich ein Oxidationsgas oder ein Inertgas durch eine Bodenblasform (4) geblasen wird, um das heiße Metall (5) einer Entkohlungsfrischung zu unterziehen, wobei das Verfahren umfasst:

   Messen eines Emissionsspektrums einer Kehlverbrennungsflamme (12), die aus einer Kehle (14) des Konverters (2) austritt, oder eines Emissionsspektrums einer Spundlochverbrennungsflamme (20), die durch ein Spundloch (19) des Konverters (2) zu sehen ist;
   Berechnen einer Änderungsrate der Emissionsstärke, die durch die unten beschriebene Formel (1) definiert wird, als eine zeitliche Veränderung der Emissionsstärke in einem Wellenlängenbereich von 580 bis 620 nm des gemessenen Emissionsspektrums; und
   Anpassen einer Strömungsrate eines aus der oberen Blaslanze (3) ausgeblasenen Oxidationsgases und/oder der Lanzenhöhe der oberen Blaslanze (3) und/oder einer Strömungsrate des Oxidationsgases oder des Inertgases, das durch eine Bodenblasform (4) geblasen wird, zu einem Zeitpunkt, wenn die berechnete Änderungsrate der Emissionsstärke einen voreingestellten Schwellenwert oder weniger in einer späteren Hälfte der Entkohlungsfrischung erfüllt:

$$\text{Änderungsrate der Emissionsstärke} = (I_n/I_{n-1}) - 1 \dots (1)$$

   wobei $I_n$ die Emissionsstärke (einheitenlos) bei einer konkreten Wellenlänge zum Zeitpunkt $T_n$ ist, $I_{n-1}$ die Emissionsstärke (einheitenlos) bei der konkreten Wellenlänge zum Zeitpunkt $T_{n-1}$ $\Delta t$ Sekunde(n) vor Zeitpunkt $T_n$ ist, und $\Delta t$ ein Messzeitintervall (s) ist.

10. Verfahren zum Betreiben eines Konverters (2), bei dem aus heißem Metall (5) Stahlschmelze hergestellt wird, indem ein Oxidationsgas auf das heiße Metall (5) in dem Konverter (2) aus einer oberen Blaslanze (3) geblasen wird, oder zusätzlich ein Oxidationsgas oder ein Inertgas durch eine Bodenblasform (4) geblasen wird, um das heiße Metall (5) einer Entkohlungsfrischung zu unterziehen, wobei das Verfahren umfasst:

   Messen eines Emissionsspektrums einer Kehlverbrennungsflamme (12), die aus einer Kehle (14) des Konverters (2) austritt, oder eines Emissionsspektrums einer Spundlochverbrennungsflamme (20), die durch ein Spundloch (19) des Konverters (2) zu sehen ist;
   Berechnen einer Änderungsrate des gleitenden Durchschnitts der durch die unten beschriebene Formel (2) definierten Emissionsstärke als eine zeitliche Veränderung der Emissionsstärke in einem Wellenlängenbereich von 580 bis 620 nm des gemessenen Emissionsspektrums; und

Anpassen einer Strömungsrate eines aus der oberen Blaslanze (3) ausgeblasenen Oxidationsgases und/oder der Lanzenhöhe der oberen Blaslanze (3) und/oder einer Strömungsrate des Oxidationsgases oder des Inertgases, das durch eine Bodenblasform (4) geblasen wird, zu einem Zeitpunkt, wenn die berechnete Änderungsrate des gleitenden Durchschnitts der Emissionsstärke einen voreingestellten Schwellenwert oder weniger in einer späteren Hälfte der Entkohlungsfrischung erfüllt:

$$\text{Änderungsrate des gleitenden Durchschnitts der Emissionsstärke} = ((I_n{}^s - I_{n-m}{}^s)/[(I_n{}^s + I_{n-m}{}^s)/2] \ldots (2)$$

wobei $I_n{}^s$ ein gleitender Durchschnitt (einheitenlos) der Emissionsstärke bei einer konkreten Wellenlänge basierend auf dem Zeitpunkt $T_n$ ist, wobei S eine Anzahl hinzuaddierter Ausdrücke ist; und $I_{n-m}{}^s$ ein gleitender Durchschnitt (einheitenlos) der Emissionsstärke bei einer konkreten Wellenlänge basierend auf dem Zeitpunkt $T_{n-m}$ ($\Delta t \times m$) Sekunde(n) vor dem Zeitpunkt $T_n$ ist, wobei S eine Anzahl hinzuaddierter Ausdrücke ist, m eine natürliche Zahl ist, S eine Anzahl von zu dem gleitenden Durchschnitt hinzuaddierten Ausdrücken ist (eine ganze Zahl von 0 oder mehr), und $\Delta t$ ein Messzeitintervall (s) ist.

11. Verfahren zum Betreiben eines Konverters (2) nach Anspruch 9 oder 10, wobei die Anpassung zu dem Zeitpunkt, wenn der vorgegebene Schwellenwert oder kleiner erfüllt wird, dazu dient, die Lanzenhöhe der oberen Blaslanze (3) zu verringern oder die Strömungsrate des Oxidationsgases oder des Inertgases, das durch eine Bodenblasform (4) geblasen wird, zu erhöhen, wohingegen die Strömungsrate des Oxidationsgases, das aus der oberen Blaslanze (3) geblasen wird, verringert wird.

12. Verfahren zum Betreiben eines Konverters (2), wobei das Verfahren umfasst:

einen Entsilizierungsbehandlungsschritt des Zuführens von heißem Metall (5), das 0,02 Massen-% oder mehr Silizium enthält, in einen Konverter (2) mit einem Oxidationsgas aus einer oberen Blaslanze (3), um das heiße Metall (5) einer Entsilizierung zu unterziehen;

einen Entschlackungsschritt des Ausleitens von zumindest einem Teil der Schlacke (23), die sich in dem Entsilizierungsbehandlungsschritt gebildet hat, aus dem Konverter (2);

nach dem Entschlackungsschritt, einen Entphosphorungsbehandlungsschritt des Hinzugebens einer CaO-basierten Strömung an den Konverter (2) und des Zuführens eines Oxidierungsgases aus der oberen Blaslanze (3) in den Konverter (2), um das heiße Metall (5), das in dem Konverter (2) zurückgeblieben ist, einer Entphosphorung zu unterziehen; und

nach dem Entphosphorungsbehandlungsschritt einen Abstechschritt des Ausleitens des entphosphorierten heißen Metalls (5) aus dem Konverter (2) in ein Gefäß zum Vorhalten heißer Metallschmelze;

wobei bei dem Entsilizierungsbehandlungsschritt ein Emissionsspektrum einer Kehlverbrennungsflamme (12), die aus einer Kehle (14) des Konverters (2) austritt, oder ein Emissionsspektrum einer Spundlochverbrennungsflamme (20), die durch ein Spundloch (19) des Konverters (2) zu sehen ist, gemessen wird;

eine Änderungsrate des gleitenden Durchschnitts der Emissionsstärke, der durch die unten beschriebene Formel (2) definiert wird, als eine zeitliche Veränderung der Emissionsstärke in einem Wellenlängenbereich von 580 bis 620 nm des gemessenen Emissionsspektrums berechnet wird; und

der Entschlackungsschritt durchgeführt wird, wenn die berechnete Änderungsrate des gleitenden Durchschnitts der Emissionsstärke höher als ein vorgegebener Schwellenwert ist:

$$\text{Änderungsrate des gleitenden Durchschnitts der Emissionsstärke} = ((I_n{}^s - I_{n-m}{}^s)/[(I_n{}^s + I_{n-m}{}^s)/2] \ldots (2)$$

wobei $I_n{}^s$ ein gleitender Durchschnitt (einheitenlos) der Emissionsstärke bei einer konkreten Wellenlänge basierend auf dem Zeitpunkt $T_n$ ist, wobei S eine Anzahl hinzuaddierter Ausdrücke ist; und $I_{n-m}{}^s$ ein gleitender Durchschnitt (einheitenlos) der Emissionsstärke bei einer konkreten Wellenlänge basierend auf dem Zeitpunkt $T_{n-m}$ ($\Delta t \times m$) Sekunde(n) vor dem Zeitpunkt $T_n$ ist, wobei S eine Anzahl hinzuaddierter Ausdrücke ist, m eine natürliche Zahl ist, S eine Anzahl von zu dem gleitenden Durchschnitt hinzuaddierten Ausdrücken ist (eine ganze Zahl von 0 oder mehr), und $\Delta t$ ein Messzeitintervall (s) ist.

13. Verfahren zum Betreiben eines Konverters (2), bei dem durch Oxidationsfrischen des heißen Metalls (5) in einem Konverter (2) aus heißem Metall (5) Stahlschmelze hergestellt wird, wobei das Verfahren umfasst:

einen Entsilizierungsbehandlungsschritt und einen Entphosphorungsbehandlungsschritt, die kontinuierlich durchgeführt werden, des Zuführens von heißem Metall (5), das 0,02 Massen-% oder mehr Silizium enthält, in einen Konverter (2) mit einem Oxidationsgas aus einer oberen Blaslanze (3) und des Hinzugebens einer CaO-basierten Strömung in den Konverter (2), um das heiße Metall (5) einer Entsilizierung zu unterziehen;

im Anschluss einen Entschlackungsschritt des Ausleitens von zumindest einem Teil der Schlacke (23), die sich in dem Entsilizierungsbehandlungsschritt und dem Entphosphorungsbehandlungsschritt gebildet hat; und

nach dem Entschlackungsschritt, einen Entkohlungsfrischungsschritt des Hinzugebens einer CaO-basierten Strömung an den Konverter (2) und des Zuführens eines Oxidierungsgases aus der oberen Blaslanze (3) in den Konverter, um das heiße Metall (5), das in dem Konverter (2) zurückgeblieben ist, einer Entkohlung zu unterziehen,

wobei bei dem Entsilizierungsbehandlungsschritt ein Emissionsspektrum einer Kehlverbrennungsflamme (12), die aus einer Kehle (14) des Konverters (2) austritt, oder ein Emissionsspektrum einer Spundlochverbrennungsflamme (20), die durch ein Spundloch (19) des Konverters (2) zu sehen ist, gemessen wird;

eine Änderungsrate des durch die unten beschriebene Formel (2) definierten gleitenden Durchschnitts der Emissionsstärke als eine zeitliche Veränderung der Emissionsstärke in einem Wellenlängenbereich von 580 bis 620 nm des gemessenen Emissionsspektrums berechnet wird, und

der Entschlackungsschritt des Ausleitens der in dem Entsilizierungsbehandlungsschritt oder dem Entsilizierungsbehandlungsschritt und dem Entphosphorungsbehandlungsschritt gebildeten Metallschlacke (23) zu einem Zeitpunkt durchgeführt wird, wenn die berechnete Änderungsrate des gleitenden Durchschnitts der Emissionsstärke höher als ein vorgegebener Schwellenwert ist, zu einem Zeitpunkt, wenn eine vorgegebene Zeitspanne verstrichen ist, basierend auf einer Zeit, wenn die berechnete Änderungsrate des gleitenden Durchschnitts der Emissionsstärke höher als ein voreingestellter Schwellenwert ist, oder zu einem Zeitpunkt, wenn eine vorgegebene Menge an Sauerstoff zugeführt wird;

$$\text{Änderungsrate des gleitenden Durchschnitts der Emissionsstärke} = (I_n{}^s - I_{n-m}{}^s)/[(I_n{}^s + I_{n-m}{}^s)/2] \ \dots \ (2)$$

wobei $I_n{}^s$ ein gleitender Durchschnitt (einheitenlos) der Emissionsstärke bei einer konkreten Wellenlänge basierend auf dem Zeitpunkt $T_n$ ist, wobei S eine Anzahl hinzuaddierter Ausdrücke ist; und $I_{n-m}{}^s$ ein gleitender Durchschnitt (einheitenlos) der Emissionsstärke bei einer konkreten Wellenlänge basierend auf dem Zeitpunkt $T_{n-m}$ ($\Delta t \times m$) Sekunde(n) vor dem Zeitpunkt $T_n$ ist, wobei S eine Anzahl hinzuaddierter Ausdrücke ist, m eine natürliche Zahl ist, S eine Anzahl von zu dem gleitenden Durchschnitt hinzuaddierten Ausdrücken ist (ganze Zahl von 0 oder mehr), und $\Delta t$ ein Messzeitintervall (s) ist.

14. Verfahren zum Betreiben von zwei Konvertern (2), bei dem aus heißem Metall (5) Stahlschmelze hergestellt wird, wobei die zwei Konverter (2) einen ersten Konverter und einen zweiten Konverter umfassen, wobei der erste Konverter als ein Vorbehandlungskonverter für heißes Metall (5) verwendet wird, wobei der zweite Konverter als Entkohlungskonverter für heißes Metall (5) verwendet wird, das in dem Vorbehandlungskonverter einem Vorbehandlungsschritt unterzogen wurde, wobei das Verfahren bei der Vorbehandlung umfasst:

einen Entsilizierungsbehandlungsschritt des Zuführens von heißem Metall (5), das 0,02 Massen-% oder mehr Silizium enthält, in den Vorbehandlungskonverter (2) mit einem Oxidationsgas aus einer oberen Blaslanze (3), um das heiße Metall einer Entsilizierung zu unterziehen, einen Entschlackungsschritt des Ausleitens von zumindest einem Teil der Schlacke (23), die sich in dem Entsilizierungsbehandlungsschritt gebildet hat, aus dem Vorbehandlungskonverter, und nach dem Entschlackungsschritt einen Entphosphorungsbehandlungsschritt des Hinzugebens einer CaO-basierten Strömung an den Vorbehandlungskonverter und des Zuführens eines Oxidierungsgases aus der oberen Blaslanze (3) in den Vorbehandlungskonverter, um das heiße Metall (5), das in dem Vorbehandlungskonverter (2) zurückgeblieben ist, einer Entphosphorung zu unterziehen; wobei der Entsilizierungsbehandlungsschritt, der Entschlackungsschritt und der Entphosphorungsbehandlungsschritt in der Vorbehandlung beinhaltet sind;

wobei bei dem Entsilizierungsbehandlungsschritt das Emissionsspektrum einer Kehlverbrennungsflamme (12), die aus einer Kehle (14) des Vorbehandlungskonverters (2) austritt, oder das Emissionsspektrum einer Spundlochverbrennungsflamme (20), die durch ein Spundloch (19) des Vorbehandlungskonverters (2) zu sehen ist, gemessen wird;

eine Änderungsrate des durch die unten beschriebene Formel (2) definierten gleitenden Durchschnitts der Emissionsstärke als eine zeitliche Veränderung der Emissionsstärke in einem Wellenlängenbereich von 580 bis 620 nm des gemessenen Emissionsspektrums berechnet wird;

der Entschlackungsschritt durchgeführt wird, wenn die berechnete Änderungsrate des gleitenden Durchschnitts der Emissionsstärke höher als ein vorgegebener Schwellenwert ist,

wobei bei der Entkohlungsfrischung in dem Entkohlungskonverter das Emissionsspektrum der Kehlverbrennungsflamme (12), die aus der Kehle (14) des Konverters (2) austritt, oder das Emissionsspektrum einer Spundlochverbrennungsflamme (20), die durch das Spundloch (19) des Konverters (2) zu sehen ist, gemessen wird; eine Änderungsrate des gleitenden Durchschnitts der durch die unten beschriebene Formel (2) definierten Emissionsstärke als eine zeitliche Veränderung der Emissionsstärke in einem Wellenlängenbereich von 580 bis 620 nm des gemessenen Emissionsspektrums berechnet wird, und

eine Strömungsrate des aus der oberen Blaslanze (3) ausgeblasenen Oxidationsgases und/oder die Lanzenhöhe der oberen Blaslanze (3) und/oder eine Strömungsrate des Oxidationsgases oder des Inertgases, das durch eine Bodenblasform (4) geblasen wird, zu einem Zeitpunkt angepasst werden, wenn die berechnete Änderungsrate des gleitenden Durchschnitts der Emissionsstärke einen voreingestellten Schwellenwert oder weniger erfüllt, in einer späteren Hälfte der Entkohlungsfrischung:

$$\text{Änderungsrate des gleitenden Durchschnitts der Emissionsstärke} = (I_n{}^s - I_{n-m}{}^s)/[(I_n{}^s + I_{n-m}{}^s)/2] \ldots (2)$$

wobei $I_n{}^s$ ein gleitender Durchschnitt (einheitenlos) der Emissionsstärke bei einer konkreten Wellenlänge basierend auf dem Zeitpunkt $T_n$ ist, wobei S eine Anzahl hinzuaddierter Ausdrücke ist; und $I_{n-m}{}^s$ ein gleitender Durchschnitt (einheitenlos) der Emissionsstärke bei einer konkreten Wellenlänge basierend auf dem Zeitpunkt $T_{n-m}$ ($\Delta t \times m$) Sekunde(n) vor dem Zeitpunkt $T_n$ ist, wobei S eine Anzahl hinzuaddierter Ausdrücke ist, m eine natürliche Zahl ist, S eine Anzahl von zu dem gleitenden Durchschnitt hinzuaddierten Ausdrücken ist (eine ganze Zahl von 0 oder mehr), und $\Delta t$ ein Messzeitintervall (s) ist.

**Revendications**

1. Procédé de surveillance d'un fonctionnement d'un convertisseur (2) dans lequel du métal chaud (5) dans le convertisseur (2) est soumis à un raffinage par oxydation en soufflant un gaz oxydant sur le métal chaud (5) dans le convertisseur (2) depuis une lance de soufflage supérieure (3) ou, en plus, en soufflant un gaz oxydant ou un gaz inerte à travers une tuyère de soufflage inférieure (4), le procédé comprenant les étapes consistant à :

mesurer un spectre d'émission d'une flamme de combustion de gueulard (12) provenant d'un gueulard (14) du convertisseur (2) ou un spectre d'émission d'une flamme de combustion d'orifice pour robinet (20) observé à travers un orifice pour robinet (19) du convertisseur (2) ;
calculer un changement temporel d'intensité d'émission dans une plage de longueurs d'onde de 580 à 620 nm du spectre d'émission mesuré ; et
supposer un changement d'un état dans le convertisseur (2) conformément au changement temporel calculé d'intensité d'émission, lorsque le taux de changement calculé d'intensité d'émission est soit supérieur à une valeur seuil prédéfinie, soit satisfait à une valeur seuil prédéfinie ou moins, dans lequel la valeur seuil prédéfinie est déterminée à l'avance pour le convertisseur en effectuant un test préliminaire pour le convertisseur.

2. Procédé de surveillance d'un fonctionnement d'un convertisseur (2) selon la revendication 1, dans lequel un taux de changement d'intensité d'émission défini par la formule (1) décrite ci-dessous est calculé, et le changement de l'état dans le convertisseur (2) est supposé conformément au taux de changement calculé d'intensité d'émission avec le temps :

$$\text{Taux de changement d'intensité d'émission} = (I_n/I_{n-1}) - 1 \cdots (1)$$

où $I_n$ est l'intensité d'émission (a.u.) à une longueur d'onde spécifique au moment $T_n$, $I_{n-1}$ est l'intensité d'émission (a.u.) à la longueur d'onde spécifique au moment $T_{n-1}$ $\Delta t$ seconde(s) avant le moment $T_n$, et $\Delta t$ est un intervalle de moment de mesure (s).

3. Procédé de surveillance d'un fonctionnement d'un convertisseur (2) selon la revendication 1, dans lequel un taux de changement en moyenne mobile d'intensité d'émission défini par la formule (2) décrite ci-dessous est calculé, et le changement de l'état dans le convertisseur (2) est supposé conformément au taux de changement calculé en moyenne mobile d'intensité d'émission :

$$\text{Taux de changement en moyenne mobile d'intensité d'émission} = ((I_n^S - I_{n-m}^S)/[(I_n^S + I_{n-m}^S)/2] \cdots (2)$$

où $I_n^S$ est une moyenne mobile (a.u.) d'intensité d'émission à une longueur d'onde spécifique sur la base d'un moment $T_n$ où S est un nombre de termes ajoutés ; et $I_{n-m}^S$ est une moyenne mobile (a.u.) d'intensité d'émission à une longueur d'onde spécifique sur la base d'un moment $T_{n-m}$ ($\Delta t \times m$) seconde(s) avant le moment $T_n$ où S est un nombre de termes ajoutés, m est un nombre naturel, S est un nombre de termes ajoutés dans la moyenne mobile (un entier de 0 ou plus), et $\Delta t$ est un intervalle de moment de mesure (s).

4. Procédé de fonctionnement d'un convertisseur (2) dans lequel de l'acier en fusion est produit à partir de métal chaud (5) en soufflant un gaz oxydant sur le métal chaud (5) dans le convertisseur (2) depuis une lance de soufflage supérieure (3) ou, en plus, en soufflant un gaz oxydant ou un gaz inerte à travers une tuyère de soufflage inférieure (4) pour soumettre le métal chaud (5) à une désiliciation, déphosphoration et décarburation, le métal chaud (5) contenant 0,02 % ou plus en masse de silicium, le procédé comprenant les étapes consistant à :

mesurer un spectre d'émission d'une flamme de combustion de gueulard (12) provenant d'un gueulard (14) du convertisseur (2) ou un spectre d'émission d'une flamme de combustion d'orifice pour robinet (20) observé à travers un orifice pour robinet (19) du convertisseur (2) ;
calculer un changement temporel d'intensité d'émission dans une plage de longueurs d'onde de 580 à 620 nm du spectre d'émission mesuré ;
déterminer une fin d'une période de désiliciation conformément au changement temporel calculé d'intensité d'émission lorsque le taux de changement calculé d'intensité d'émission est supérieur à une valeur seuil prédéfinie, qui est déterminée à l'avance pour le convertisseur en effectuant un test préliminaire pour le convertisseur ; et
après la détermination de la fin de la période de désiliciation, ajuster un ou deux ou plus parmi un débit d'un gaz oxydant depuis la lance de soufflage supérieure (3), une hauteur de lance de la lance de soufflage supérieure (3), et un débit du gaz oxydant ou du gaz inerte soufflé à travers une tuyère de soufflage inférieure (4).

5. Procédé de fonctionnement d'un convertisseur (2) selon la revendication 4, dans lequel un taux de changement d'intensité d'émission défini par la formule (1) décrite ci-dessous est calculé en tant que le changement temporel d'intensité d'émission, et la fin de la période de désiliciation est déterminée par un moment où le taux de changement calculé d'intensité d'émission est supérieur à une valeur seuil prédéfinie après l'amorce de soufflage du gaz oxydant depuis la lance de soufflage supérieure (3) :

$$\text{Taux de changement d'intensité d'émission} = (I_n/I_{n-1}) - 1 \cdots (1)$$

où $I_n$ est l'intensité d'émission (a.u.) à une longueur d'onde spécifique au moment $T_n$, $I_{n-1}$ est l'intensité d'émission (a.u.) à la longueur d'onde spécifique au moment $T_{n-1}$ $\Delta t$ seconde(s) avant le moment $T_n$, et $\Delta t$ est un intervalle de moment de mesure (s).

6. Procédé de fonctionnement d'un convertisseur (2) selon la revendication 4, dans lequel un taux de changement en moyenne mobile d'intensité d'émission défini par la formule (2) décrite ci-dessous est calculé en tant que le changement temporel d'intensité d'émission, et la fin de la période de désiliciation est déterminée par un moment où le taux de changement calculé en moyenne mobile d'intensité d'émission est supérieur à une valeur seuil prédéfinie après l'amorce de soufflage du gaz oxydant depuis la lance de soufflage supérieure (3) :

$$\text{Taux de changement en moyenne mobile d'intensité d'émission} = ((I_n^S - I_{n-m}^S)/[(I_n^S + I_{n-m}^S)/2] \cdots (2)$$

où $I_n^S$ est une moyenne mobile (a.u.) d'intensité d'émission à une longueur d'onde spécifique sur la base d'un moment $T_n$ où S est un nombre de termes ajoutés ; et $I_{n-m}^S$ est une moyenne mobile (a.u.) d'intensité d'émission à une longueur d'onde spécifique sur la base d'un moment $T_{n-m}$ ($\Delta t$ x m) seconde(s) avant le moment $T_n$ où S est un nombre de termes ajoutés, m est un nombre naturel, S est un nombre de termes ajoutés dans la moyenne mobile (un entier de 0 ou plus), et $\Delta t$ est un intervalle de moment de mesure (s).

7. Procédé de fonctionnement d'un convertisseur (2) selon l'une quelconque des revendications 4 à 6, dans lequel l'ajustement après la détermination de la fin de la période de désiliciation est destiné à réduire la hauteur de lance de la lance de soufflage supérieure (3) ou destiné à réduire le débit du gaz oxydant ou du gaz inerte soufflé à travers la tuyère de soufflage inférieure (4), tandis que le débit du gaz oxydant soufflé depuis la lance de soufflage supérieure (3) est augmenté.

8. Procédé de fonctionnement d'un convertisseur (2) dans lequel de l'acier en fusion est produit à partir de métal chaud (5) en soufflant un gaz oxydant sur le métal chaud (5) dans le convertisseur (2) depuis une lance de soufflage supérieure (3) ou, en plus, en soufflant un gaz oxydant ou un gaz inerte à travers une tuyère de soufflage inférieure (4) pour soumettre le métal chaud (5) à un raffinage de décarburation, le procédé comprenant les étapes consistant à :

   mesurer un spectre d'émission d'une flamme de combustion de gueulard (12) provenant d'un gueulard (14) du convertisseur (2) ou un spectre d'émission d'une flamme de combustion d'orifice pour robinet (20) observé à travers un orifice pour robinet (19) du convertisseur (2) ;
   calculer un changement temporel d'intensité d'émission dans une plage de longueurs d'onde de 580 à 620 nm du spectre d'émission mesuré ;
   confirmer, conformément au changement temporel calculé d'intensité d'émission dans une seconde moitié du raffinage de décarburation, lorsque le taux de changement calculé d'intensité d'émission satisfait à une valeur seuil prédéfinie ou moins dans une seconde moitié du raffinage de décarburation, qui est déterminée à l'avance pour le convertisseur en effectuant un test préliminaire pour le convertisseur, qu'une étape de détermination de taux d'une réaction de décarburation a été modifiée d'alimentation en oxygène en transfert de masse de carbone dans du fer en fusion ; et
   ensuite, ajuster un ou deux ou plus parmi un débit d'un gaz oxydant soufflé depuis la lance de soufflage supérieure (3), une hauteur de lance de la lance de soufflage supérieure (3), et un débit du gaz oxydant ou du gaz inerte soufflé à travers une tuyère de soufflage inférieure (4).

9. Procédé de fonctionnement d'un convertisseur (2) dans lequel de l'acier en fusion est produit à partir de métal chaud (5) en soufflant un gaz oxydant sur le métal chaud (5) dans le convertisseur (2) depuis une lance de soufflage supérieure (3) ou, en plus, en soufflant un gaz oxydant ou un gaz inerte à travers une tuyère de soufflage inférieure (4) pour soumettre le métal chaud (5) à un raffinage de décarburation, le procédé comprenant les étapes consistant à :

   mesurer un spectre d'émission d'une flamme de combustion de gueulard (12) provenant d'un gueulard (14) du convertisseur (2) ou un spectre d'émission d'une flamme de combustion d'orifice pour robinet (20) observé à travers un orifice pour robinet (19) du convertisseur (2) ;
   calculer un taux de changement d'intensité d'émission défini par la formule (1) décrite ci-dessous en tant qu'un changement temporel d'intensité d'émission dans une plage de longueurs d'onde de 580 à 620 nm du spectre d'émission mesuré ; et
   ajuster un ou deux ou plus parmi un débit d'un gaz oxydant soufflé depuis la lance de soufflage supérieure (3), une hauteur de lance de la lance de soufflage supérieure (3), et un débit du gaz oxydant ou du gaz inerte soufflé à travers une tuyère de soufflage inférieure (4) à un moment où le taux de changement calculé d'intensité d'émission satisfait à une valeur seuil prédéfinie ou moins dans une seconde moitié du raffinage de décarburation :

$$\text{Taux de changement d'intensité d'émission} = (I_n / I_{n-1}) - 1 \cdots (1)$$

   où $I_n$ est l'intensité d'émission (a.u.) à une longueur d'onde spécifique au moment $T_n$, $I_{n-1}$ est l'intensité d'émission (a.u.) à la longueur d'onde spécifique au moment $T_{n-1}$ $\Delta t$ seconde(s) avant le moment $T_n$, et $\Delta t$ est un intervalle de moment de mesure (s).

10. Procédé de fonctionnement d'un convertisseur (2) dans lequel de l'acier en fusion est produit à partir de métal chaud (5) en soufflant un gaz oxydant sur le métal chaud (5) dans le convertisseur (2) depuis une lance de soufflage supérieure (3) ou, en plus, en soufflant un gaz oxydant ou un gaz inerte à travers une tuyère de soufflage inférieure (4) pour soumettre le métal chaud (5) à un raffinage de décarburation, le procédé comprenant les étapes consistant à :

mesurer un spectre d'émission d'une flamme de combustion de gueulard (12) provenant d'un gueulard (14) du convertisseur (2) ou un spectre d'émission d'une flamme de combustion d'orifice pour robinet (20) observé à travers un orifice pour robinet (19) du convertisseur (2) ;

calculer un taux de changement en moyenne mobile d'intensité d'émission défini par la formule (2) décrite ci-dessous en tant qu'un changement temporel d'intensité d'émission dans une plage de longueurs d'onde de 580 à 620 nm du spectre d'émission mesuré ; et

ajuster un ou deux ou plus parmi un débit d'un gaz oxydant soufflé depuis la lance de soufflage supérieure (3), une hauteur de lance de la lance de soufflage supérieure (3), et un débit du gaz oxydant ou du gaz inerte soufflé à travers une tuyère de soufflage inférieure (4) à un moment où le taux de changement calculé en moyenne mobile d'intensité d'émission satisfait à une valeur seuil prédéfinie ou moins dans une seconde moitié du raffinage de décarburation :

$$\text{Taux de changement en moyenne mobile d'intensité d'émission} = ((I_n^S - I_{n-m}^S)/[(I_n^S + I_{n-m}^S)/2] \cdots (2)$$

où $I_n^S$ est une moyenne mobile (a.u.) d'intensité d'émission à une longueur d'onde spécifique sur la base d'un moment $T_n$ où S est un nombre de termes ajoutés ; et $I_{n-m}^S$ est une moyenne mobile (a.u.) d'intensité d'émission à une longueur d'onde spécifique sur la base d'un moment $T_{n-m}$ ($\Delta t$ x m) seconde(s) avant le moment $T_n$ où S est un nombre de termes ajoutés, m est un nombre naturel, S est un nombre de termes ajoutés dans la moyenne mobile (un entier de 0 ou plus), et $\Delta t$ est un intervalle de moment de mesure (s).

**11.** Procédé de fonctionnement d'un convertisseur (2) selon la revendication 9 ou 10, dans lequel l'ajustement au moment où la valeur seuil prédéfinie ou moins est satisfaite est de réduire la hauteur de lance de la lance de soufflage supérieure (3) ou d'augmenter le débit du gaz oxydant ou du gaz inerte soufflé à travers la tuyère de soufflage inférieure (4), tandis que le débit du gaz oxydant soufflé depuis la lance de soufflage supérieure (3) est réduit.

**12.** Procédé de fonctionnement d'un convertisseur (2), comprenant :

une étape de traitement de désiliciation consistant à fournir du métal chaud (5) contenant 0,02 % ou plus en masse de silicium dans un convertisseur (2) avec un gaz oxydant depuis une lance de soufflage supérieure (3) pour soumettre le métal chaud (5) à une désiliciation ;

une étape de décrassage consistant à évacuer au moins une partie de scories (23) formées dans l'étape de traitement de désiliciation du convertisseur (2) ;

après l'étape de décrassage, une étape de traitement de déphosphoration consistant à ajouter un flux à base de CaO au convertisseur (2) et à fournir un gaz oxydant depuis la lance de soufflage supérieure (3) dans le convertisseur (2) pour soumettre le métal chaud (5) restant dans le convertisseur (2) à une déphosphoration ; et

après l'étape de traitement de déphosphoration, une étape d'extraction consistant à évacuer le métal chaud déphosphoré (5) du convertisseur (2) vers un récipient contenant du métal chaud,

dans lequel, dans l'étape de traitement de désiliciation, un spectre d'émission d'une flamme de combustion de gueulard (12) provenant d'un gueulard (14) du convertisseur (2) ou un spectre d'émission d'une flamme de combustion d'orifice pour robinet (20) observé à travers un orifice pour robinet (19) du convertisseur (2) est mesuré,

un taux de changement en moyenne mobile d'intensité d'émission défini par la formule (2) décrite ci-dessous est calculé en tant qu'un changement temporel d'intensité d'émission dans une plage de longueurs d'onde de 580 à 620 nm du spectre d'émission mesuré, et

l'étape de décrassage est effectuée lorsque le taux de changement calculé en moyenne mobile d'intensité d'émission est supérieur à une valeur seuil prédéfinie :

$$\text{Taux de changement en moyenne mobile d'intensité d'émission} = ((I_n^S - I_{n-m}^S)/[(I_n^S + I_{n-m}^S)/2] \cdots (2)$$

où $I_n^S$ est une moyenne mobile (a.u.) d'intensité d'émission à une longueur d'onde spécifique sur la base d'un moment $T_n$ où S est un nombre de termes ajoutés ; et $I_{n-m}^S$ est une moyenne mobile (a.u.) d'intensité d'émission à une longueur d'onde spécifique sur la base d'un moment $T_{n-m}$ ($\Delta t$ x m) seconde(s) avant le moment $T_n$ où S est un nombre de termes ajoutés, m est un nombre naturel, S est un nombre de termes ajoutés dans la moyenne mobile (un entier de 0 ou plus), et $\Delta t$ est un intervalle de moment de mesure (s).

**13.** Procédé de fonctionnement d'un convertisseur (2) dans lequel de l'acier en fusion est produit à partir de métal chaud (5) par raffinage par oxydation du métal chaud (5) dans un convertisseur (2), comprenant :

une étape de traitement de désiliciation et une étape de traitement de déphosphoration, qui sont effectuées en continu, consistant à fournir du métal chaud (5) contenant 0,02 % ou plus en masse de silicium dans un convertisseur (2) avec un gaz oxydant depuis une lance de soufflage supérieure (3) et à ajouter un flux à base de CaO au convertisseur (2) pour soumettre le métal chaud (5) à une désiliciation ;

ensuite, une étape de décrassage consistant à évacuer au moins une partie de scories (23) formées dans l'étape de traitement de désiliciation et dans l'étape de traitement de déphosphoration ; et

après l'étape de décrassage, une étape de raffinage de décarburation consistant à ajouter un flux à base de CaO au convertisseur (2) et à fournir un gaz oxydant depuis la lance de soufflage supérieure (3) dans le convertisseur (2) pour soumettre le métal chaud (5) restant dans le convertisseur (2) à une décarburation,

dans lequel, dans l'étape de traitement de désiliciation et l'étape de traitement de déphosphoration, un spectre d'émission d'une flamme de combustion de gueulard (12) provenant d'un gueulard (14) du convertisseur (2) ou un spectre d'émission d'une flamme de combustion d'orifice pour robinet (20) observé à travers un orifice pour robinet (19) du convertisseur (2) est mesuré,

un taux de changement en moyenne mobile d'intensité d'émission défini par la formule (2) décrite ci-dessous est calculé en tant qu'un changement temporel d'intensité d'émission dans une plage de longueurs d'onde de 580 à 620 nm du spectre d'émission mesuré, et

l'étape de décrassage consistant à évacuer les scories (23) formées dans l'étape de traitement de désiliciation ou l'étape de traitement de désiliciation et l'étape de traitement de déphosphoration est effectuée à un moment où le taux de changement calculé en moyenne mobile d'intensité d'émission est supérieur à une valeur seuil prédéfinie, à un moment où une période de temps prédéterminée s'écoule sur la base d'un moment où le taux de changement calculé en moyenne mobile d'intensité d'émission est supérieur à une valeur seuil prédéfinie, ou à un moment où une quantité d'oxygène prédéterminée est fournie :

$$\text{Taux de changement en moyenne mobile d'intensité d'émission} = ((I_n^S - I_{n-m}^S)/[(I_n^S + I_{n-m}^S)/2]\cdots(2)$$

où $I_n^S$ est une moyenne mobile (a.u.) d'intensité d'émission à une longueur d'onde spécifique sur la base d'un moment $T_n$ où S est un nombre de termes ajoutés ; et $I_{n-m}^S$ est une moyenne mobile (a.u.) d'intensité d'émission à une longueur d'onde spécifique sur la base d'un moment $T_{n-m}$ ($\Delta t \times m$) seconde(s) avant le moment $T_n$ où S est un nombre de termes ajoutés, m est un nombre naturel, S est un nombre de termes ajoutés dans la moyenne mobile (un entier de 0 ou plus), et $\Delta t$ est un intervalle de moment de mesure (s).

**14.** Procédé de fonctionnement de deux convertisseurs (2) dans lesquels de l'acier en fusion est produit à partir de métal chaud (5), les deux convertisseurs (2) incluant un premier convertisseur et un second convertisseur, le premier convertisseur étant utilisé comme un convertisseur de prétraitement pour du métal chaud (5), le second convertisseur étant utilisé comme un convertisseur de décarburation pour du métal chaud (5) qui a été soumis à un prétraitement dans le convertisseur de prétraitement, le procédé comprenant, dans le prétraitement :

une étape de traitement de désiliciation consistant à fournir du métal chaud (5) contenant 0,02 % ou plus en masse de silicium dans le convertisseur de prétraitement avec un gaz oxydant depuis une lance de soufflage supérieure (3) pour soumettre le métal chaud (5) à une désiliciation, une étape de décrassage consistant à évacuer au moins une partie de scories (23) formées dans l'étape de traitement de désiliciation du convertisseur de prétraitement, et après l'étape de décrassage, une étape de traitement de déphosphoration consistant à ajouter un flux à base de CaO au convertisseur de prétraitement et à fournir un gaz oxydant depuis la lance de soufflage supérieure (3) dans le convertisseur de prétraitement pour soumettre le métal chaud (5) restant dans le convertisseur de prétraitement à une déphosphoration, l'étape de traitement de désiliciation, l'étape de décrassage et l'étape de traitement de déphosphoration étant incluses dans le prétraitement,

dans lequel, dans l'étape de traitement de désiliciation, le spectre d'émission d'une flamme de combustion de gueulard (12) provenant d'un gueulard (14) du convertisseur de prétraitement ou le spectre d'émission d'une flamme de combustion d'orifice pour robinet (20) observé à travers un orifice pour robinet (19) du convertisseur de prétraitement est mesuré,

un taux de changement en moyenne mobile d'intensité d'émission défini par la formule (2) décrite ci-dessous est calculé en tant qu'un changement temporel d'intensité d'émission dans une plage de longueurs d'onde de 580 à 620 nm du spectre d'émission mesuré,

**EP 3 620 542 B1**

l'étape de décrassage est effectuée lorsque le taux de changement calculé en moyenne mobile d'intensité d'émission est supérieur à une valeur seuil prédéfinie,

dans lequel, dans le raffinage de décarburation dans le convertisseur de décarburation, le spectre d'émission de la flamme de combustion de gueulard (12) provenant du gueulard (14) du convertisseur de carburation ou le spectre d'émission de la flamme de combustion d'orifice pour robinet (20) observé à travers l'orifice pour robinet (19) du convertisseur de décarburation est mesuré,

un taux de changement en moyenne mobile d'intensité d'émission défini par la formule (2) décrite ci-dessous est calculé en tant qu'un changement temporel d'intensité d'émission dans une plage de longueurs d'onde de 580 à 620 nm du spectre d'émission mesuré, et

un ou deux ou plus parmi un débit du gaz oxydant soufflé depuis la lance de soufflage supérieure (3), une hauteur de lance de la lance de soufflage supérieure (3), et un débit du gaz oxydant ou du gaz inerte soufflé à travers une tuyère de soufflage inférieure (4) sont ajustés à un moment où le taux de changement calculé en moyenne mobile d'intensité d'émission satisfait à une valeur seuil prédéfinie ou moins dans une seconde moitié du raffinage de décarburation :

$$\text{Taux de changement en moyenne mobile d'intensité d'émission} = ((I_n^S - I_{n-m}^S)/[(I_n^S + I_{n-m}^S)/2]\cdots(2)$$

où $I_n^S$ est une moyenne mobile (a.u.) d'intensité d'émission à une longueur d'onde spécifique sur la base d'un moment $T_n$ où S est un nombre de termes ajoutés ; et $I_{n-m}^S$ est une moyenne mobile (a.u.) d'intensité d'émission à une longueur d'onde spécifique sur la base d'un moment $T_{n-m}$ ($\Delta t \times m$) seconde(s) avant le moment $T_n$ où S est un nombre de termes ajoutés, m est un nombre naturel, S est un nombre de termes ajoutés dans la moyenne mobile (un entier de 0 ou plus), et $\Delta t$ est un intervalle de moment de mesure (s).

# FIG. 1

# FIG. 2

# FIG. 3

# FIG. 4

# FIG. 5

# FIG. 6

## FIG. 7

## FIG. 8

**EP 3 620 542 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60165313 A
- JP 2002285224 A
- JP 2014028992 A
- US 4651976 A
- US 2016153062 A1
- US 6562285 B1
- CN 102906281 A